(19) Europäisches Patentamt
European Patent Office
Office européen des brevets

(11) EP 3 757 171 B1

# (12) EUROPEAN PATENT SPECIFICATION

(45) Date of publication and mention of the grant of the patent:
**17.09.2025 Bulletin 2025/38**

(21) Application number: **19754987.6**

(22) Date of filing: **19.02.2019**

(51) International Patent Classification (IPC):
***C09B 23/06*** *(2006.01)* ***C09B 67/46*** *(2006.01)*
***C09D 11/328*** *(2014.01)* ***C09D 11/50*** *(2014.01)*
***B42D 25/382*** *(2014.01)* *B41M 3/14* *(2006.01)*

(52) Cooperative Patent Classification (CPC):
**C09B 23/06; B42D 25/382; C09B 67/0084; C09D 11/328; C09D 11/50;** B41M 3/14

(86) International application number:
**PCT/JP2019/006052**

(87) International publication number:
**WO 2019/160156 (22.08.2019 Gazette 2019/34)**

## (54) DISPERSION, INKJET RECORDING METHOD, RECORDED ARTICLE, AND COMPOUND

DISPERSION, TINTENSTRAHLAUFZEICHNUNGSVERFAHREN, AUFGEZEICHNETER ARTIKEL UND VERBINDUNG

DISPERSION, PROCÉDÉ D’ENREGISTREMENT À JET D’ENCRE, ARTICLE ENREGISTRÉ ET COMPOSÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.02.2018 JP 2018027438**

(43) Date of publication of application:
**30.12.2020 Bulletin 2020/53**

(73) Proprietor: **FUJIFILM Corporation**
**Tokyo 106-8620 (JP)**

(72) Inventors:
- **HARA, Akihiro**
  **Ashigarakami-gun, Kanagawa 258-8577 (JP)**
- **SASAKI, Daisuke**
  **Ashigarakami-gun, Kanagawa 258-8577 (JP)**
- **JIMBO, Yoshihiro**
  **Ashigarakami-gun, Kanagawa 258-8577 (JP)**

(74) Representative: **Klunker IP Patentanwälte PartG mbB**
**Destouchesstraße 68**
**80796 München (DE)**

(56) References cited:
**EP-A1- 3 502 198**
**EP-A1- 3 757 179**
**WO-A1-2018/034347**
**WO-A1-2018/034347**
**JP-A- 2001 348 520**
**JP-A- 2002 294 107**
**JP-A- 2007 271 745**
**JP-A- 2008 144 004**
**US-A1- 2002 046 680**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 757 171 B1

## Description

BACKGROUND OF THE INVENTION

1. Field of the Invention

The present invention relates to a dispersion, an ink jet recording method, and a recorded material.

2. Description of the Related Art

In general, as a unit that optically reads information written on a certificate such as a stock certificate, a bond certificate, a check, a gift certificate, a lottery, or a commutation ticket, a code pattern that is readable using a bar code or an optical character reader (OCR) is provided in many cases. In addition, as a code pattern using optical reading, a bar code is widely used mainly in a physical distribution management system or the like. Further, recently, as a code pattern capable of a larger volume of data storage and high-density printing, for example, a two-dimensional code such as Data Code, Veri Code, Code 1, Maxi Code, or a two-dimensional bar code (QR code (registered trade name)) has been widely used. In addition, as the code pattern, a method using a dot pattern is also known.

As the above-described code pattern, a visible code pattern is general, which may impose various restrictions on a printed material, the restrictions including a restriction in designing a printed material and a restriction in securing a printing area. Therefore, demands for removing the restrictions caused by the visible code pattern have increased. Further, in order to prevent forgery of a certificate, it has been attempted to make a code pattern transparent by printing an ink not having an absorption band in a visible range. Making a code pattern transparent has advantageous effects in that a printed material can be freely designed, a printing area for printing a code pattern is not necessarily secured, and it is difficult to determine and identify a code pattern by visual inspection.

As an attempt to make a code pattern transparent (invisible), a technique of forming an infrared absorbing pattern using an ink that mainly absorbs infrared light outside a visible range is known (refer to JP2008-144004A).

As a colorant used for ink that is used for forming an infrared absorbing pattern, an oxonol compound having an absorption in a near infrared range has attracted attention, and an ink composition (refer to JP2013-159765A) that is suitable for ink jet recording, an optical information recording medium (refer to JP2002-240433A) including an oxonol compound, or the like has been disclosed as a dispersion including an oxonol compound and an application aspect thereof.

US 2002/046680 A1 teaches a recording liquid for ink jet containing a solid fine particle dispersion obtained by dispersing in a medium a compound represented by the following general formula (I) or (II), and an ink jet recording method of recording using the recording liquid for ink jet containing the solid fine particle dispersion obtained by dispersing in a medium a compound represented by the following general formula (I) or (II):

General formula (I)

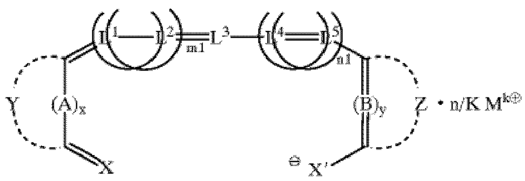

General formula (II)

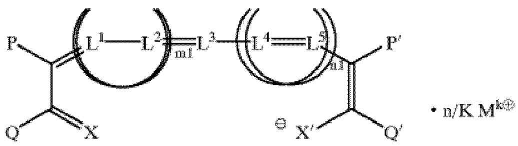

wherein in formula (I), each of A and B represents an atomic group required to complete a conjugated double bond chain, and each of Y and Z represents an atomic group required to form a carbocyclic ring or heterocyclic ring; each of $L^1$, $L^2$, $L^3$, $L^4$ and $L^5$ represents a methine group which may be substituted, and each of X and X' represents an oxygen atom, a sulfur atom or $-C(CN)_2$; each of m1 and n1 represents 0, 1 or 2, and each of x and y represents 0 or 1; $M^{k+}$ represents a k-valent cation, k represents an integer of 1 or more, and n represents a figure required to equalize the positive charge number with the negative charge number in the general formula (I); wherein in formula (II) each of $L^1$, $L^2$, $L^3$, $L^4$ and $L^5$ represents a

methine group which may be substituted, each of P, P', Q, and Q' represents a substituted group, and each of X and X' represents an oxygen atom, a sulfur atom or $-C(CN)_2$. Each of ml and n1 represents 0, 1 or 2; $M^{k+}$ represents a k-valent cation, k represents an integer of 1 or more, and n represents a figure required to equalize the positive charge number with the negative charge number in the general formula (II).

WO 2018/034347 A1 provides an ink jet recording ink including: a colorant represented by the following Formula 1, in which an absorption maximum of a dry material of the ink jet recording ink is 700 nm to 1000 nm:

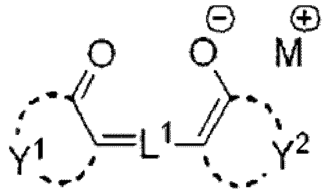

wherein in Formula 1, $Y^1$ and $Y^2$ each independently represent a non-metal atomic group which forms an aliphatic ring or a heterocycle, $M^+$ represents a proton or a monovalent alkali metal cation or organic cation, $L^1$ represents a methine chain including 5 or 7 methine groups, and a methine group at a center of the methine chain has a substituent represented by the following Formula A, and

$*-S^A-T^A$ Formula A

wherein in Formula A, $S^A$ represents a single bond, an alkylene group, an alkenylene group, an alkynylene group, -O-, -S-, $-NR^{L1}-$, -C(=O)-, -C(=O)O-, $-C(=O)NR^{L1}-$, $-S(=O)_2-$, $-OR^{L2}-$, or a group including a combination thereof, $R^{L1}$ represents a hydrogen atom, a halogen atom, an alkyl group, an aryl group, or a monovalent heterocyclic group, $R^{L2}$ represents an alkylene group, an arylene group, or a divalent heterocyclic group, $T^A$ represents a halogen atom, an alkyl group, a cycloalkyl group, an aryl group, a monovalent heterocyclic group, a cyano group, a hydroxy group, a formyl group, a carboxy group, an amino group, a thiol group, a sulfo group, a phosphoryl group, a boryl group, a vinyl group, an ethynyl group, a trialkylsilyl group, or a trialkoxysilyl group, in a case where $S^A$ represents a single bond or an alkylene group and $T^A$ represents an alkyl group, the total number of carbon atoms included in $S^A$ and $T^A$ is 3 or more, and * represents a binding site to the methine group at the center of the methine chain.

## SUMMARY OF THE INVENTION

According to an investigation by the present inventors, in the case of the ink jet recording ink described in JP2008-144004A, dispersion cannot be easily performed during manufacturing in some cases. Therefore, it was found that, in a state where a dispersant such as a surfactant is used, a relatively long period of time (for example, 3 hours) may be required for dispersion.

In addition, in an image having near infrared absorbing properties that is formed using the ink jet recording ink described in JP2013-159765A and the ink jet recording ink including an oxonol compound described in JP2002-240433A, invisibility is in sufficient, and there is a room for improvement of dispersibility in a case where an aqueous medium is used.

An object of one embodiment of the present invention is to provide a dispersion that has excellent dispersibility of a colorant in a medium and that has infrared absorbing properties or with which an infrared absorbing image as a dry material of the dispersion can be formed.

An object of another embodiment of the present invention is to provide an ink jet recording method using a dispersion having excellent dispersibility of a colorant and a recorded material including a near infrared absorbing image having excellent invisibility that is a dry material of the dispersion having excellent dispersibility of a colorant.

An object of still another embodiment of the present invention is to provide a novel compound having near infrared absorption capacity.

The present invention is defined in the appended claims.

According to one embodiment of the present invention, it is possible to provide a dispersion that has excellent dispersibility of a colorant in a medium and that has infrared absorbing properties or with which an infrared absorbing image as a dry material of the dispersion can be formed.

According to another embodiment of the present invention, it is possible to provide an ink jet recording method using a dispersion having excellent dispersibility of a colorant and a recorded material including a near infrared absorbing image having excellent invisibility that is a dry material of the dispersion having excellent dispersibility of a colorant.

BRIEF DESCRIPTION OF THE DRAWINGS

Hereinafter, the details of the present invention will be described.

The description of components described below will be made based on a representative embodiment of the present invention. However, the present invention is not limited to the following embodiment.

In the present disclosure, numerical ranges described using "to" refer to numerical ranges including numerical values before and after "to" as lower limit values and upper limit values.

In addition, in the present disclosure, in a case where a plurality of materials corresponding to each of components in a composition are present, the amount of the component in the composition represents the total amount of the plurality of materials present in the composition unless specified otherwise.

Regarding numerical ranges that are described stepwise in the present disclosure, an upper limit value or a lower limit value described in a numerical value may be replaced with an upper limit value or a lower limit value of another stepwise numerical range. **In** addition, regarding a numerical range described in the present disclosure, an upper limit value or a lower limit value described in a numerical value may be replaced with a value described in Examples.

**In** addition, in the present disclosure, a combination of preferable aspects is a more preferable aspect.

**In** the present disclosure, unless specified otherwise, a group (atomic group) is used as a term including not only a group having no substituent but also a group having a substituent. For example, "alkyl group" is used as a term including not only an alkyl group having no substituent (unsubstituted alkyl group) but also an alkyl group having a substituent (substituted alkyl group). The same shall be applied to other substituents.

**In** addition, in the present disclosure, a chemical structural formula may also be shown as a simple structural formula in which a hydrogen atom is not shown.

**In** the present disclosure, "(meth)acrylate" represents at least one of acrylate or methacrylate, "(meth)acryl" represents at least one of acryl or methacryl, and "(meth)acryloyl" represents at least one of acryloyl or methacryloyl.

**In** the present disclosure, a methyl group will be abbreviated as "Me", an ethyl group will be abbreviated as "Et", and a phenyl group will be abbreviated as "Ph".

**In** the present disclosure, the term "step" represents not only an individual step but also a step which is not clearly distinguishable from another step as long as an effect expected from the step can be achieved.

**In** addition, in the present disclosure, a combination of two or more preferable aspects is a more preferable aspect.

**In** the present disclosure, the term "dispersion" refers to a dispersion composition in which a colorant is included in a medium in a state where it is dispersed in the medium. A part of a colorant may be present in a state where it is dissolved in a medium. The term "dispersion" described in the present disclosure is also used in a case where both a colorant in a dispersed state and a colorant in a dissolved state are included in a medium.

<Dispersion>

A dispersion according to an embodiment of the present invention (hereinafter, also simply referred to as "dispersion") includes: a compound represented by the following Formula 1 (hereinafter, also referred to as "specific colorant"); and a medium. Specifically, in the dispersion according to the embodiment of the present invention, the specific colorant is included in the medium in a state where it is dispersed in the medium.

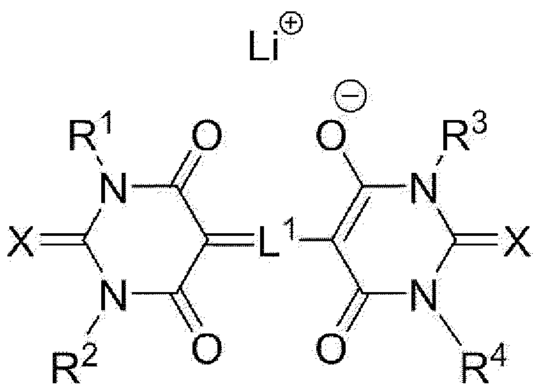

Formula 1

In Formula 1, $L^1$ represents a methine chain consisting of 5 or 7 methine groups, a methine group at a center of the methine chain has a substituent represented by the Formula A-1, which is a specific group of Formula A described herein below, wherein Formula A does not form part of the present invention. $R^1$, $R^2$, $R^3$, and $R^4$ each independently represent a hydrogen atom, an alkyl group, an aryl group, or a monovalent heterocyclic group, and X's each independently represent

an oxygen atom, a sulfur atom, or a selenium atom.

$$*\text{-}S^A\text{-}T^A \qquad \text{Formula A}$$

In Formula A, $S^A$ represents a single bond, an alkylene group, an alkenylene group, an alkynylene group, -O-, -S-, $-NR^{L1}-$, -C(=O)-, -C(=O)O-, $-C(=O)NR^{L1}-$, $-S(=O)_2-$, $-OR^{L2}-$, or a group including a combination of at least two thereof, $R^{L1}$ represents a hydrogen atom, a halogen atom, an alkyl group, an aryl group, or a monovalent heterocyclic group, $R^{L2}$ represents an alkylene group, an arylene group, or a divalent heterocyclic group, $T^A$ represents a hydrogen atom, a halogen atom, an alkyl group, an aryl group, a monovalent heterocyclic group, a cyano group, a hydroxy group, a formyl group, a carboxy group, an amino group, a thiol group, a sulfo group, a phosphoryl group, a boryl group, a vinyl group, an ethynyl group, a trialkylsilyl group, or a trialkoxysilyl group, and * represents a binding site to the methine group at the center of the methine chain.

The dispersion according to the embodiment of the present invention has excellent dispersibility in the medium of the specific colorant. The effects are not clear but are presumed to be as follows.

The specific colorant includes a lithium ion having a small atomic radius as a counter cation. Therefore, in the structure of the specific colorant, an electron is easily localized in the oxygen site of barbituric acid. The electron localized in the oxygen site interferes with formation of a hydrogen bond between molecules of a plurality of specific colorants present adjacent to each other. As a result, aggregation caused by a hydrogen bond between the specific colorants is not likely to occur, and a hydrogen bond is not likely to be formed in a single colorant. Therefore, affinity between a specific colorant and a medium present in the vicinity of the specific colorant is improved. As a result, it is presumed that the wetting of the specific colorant on the medium is likely to progress, and the dispersibility of the specific colorant in the medium is improved.

The dispersion according to the embodiment of the present invention has absorption properties in a near infrared range. In addition, an image including the above-described specific colorant that is a dry material of the dispersion according to the embodiment of the present invention has absorption in a near infrared range and has low absorption in a visible range. Therefore, the image has excellent invisibility.

In the present disclosure, "near infrared light" refers to light in a wavelength range of 700 nm to 1,200 nm.

The present disclosure is not limited to the above-described estimated mechanism.

Hereinafter, each of the components included in the dispersion according to the embodiment of the present disclosure will be described.

[Colorant represented by Formula 1]

The dispersion according to the embodiment of the present invention includes the compound/colorant (specific colorant) represented by Formula 1.

In Formula 1, X's each independently represent an oxygen atom (O atom), a sulfur atom (S atom), or a selenium atom (Se atom), preferably an O atom or a S atom, and more preferably an O atom.

The specific colorant includes a lithium ion ($Li^+$) as a counter cation.

$Li^+$ is a counter cation, and the entire specific colorant is electrically neutral due to the presence of $Li^+$.

In addition, as described above, due to the presence of the counter ion having a small atomic radius, for example, a lithium ion, in the structure represented by Formula 1, an electron is localized in the oxygen site of barbituric acid, which contributes to improvement of affinity to the medium.

Further as described below, $L^1$ represents a methine chain consisting of 5 or 7 methine groups, and a methine group at a center of the methine chain has a substituent represented by the Formula A-1. As a result, it is presumed that a near infrared absorbing image that is a dry material of the dispersion according to the embodiment of the present invention including the specific colorant exhibits excellent invisibility.

[$L^1$]

in Formula 1, $L^1$ represents a methine chain consisting of 5 or 7 methine groups, and a methine group at a center of the methine chain has a substituent represented by Formula A-1 described below in detail.

The methine group at the center of the methine chain has a substituent represented by Formula A-1 such that the dispersibility of the specific colorant in the medium and the aggregation stability of the specific colorant are improved.

$L^1$ represents a methine chain consisting of 5 or 7 methine groups, and preferably a methine chain including 5 methine groups.

A methine group other than the methine group at the center of the methine chain may be substituted or unsubstituted. In particular, it is preferable that a methine group other than the methine group at the center of the methine chain is unsubstituted.

The methine chain may have a crosslinked structure at any position. For example, opposite carbon atoms adjacent to the methine group may be crosslinked to form a ring structure. By introducing a ring structure, the absorption wavelength of the specific colorant, the light fastness of a near infrared absorbing image obtained using the dispersion

according to the embodiment of the present invention, and the like can be controlled. Therefore, the ring structure may be appropriately determined depending on the intended use of the dispersion.

The ring structure that may be included in the methine chain is not particularly limited. In particular, as the ring structure, an aliphatic ring is preferable, and a 5-membered or 6-membered aliphatic ring is preferable.

Specifically, $L^1$ represents preferably a group represented by the following Formula L1-1, L1-2, L2-1, or L2-2 and more preferably a group represented by the following Formula L1-1 or L1-2.

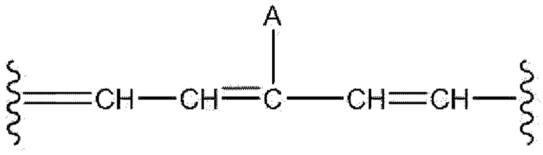
L1-1

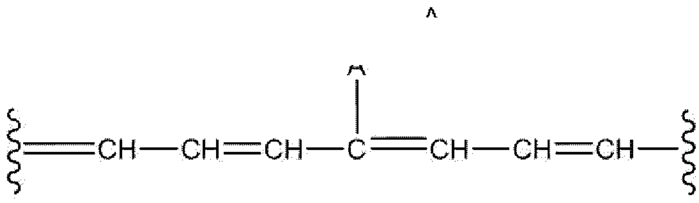
L1-2

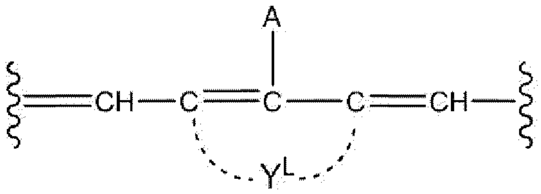
L2-1

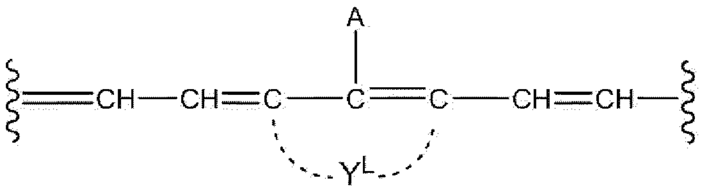
L2-2

In Formulae L1-1, L1-2, L2-1, and L2-2, A represents a substituent represented by Formula A-1, and wave line portions each independently represent a binding site to a structure other than $L^1$ in Formula 1.

$Y^L$ represents a non-metal atomic group which forms an aliphatic ring or a heterocycle and preferably a non-metal atomic group which forms an aliphatic ring. As $Y^L$, an alkylene group is preferable. Examples of the alkylene group include $-CH_2CH_2-$ and $-CH_2C(Z)_2-CH_2-$. Z will be described below.

As the aliphatic ring, a hydrocarbon ring as a 5-membered ring or a 6-membered ring is preferable.

As the group represented by Formula L2-1 or L2-2, a group represented by any one of the following Formulae L3-1 to L3-4 is preferable.

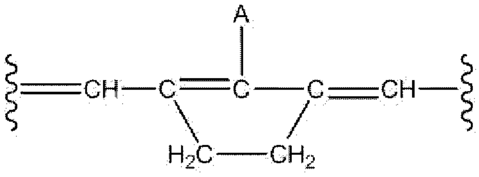
L3-1

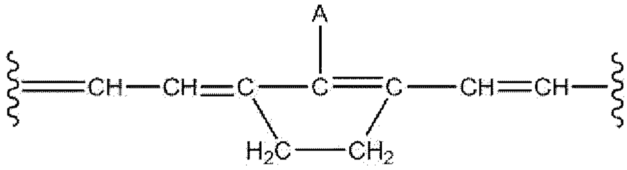
L3-2

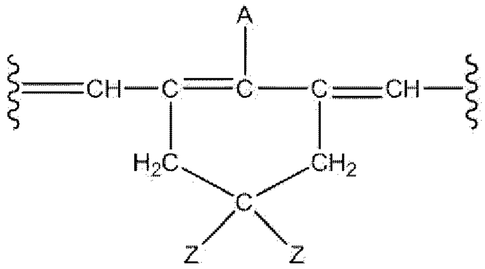

L3-3

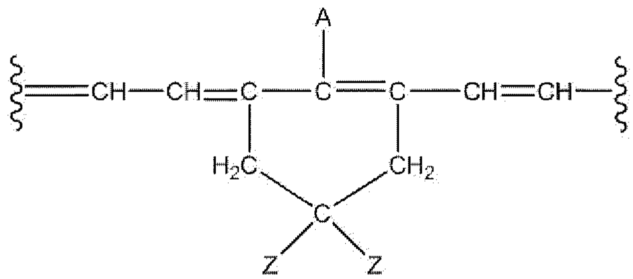

L3-4

In Formulae L3-1 to L3-4, A represents a substituent represented by Formula A-1, and wave line portions each independently represent a binding site to a structure other than $L^1$ in Formula 1.

Z represents a hydrogen atom or an alkyl group, preferably a hydrogen atom or an alkyl group having 1 to 8 carbon atoms, and more preferably a hydrogen atom or a methyl group. Two Z's may be bonded to each other to form a ring structure.

-Substituent represented by Formula A-1

In Formula A (not falling under the scope of the present invention), $S^A$ represents a single bond, an alkylene group, an alkenylene group, an alkynylene group, -O-, -S-, -$NR^{L1}$-, -C(=O)-, -C(=O)O-, -C(=O)$NR^{L1}$-, -$S(=O)_2$-, -$OR^{L2}$-, or a group including a combination of at least two thereof. Among these, from the viewpoint of improving the invisibility of the obtained near infrared absorbing image, a single bond, an alkylene group, an alkenylene group, or an alkynylene group is preferable, and a single bond is more preferable.

As the alkylene group, an alkylene group having 1 to 10 carbon atoms is preferable, an alkylene group having 1 to 4 carbon atoms is more preferable, and a methylene group or an ethylene group is still more preferable.

As the alkenylene group, an alkenylene group having 2 to 10 carbon atoms is preferable, an alkenylene group having 2 to 4 carbon atoms is more preferable, and an alkenylene group having 2 or 3 carbon atoms is still more preferable.

As the alkynylene group, an alkynylene group having 2 to 10 carbon atoms is preferable, an alkynylene group having 2 to 4 carbon atoms is more preferable, and an alkynylene group having 2 or 3 carbon atoms is still more preferable.

The alkylene group, the alkenylene group, and the alkynylene group may be linear or branched, and some or all of the carbon atoms included in each of the groups may form a cyclic structure. Unless specified otherwise, the above-described contents shall be applied to the description of the alkylene group, the alkenylene group, and the alkynylene group in the present disclosure.

**In** -C(=O)O-, the carbon atom is on the side of binding to $L^1$ and the oxygen atom may be on the side of binding to $T^A$ or vice versa.

**In** -C(=O)$NR^{L1}$-, the carbon atom is on the side of binding to $L^1$ and the nitrogen atom may be on the side of binding to $T^A$ or vice versa.

$R^{L1}$ represents a hydrogen atom, a halogen atom, an alkyl group, an aryl group, or a monovalent heterocyclic group, preferably a hydrogen atom, an alkyl group, or an aryl group, and more preferably a hydrogen atom.

As the alkyl group, an alkyl group having 1 to 10 carbon atoms is preferable, an alkyl group having 1 to 4 carbon atoms is more preferable, and an alkyl group having 1 or 2 carbon atoms is still more preferable.

The alkyl group may be linear or branched, and some or all of the carbon atoms included in the alkyl group may form a cyclic structure. Unless specified otherwise, the above-described contents shall be applied to the description of the alkyl group in the present disclosure.

As the aryl group, an aryl group having 6 to 20 carbon atoms is preferable, and a phenyl group or a naphthyl group is more preferable.

**In** the present disclosure, a monovalent heterocyclic group refers to a group obtained by removing one hydrogen atom from a heterocyclic compound, and a divalent heterocyclic group refers to a group obtained by removing two

hydrogen atoms from a heterocyclic compound.

It is preferable that a heterocycle in the monovalent heterocyclic group is a 5-membered ring or a 6-membered ring. In addition, the heterocycle may form a fused ring with an aliphatic ring, an aromatic ring, or another heterocycle.

Examples of a heteroatom in the heterocycle include a N atom, an O atom, and a S atom. Among these, a N atom is preferable.

Examples of the heterocycle include a pyridine ring, a piperidine ring, a furan ring, a furfuran ring, a thiophene ring, a pyrrole ring, a quinoline ring, a morpholine ring, an indole ring, an imidazole ring, a pyrazole ring, a carbazole ring, a phenothiazine ring, a phenoxazine ring, an indoline ring, a pyrrolidone ring, a thiazole ring, a pyrazine ring, a thiadiazine ring, a benzoquinoline ring, and a thiadiazole ring.

$R^{L2}$ represents an alkylene group, an arylene group, or a divalent heterocyclic group and preferably an alkylene group.

As the alkylene group, an alkylene group having 1 to 10 carbon atoms is preferable, an alkylene group having 1 to 4 carbon atoms is more preferable, and an alkylene group having 1 or 2 carbon atoms is still more preferable.

As the arylene group, an arylene group having 6 to 20 carbon atoms is preferable, a phenylene group or a naphthylene group is more preferable, and a phenylene group is still more preferable.

As the divalent heterocyclic group, a structure obtained by further removing another hydrogen atom from the monovalent heterocyclic group of $R^L1$ is preferable.

In Formula A, $T^A$ represents a hydrogen atom, a halogen atom, an alkyl group, an aryl group, a monovalent heterocyclic group, a cyano group, a hydroxy group, a formyl group, a carboxy group, an amino group, a thiol group, a sulfo group, a phosphoryl group, a boryl group, a vinyl group, an ethynyl group, a trialkylsilyl group, or a trialkoxysilyl group. Among these, an aryl group, a monovalent heterocyclic group, or a trialkylsilyl group is preferable. As the heterocyclic group, a heterocyclic group having an oxygen atom or a nitrogen atom is preferable. As $T^A$, a phenyl group, a morphonyl group, or a pyridyl group is more preferable.

Examples of the halogen atom include a fluorine atom (F atom), a chlorine atom (Cl atom), a bromine atom (Br atom), and an iodine atom (I atom). Among these, a Cl atom or a Br atom is preferable, and a Cl atom is more preferable.

As the alkyl group, an alkyl group having 1 to 10 carbon atoms is preferable, an alkyl group having 1 to 4 carbon atoms is more preferable, and an alkyl group having 1 or 2 carbon atoms is still more preferable.

In a case where $T^A$ represents an alkyl group, $T^A$ may form a ring structure with another carbon atom in the methine chain. As the ring structure, s a 5-membered ring or a 6-membered ring is preferable.

In a case where $T^A$ represents an aryl group, as the aryl group, an aryl group having 6 to 20 carbon atoms is preferable, a phenyl group or a naphthyl group is more preferable, and a phenyl group is still more preferable. In addition, the aryl group may further have a substituent. Examples of the substituent that can be introduced into the aryl group include an alkyl group, a halogen atom, an alkenyl group, an aryl group, a monovalent heterocyclic group, a nitro group, a cyano group, $-OR^{L3}$, $-C(=O)R^{L3}$, $-C(=O)OR^{L3}$, $-OC(=O)R^{L3}$, $-N(R^{L3})_2$, $-NHC(=O)R^{L3}$, $-C(=O)N(R^{L3})_2$, $-NHC(=O)OR^{L3}$, $-OC(=O)N(R^{L3})_2$, $-NHC(=O)N(R^{L3})_2$, $-SR^{L3}$, $-S(=O)_2R^{L3}$, $-S(=O)_2OR^{L3}$, $-NHS(=O)_2R^{L3}$, and-$S(=O)_2N(R^{L3})_2$. An alkyl group, an aryl group, a monovalent heterocyclic group, a nitro group, a cyano group, $-OR^{L3}$, $-N(R^{L3})_2$, $-NHC(=O)R^{L3}$, $-C(=O)N(R^{L3})_2$, $-NHC(=O)OR^{L3}$, or $-NHC(=O)N(R^{L3})_2$ is preferable.

It is preferable that a heterocycle in the monovalent heterocyclic group is a 5-membered ring or a 6-membered ring. In addition, the heterocycle may form a fused ring with an aliphatic ring, an aromatic ring, or another heterocycle.

Examples of a heteroatom in the heterocycle include a N atom, an O atom, and a S atom. Among these, a N atom is preferable.

Examples of the heterocycle include a pyridine ring, a triazine ring, a piperidine ring, a furan ring, a furfuran ring, a Meldrum's acid ring, a barbituric acid ring, a succinimide ring, a thiophene ring, a pyrrole ring, a quinoline ring, a morpholine ring, a thiomorpholine ring, an indole ring, an imidazole ring, a pyrazole ring, a carbazole ring, a phenothiazine ring, a phenoxazine ring, an indoline ring, a pyrrolidone ring, a thiazole ring, a pyrazine ring, a thiadiazine ring, a benzoquinoline ring, and a thiadiazole ring.

The heterocycle may form a salt structure. For example, the pyridine ring may form a pyridinium salt, and may be present as a pyridinium ion.

The aryl group or the monovalent heterocyclic group may have a substituent. Examples of the substituent include an alkyl group, an alkoxy group, a halogen atom, an alkenyl group, an alkynyl group, an aryl group, a monovalent heterocyclic group, a nitro group, a cyano group, $-OR^T$, $-C(=O)R^T$, $-C(=O)OR^T$, $-OC(=O)R^T$, $-N(R^T)_2$, $-NHC(=O)R^T$, $-C(=O)N(R^T)_2$, $-NHC(=O)OR^T$, $-OC(=O)N(R^T)_2$, $-NHC(=O)N(R^T)_2$, $-SR^T$, $-S(=O)_2R^T$, $-S(=O)_2OR^T$, $-NHS(=O)_2R^T$, and $-=S(=O)_2N(R^T)_2$.

$R^T$'s each independently represent a hydrogen atom, an alkyl group, an aryl group, or a monovalent heterocyclic group and preferably a hydrogen atom, an alkyl group, or an aryl group.

As the alkyl group represented by $R^T$, an alkyl group having 1 to 12 carbon atoms is preferable, an alkyl group having 1 to 6 carbon atoms is more preferable, and a methyl group or an ethyl group is still more preferable.

As the alkyl group of the alkoxy group represented by $R^T$, an alkyl group having 1 to 12 carbon atoms is preferable,

an alkyl group having 1 to 6 carbon atoms is more preferable, and a methyl group or an ethyl group is still more preferable.

As the aryl group represented by $R^T$, an aryl group having 6 to 20 carbon atoms is preferable, a phenyl group or a naphthyl group is more preferable, and a phenyl group is still more preferable.

It is preferable that a heterocycle in the monovalent heterocyclic group represented by $R^T$ is a 5-membered ring or a 6-membered ring. In addition, the heterocycle may form a fused ring with an aliphatic ring, an aromatic ring, or another heterocycle.

Examples of a heteroatom in the heterocycle include a N atom, an O atom, and a S atom. Among these, a N atom is preferable.

Examples of the heterocycle include a pyridine ring, a piperidine ring, a piperazine ring, a pyrrolidine ring, a furan ring, a tetrahydrofuran ring, a tetrahydropyran ring, a thiophene ring, a pyrrole ring, a quinoline ring, a morpholine ring, an indole ring, an imidazole ring, a pyrazole ring, a carbazole ring, a phenothiazine ring, a phenoxazine ring, an indoline ring, a pyrrolidone ring, a thiazole ring, a pyrazine ring, a thiadiazine ring, a benzoquinoline ring, and a thiadiazole ring.

The monovalent heterocyclic group may further have a substituent. Examples of the substituent include the groups represented by $R^T$, and preferable aspects thereof are also the same.

The amino group refers to an amino group or a substituted amino group, and a diarylamino group or a diheteroarylamino group is preferable.

Examples of a substituent of the substituted amino group include an alkyl group, an aryl group, and a monovalent heterocyclic group. The alkyl group, the aryl group, or the monovalent heterocyclic group has the same definition and the same preferable aspect as the alkyl group, the aryl group, or the monovalent heterocyclic group represented by $T^A$.

As the trialkylsilyl group, a trialkylsilyl group in which the number of carbon atoms in the alkyl group is 1 to 10 is preferable, and a trialkylsilyl group in which the number of carbon atoms in the alkyl group is 1 to 4 is more preferable. Preferable examples of the trialkylsilyl group include a trimethylsilyl group, a dimethylbutylsilyl group, a triethylsilyl group, and a triisopropylsilyl group.

As the trialkoxysilyl group, a trialkoxysilyl group in which the number of carbon atoms in the alkoxy group is 1 to 10 is preferable, and a trialkoxysilyl group in which the number of carbon atoms in the alkoxy group is 1 to 4 is more preferable. Preferable examples of the trialkoxysilyl group include a trimethoxysilyl group and a triethoxysilyl group.

In a case where $S^A$ represents a single bond or an alkylene group and $T^A$ represents an alkyl group, the total number of carbon atoms included in $S^A$ and $T^A$ is preferably 3 or more, more preferably 4 or more, and still more preferably 5 or more from the viewpoint of the invisibility of the obtained near infrared absorbing image.

In a case where $S^A$ represents a single bond or an alkylene group, $T^A$ represents an alkyl group, and the total number of carbon atoms is 3 or more, the invisibility of the obtained near infrared absorbing image is excellent.

In addition, from the viewpoint of dispersibility, the total number of carbon atoms is preferably 20 or less and more preferably 10 or less.

In particular, from the viewpoint of dispersibility, a heterocycle in which $T^A$ at a terminal in Formula A has a nitrogen atom, an aryl group, or a halogen atom is preferable. In addition, the alkyl group, the aryl group, or the like further has a substituent such that the dispersibility and the absorption wavelength of the colorant, in particular, the absorption maximum can be easily adjusted to be in the preferable range.

Specific examples of the substituent represented by Formula A include the following substituents A-1 to A-48. However, the substituent A according to the embodiment of the present disclosure is not limited to these examples. In the following substituents A-1 to A-48, i-$C_{10}$ represents an isodecyl group, i-$C_8$ represents an isooctyl group, and * represents a binding site to $L^1$ in Formula 1.

Among the following substituents A-1 to A-48, from the viewpoint of dispersibility, A-1, A-2, A-4, A-6, A-7, A-8, A-12, A-13, A-14, A-15, A-16, A-20, A-26, A-28, A-29, A-30, A-31, A-32, A-34, A-39, A-41, A-42, A-43, A-44, A-45, A-47, or A-48 is preferable, and A-1, A-4, A-7, A-8, A-13, A-14, A-15, A-26, A-28, A-29, A-30, A-31, A-32, A-34, A-39, or A-42 is more preferable but only A-1 falls under the scope of the present invention.

In addition, from the viewpoint of increasing the absorption wavelength of the specific colorant, A-1, A-2, A-4, A-5, A-6, A-7, A-8, A-20, A-34, A-39, A-41, A-42, A-45 or A-48 is preferable, and A-1, A-2, A-4, A-8, A-39, or A-42 is more preferable but only A-1 falls under the scope of the present invention.

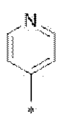
A-1

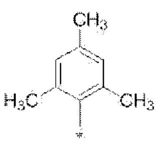
A-2

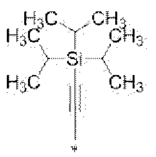
A-3

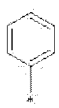
A-4

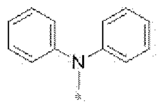
A-5

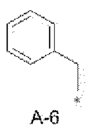
A-6

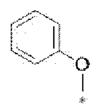
A-7

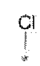
A-8

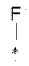
A-9
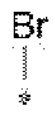
A-10
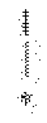
A-11
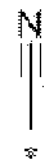
A-12
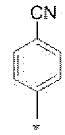
A-13
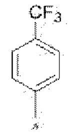
A-14
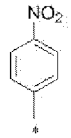
A-15
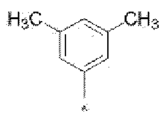
A-16

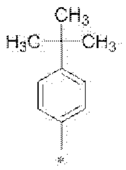
A-17
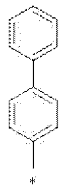
A-18
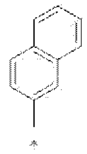
A-19
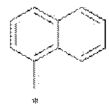
A-20
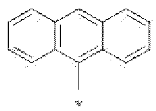
A-21
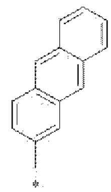
A-22
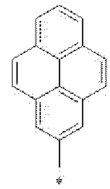
A-23

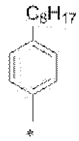
A-25
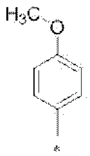
A-26
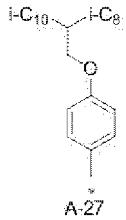
A-27
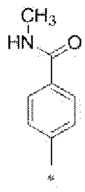
A-28
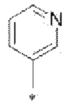
A-29
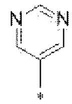
A-30
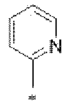
A-31
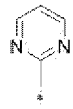
A-32

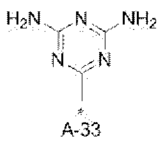
A-33
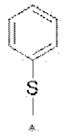
A-34
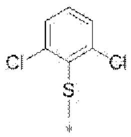
A-35
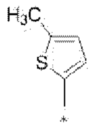
A-36
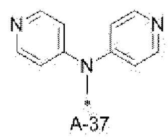
A-37
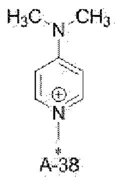
A-38
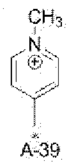
A-39

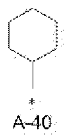
A-40
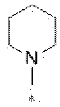
A-41
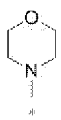
A-42
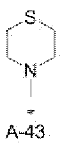
A-43
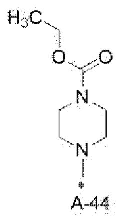
A-44
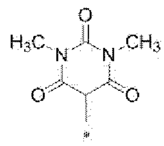
A-45
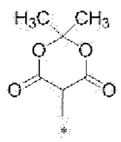
A-46

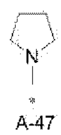
A-47
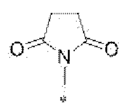
A-48

[$R^1$, $R^2$, $R^3$, and $R^4$]

In Formula 1, $R^1$, $R^2$, $R^3$, and $R^4$ each independently represent a hydrogen atom, an alkyl group, an aryl group, or a monovalent heterocyclic group. From the viewpoint of the invisibility of the obtained near infrared absorbing image, a hydrogen atom or an aryl group is preferable, and a hydrogen atom or a phenyl group is more preferable.

As the alkyl group represented by $R^1$, $R^2$, $R^3$, and $R^4$, an alkyl group having 1 to 10 carbon atoms is preferable, an alkyl group having 1 to 4 carbon atoms is more preferable, and a methyl group or an ethyl group is still more preferable.

It is preferable that the alkyl group has a substituent. Examples of the substituent include examples of a substituent in the aryl group described below excluding an alkyl group, a nitro group, and a cyano group, and preferable aspects thereof are also the same.

As the aryl group represented by $R^1$, $R^2$, $R^3$, and $R^4$, an aryl group having 6 to 20 carbon atoms is preferable, a phenyl group or a naphthyl group is more preferable, and a phenyl group is still more preferable.

The aryl group may be unsubstituted but preferably has a substituent. As the introduction position of the substituent, from the viewpoint of dispersibility and aggregation stability, the meta position or the para position is preferable, and the meta position is more preferable with respect to a binding site to another structure in Formula 1. Among these, an aspect where a polar group is present at the meta position is more preferable.

Examples of the substituent that can be introduced into the aryl group include an alkyl group, a halogen atom, an alkenyl group, an aryl group, a monovalent heterocyclic group, a nitro group, a cyano group, $-OR^{L3}$, $-C(=O)R^{L3}$, $-C(=O)OR^{L3}$, $-OC(=O)R^{L3}$, $-N(R^{L3})_2$, $-NHC(=O)R^{L3}$, $-C(=O)N(R^{L3})_2$, $-NHC(=O)OR^{L3}$, $-OC(=O)N(R^{L3})_2$, $-NHC(=O)N(R^{L3})_2$, $-SR^{L3}$, $-S(=O)_2R^{L3}$, $-S(=O)_2OR^{L3}$, $-NHS(=O)_2R^{L3}$, and-$S(=O)_2N(R^{L3})_2$.

From the viewpoint of further improving the dispersibility and aggregation stability of the specific colorant in the dispersion, a polar group is preferable as the substituent. Among the above-described examples of the substituent, a nitro group, a cyano group, $-OR^{L3}$, $-C(=O)R^{L3}$, $-C(=O)OR^{L3}$, $-OC(=O)R^{L3}$, $-N(R^{L3})_2$, $-NHC(=O)R^{L3}$, $-C(=O)N(R^{L3})_2$, $-NHC(=O)OR^{L3}$, $-OC(=O)N(R^{L3})_2$, $-NHC(=O)N(R^{L3})_2$, $-SR^{L3}$, $-S(=O)_2R^{L3}$, $-S(=O)_2OR^{L3}$, $-NHS(=O)_2R^{L3}$, or $-S(=O)_2N(R^{L3})_2$ is preferable as the polar group. Among these, $-NHC(=O)R^{L3}$, $-C(=O)N(R^{L3})_2$, $-NHC(=O)OR^{L3}$, $-OC(=O)N(R^{L3})_2$, $-NHC(=O)N(R^{L3})_2$, $-NHS(=O)_2R^{L3}$, or $-S(=O)_2N(R^{L3})_2$ is more preferable.

In addition, in a case where the dispersion is applied to an ink composition, a hydrogen-bonding group is preferable as the substituent from the viewpoints of the light fastness and moist heat resistance of a near infrared absorbing image that is a dry material of the ink composition. Among the above-described substituents, as the hydrogen-bonding group, for example, -OH, -C(=O)OH, $-NHC(=O)R^{L3}$, $-C(=O)N(R^{L3})_2$, $-NHC(=O)OR^{L3}$, $-OC(=O)N(R^{L3})_2$, $-NHC(=O)N(R^{L3})_2$, $-NHS(=O)_2R^{L3}$, or $-S(=O)_2N(R^{L3})_2$ is preferable, and $-NHC(=O)OR^{L3}$ is more preferable.

$R^{L3}$'s each independently represent a hydrogen atom, an alkyl group, an alkenyl group, an aryl group, or a monovalent heterocyclic group, and preferably a hydrogen atom, an alkyl group, or an aryl group.

As the alkyl group represented by $R^{L3}$, an alkyl group having 1 to 10 carbon atoms is preferable, an alkyl group having 1 to 4 carbon atoms is more preferable, and a methyl group or an ethyl group is still more preferable.

As the alkenyl group represented by $R^{L3}$, an alkenyl group having 2 to 10 carbon atoms is preferable, an alkenyl group having 2 to 4 carbon atoms is more preferable, and an alkenyl group having 2 or 3 carbon atoms is still more preferable.

As the aryl group represented by $R^{L3}$, an aryl group having 6 to 20 carbon atoms is preferable, a phenyl group or a naphthyl group is more preferable, and a phenyl group is still more preferable.

It is preferable that a heterocycle in the monovalent heterocyclic group represented by $R^{L3}$ is a 5-membered ring or a 6-membered ring. In addition, the heterocycle may form a fused ring with an aliphatic ring, an aromatic ring, or another heterocycle.

Examples of a heteroatom in the heterocycle include a N atom, an O atom, and a S atom. Among these, a N atom is preferable.

Examples of the heterocycle include a pyridine ring, a piperidine ring, a furan ring, a furfuran ring, a thiophene ring, a pyrrole ring, a quinoline ring, a morpholine ring, an indole ring, an imidazole ring, a pyrazole ring, a carbazole ring, a phenothiazine ring, a phenoxazine ring, an indoline ring, a pyrrolidone ring, a thiazole ring, a pyrazine ring, a thiadiazine ring, a benzoquinoline ring, and a thiadiazole ring.

The monovalent heterocyclic group may further have a substituent. Examples of the substituent include the groups represented by $R^{L3}$, and preferable aspects thereof are also the same.

It is preferable that a heterocycle in the monovalent heterocyclic group represented by $R^1$, $R^2$, $R^3$, and $R^4$ is a 5-membered ring or a 6-membered ring. In addition, the heterocycle may form a fused ring with an aliphatic ring, an aromatic ring, or another heterocycle.

Examples of a heteroatom in the heterocycle include a N atom, an O atom, and a S atom. Among these, a N atom is preferable.

Examples of the heterocycle include a pyridine ring, a piperidine ring, a furan ring, a furfuran ring, a thiophene ring, a pyrrole ring, a quinoline ring, a morpholine ring, an indole ring, an imidazole ring, a pyrazole ring, a carbazole ring, a phenothiazine ring, a phenoxazine ring, an indoline ring, a pyrrolidone ring, a thiazole ring, a pyrazine ring, a thiadiazine ring, a benzoquinoline ring, and a thiadiazole ring.

It is preferable that the monovalent heterocyclic group has a substituent. Examples of the substituent include the examples of the substituent in a case where $R^1$, $R^2$, $R^3$, and $R^4$ represent an aryl group, and preferable aspects thereof are also the same.

In addition, from the viewpoint of the dispersibility of the specific colorant, it is preferable that at least one selected from the group consisting of $R^1$, $R^2$, $R^3$, and $R^4$ represent a hydrogen atom, it is more preferable that at least two selected from the group consisting of $R^1$, $R^2$, $R^3$, and $R^4$ represent a hydrogen atom, and it is still more preferable that two selected from the group consisting of $R^1$, $R^2$, $R^3$, and $R^4$ represent a hydrogen atom.

In a case where two selected from the group consisting of $R^1$, $R^2$, $R^3$, and $R^4$ represent a hydrogen atom, it is preferable that one of $R^1$ or $R^2$ and one of $R^3$ or $R^4$ represent a hydrogen atom.

Further, from the viewpoints of dispersibility and, in a case where the dispersion is applied to an ink composition,

higher invisibility of the near infrared absorbing image that is a dry material of the ink composition, it is more preferable that one of $R^1$ or $R^2$ and one of $R^3$ or $R^4$ represent a hydrogen atom and the other one of $R^1$ or $R^2$ and the other one of $R^3$ or $R^4$ represent a phenyl group. It is still more preferable that the phenyl group has a substituent as described above.

Specific examples of $R^1$, $R^2$, $R^3$, and $R^4$ include the following substituents R-1 to R-79. However, $R^1$, $R^2$, $R^3$, and $R^4$ according to the embodiment of the present invention are not limited to these examples. In the following substituents R-1 to R-79, a wave line portion represents a binding site to another structure in Formula 1.

Among the following substituents R-1 to R-79, from the viewpoints of dispersibility and aggregation stability, R-1, R-2, R-4,R-5, R-7, R-11, R-13, R-14, R-15, R-16, R-17, R-18, R-19, R-20, R-22, R-23, R-24, R-25, R-33, R-34, R-35, R-36, R-37, R-38, R-39, R-40, R-43, R-50, R-51, R-52, R-53, R-56, R-57, R-60, R-61, R-62, R-63, R-64, R-65, R-66, R-67, R-68, R-69, R-70, R-71, R-72, R-73, R-74, R-75, R-76, R-77, R-78, or R-79 is preferable, and R-1, R-4,R-7, R-11, R-13, R-16, R-17, R-18, R-19, R-20, R-22, R-24, R-25, R-37, R-38, R-43, R-51, R-52, R-53, R-56, R-57, R-60, R-61, R-62, R-63, R-64, R-65, R-66, R-67, R-69, R-70, R-71, R-72, R-73, R-74, R-75, R-76, R-77, R-78, or R-79 is more preferable.

In addition, from the viewpoint of the light fastness of an image formed using the dispersion, R-1, R-2, R-3, R-4,R-5, R-7, R-11, R-13, R-14, R-15, R-18, R-19, R-20, R-22, R-50, R-51, R-52, R-53, R-56, R-57, R-60, R-61, R-62, R-63, R-64, R-65, R-66, R-67, R-68, R-69, R-70, R-71, R-72, R-73, R-74, R-75, R-76, R-77, R-78, or R-79 is preferable, and R-1, R-2, R-4,R-7, R-11, R-13, R-14, R-15, R-18, R-19, R-51, R-52, R-53, R-56, R-57, R-60, R-61, R-62, R-63, R-64, or R-79 is more preferable.

In structures of the following substituents, Me represents a methyl group.

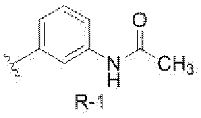
R-1

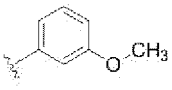
R-2

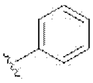
R-3

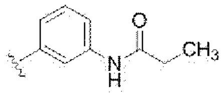
R-4

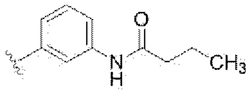
R-5

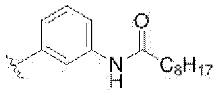
R-6

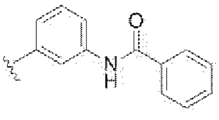
R-7

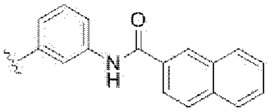
R-8

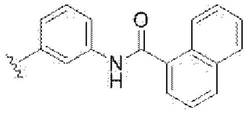
R-9

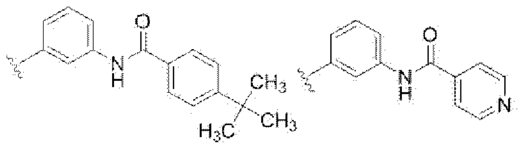
R-10

R-11

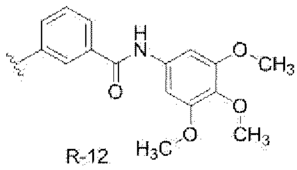
R-12

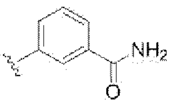
R-13

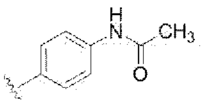
R-14

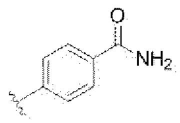
R-15

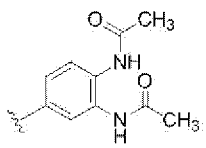
R-16

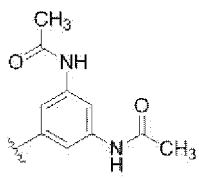
R-17

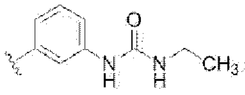
R-18

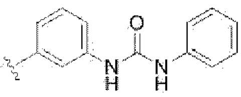
R-19

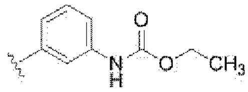
R-20

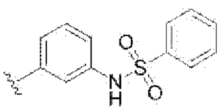
R-21

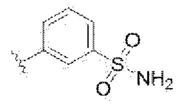
R-22
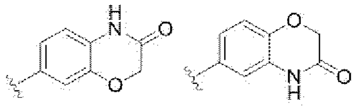
R-23
R-24
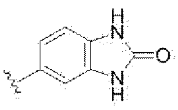
R-25
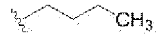
R-26

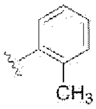
R-27
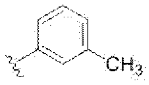
R-28
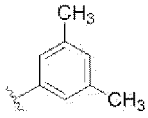
R-29
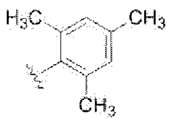
R-30
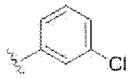
R-31
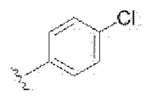
R-32

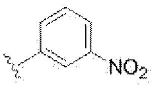
R-33
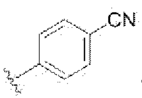
R-34
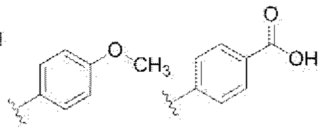
R-35
R-36
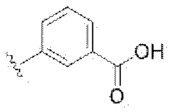
R-37
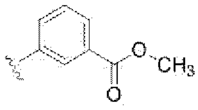
R-38

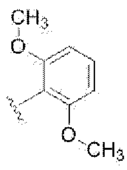
R-39
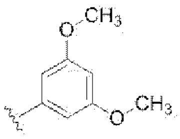
R-40
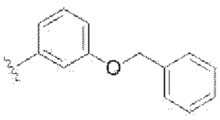
R-41
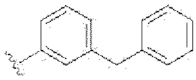
R-42
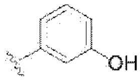
R-43

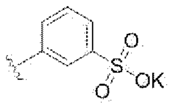
R-44
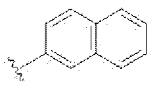
R-45
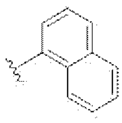
R-46
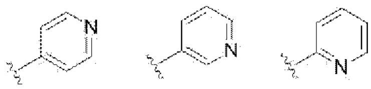
R-47
R-48
R-49

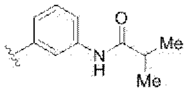
R-50
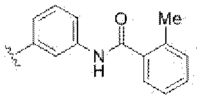
R-51
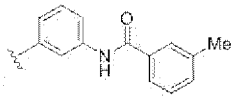
R-52
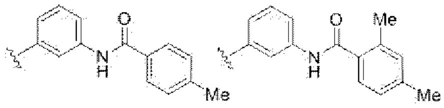
R-53
R-54

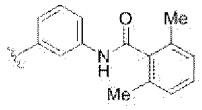
R-55
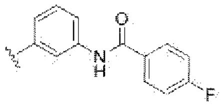
R-56
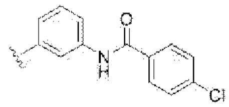
R-57
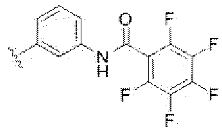
R-58

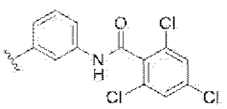
R-59
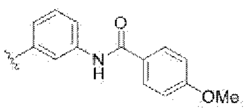
R-60
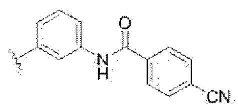
R-61
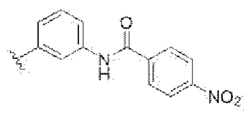
R-62

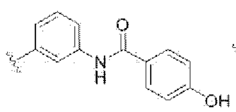
R-63
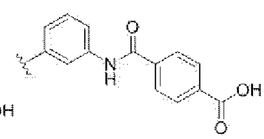
R-64
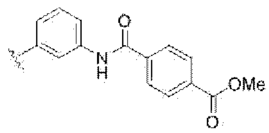
R-65
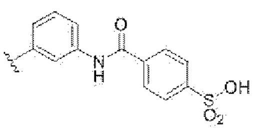
R-66

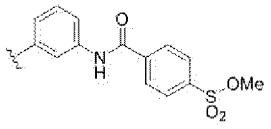

R-67

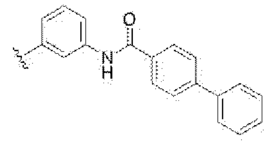

R-68

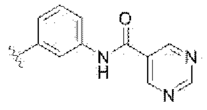

R-69

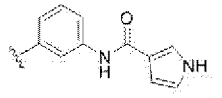

R-70

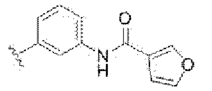

R-71

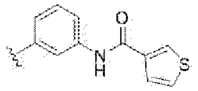

R-72

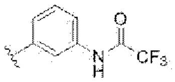

R-73

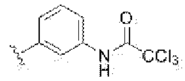

R-74

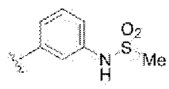

R-75

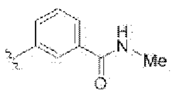

R-76

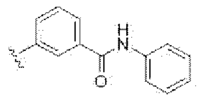

R-77

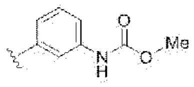

R-78

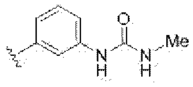

R-79

It is preferable that the colorant represented by Formula 1 is a colorant represented by the following Formula 2. The specific colorant has the structure represented by Formula 2 such that the absorption wavelength of the image that is a dry material of the dispersion including the colorant is shifted to a longer wavelength side, and a near infrared absorbing image having higher invisibility can be obtained.

<Colorant represented by Formula 2>

It is preferable that the colorant represented by Formula 1 is a colorant represented by the following Formula 2. In the ink composition according to the embodiment of the present invention, by using the colorant represented by Formula 2, a near infrared absorbing image having higher invisibility can be obtained.

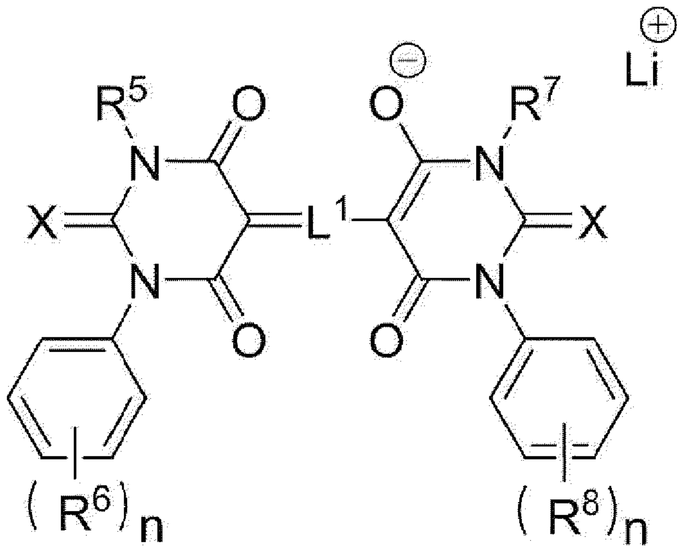

Formula 2

In Formula 2, $L^1$ represents a methine chain consisting of 5 or 7 methine groups, and a methine group at a center of the methine chain has a substituent represented by the following Formula A-1.

$R^5$ and $R^7$ each independently represent a hydrogen atom, an alkyl group, an aryl group, or a monovalent heterocyclic group, $R^6$ and $R^8$ each independently represent an alkyl group, a halogen atom, an alkenyl group, an aryl group, a monovalent heterocyclic group, a nitro group, a cyano group, $-OR^{L3}$, $-C(=O)R^{L3}$, $-C(=O)OR^{L3}$, $-OC(=O)R^{L3}$, $-N(R^{L3})_2$, $-NHC(=O)R^{L3}$, $-C(=O)N(R^{L3})_2$, $-NHC(=O)OR^{L3}$, $-OC(=O)N(R^{L3})_2$, $-NHC(=O)N(R^{L3})_2$, $-SR^{L3}$, $-S(=O)_2R^{L3}$, $-S(=O)_2OR^{L3}$, $-NHS(=O)_2R^{L3}$, or$-S(=O)_2N(R^{L3})_2$, and $R^{L3}$'s each independently represent a hydrogen atom, an alkyl group, an alkenyl group, an aryl group, or a monovalent heterocyclic group.

n's each independently represent an integer of 1 to 5, and X's each independently represent an O atom, a S atom, or a Se atom.

Formula A-1 in Formula 2 has the same definition as those of Formula A-1 in Formula 1.
In Formula 2, $L^1$ has the same definition and the same preferable aspect as those of $L^1$ in Formula 1.
In Formula 2, X has the same definition and the same preferable aspect as those of X in Formula 1.

[$R^5$, $R^6$, $R^7$, and $R^8$]

In Formula 2, $R^5$ and $R^7$ each independently represent a hydrogen atom, an alkyl group, an aryl group, or a monovalent heterocyclic group, and preferably a hydrogen atom.
The alkyl group, the aryl group, or the monovalent heterocyclic group represented by $R^5$ and $R^7$ has the same definition and the same preferable aspect as the alkyl group, the aryl group, or the monovalent heterocyclic group represented by $R^1$ and $R^3$.
In Formula 2, $R^6$ and $R^8$ each independently represent an alkyl group, a halogen atom, an alkenyl group, an aryl group, a monovalent heterocyclic group, a nitro group, a cyano group, $-OR^{L3}$, $-C(=O)R^{L3}$, $-C(=O)OR^{L3}$, $-OC(=O)R^{L3}$, $-N(R^{L3})_2$, $-NHC(=O)R^{L3}$, $-C(=O)N(R^{L3})_2$, $-NHC(=O)OR^{L3}$, $-OC(=O)N(R^{L3})_2$, $-NHC(=O)N(R^{L3})_2$, $-SR^{L3}$, $-S(=O)_2R^{L3}$, $-S(=O)_2OR^{L3}$, $-NHS(=O)_2R^{L3}$, or $-S(=O)_2N(R^{L3})_2$.
$R^{L3}$ has the same definition and the same preferable range and the same preferable aspect as $R^{L3}$ in $R^1$ to $R^4$.
From the viewpoint of improving light fastness and moist heat resistance, it is preferable that $R^6$ and $R^8$ each independently represent a hydrogen-bonding group. As the hydrogen-bonding group, for example, -OH, -C(=O)OH, $-NHC(=O)R^{L3}$, $-C(=O)N(R^{L3})_2$, $-NHC(=O)OR^{L3}$, $-OC(=O)N(R^{L3})_2$, $-NHC(=O)N(R^{L3})_2$, $-NHS(=O)_2R^{L3}$, or $-S(=O)_2N(R^{L3})_2$ is preferable, and $-NHC(=O)OR^{L4}$ is more preferable.
$R^{L3}$ has the same definition and the same preferable range and the same preferable aspect as $R^{L3}$ in $R^1$ to $R^4$.
$R^{L4}$ represents an alkyl group, preferably an alkyl group having 1 to 4 carbon atoms, and more preferably a methyl group.
In Formula 2, it is preferable that at least one selected from the group consisting of $R^5$, $R^6$, $R^7$, and $R^8$ has a hydrogen-bonding group, and it is more preferable that at least two selected from the group consisting of $R^5$, $R^6$, $R^7$, and $R^8$ have a hydrogen-bonding group.
In addition, from the viewpoint of synthesis suitability, it is preferable that $R^5$ and $R^7$ represent the same group and $R^6$ and $R^8$ represent the same group.
Further, it is more preferable that one of $R^5$ or $R^7$ represent a hydrogen atom and $R^6$ and $R^8$ represent the same hydrogen-bonding group.

[n]

n's each independently represent an integer of 1 to 5. From the viewpoint of dispersion easiness, n's each independently represent preferably an integer of 1 to 3, more preferably 1 or 2, and still more preferably 1.

(Method of Manufacturing Colorant represented by Formula 1 or Formula 2)

The colorant represented by Formula 1 or 2 used in the present invention can be synthesized with reference to, for example, methods described in JP2002-020648A and F. M. Harmer, "Heterocyclic Compounds Cyanine Dyes and Related Compounds" (John Wiley&Sons, New York, London, 1964).
Hereinafter, specific examples (compounds 1 to 115) of the colorant represented by Formula 1 or 2 will be described by clearly showing the respective substituents in Formula 1 in the following Tables 1 to 4. Reference numerals representing the substituents are the same as the reference numerals of the above-described examples of the substituents. In addition, in Tables 1 to 4, H represents a hydrogen atom.
The specific colorant represented by Formula 1 or 2 in the present disclosure is not limited to the following exemplary compounds, but merely compounds 1 to 18, 109 and 112 to 115 may be used in the claimed dispersion.

[Table 1]

| | Substituent in Formula 1 | | | | | | |
|---|---|---|---|---|---|---|---|
| | L1 | A in L1 | R1 | R2 | R3 | R4 | X |
| Compound 1 | L1-1 | A-1 | H | R-1 | H | R-1 | O |
| Compound 2 | L1-1 | A-1 | H | R-4 | H | R-4 | O |
| Compound 3 | L1-1 | A-1 | H | R-7 | H | R-7 | O |
| Compound 4 | L1-1 | A-1 | H | R-11 | H | R-11 | O |

(continued)

| | Substituent in Formula 1 | | | | | | |
|---|---|---|---|---|---|---|---|
| | L1 | A in L1 | R1 | R2 | R3 | R4 | X |
| Compound 5 | L1-1 | A-1 | H | R-13 | H | R-13 | O |
| Compound 6 | L1-1 | A-1 | H | R-18 | H | R-18 | O |
| Compound 7 | L1-1 | A-1 | H | R-19 | H | R-19 | O |
| Compound 8 | L1-1 | A-1 | H | R-51 | H | R-51 | O |
| Compound 9 | L1-1 | A-1 | H | R-52 | H | R-52 | O |
| Compound 10 | L1-1 | A-1 | H | R-53 | H | R-53 | O |
| Compound 11 | L1-1 | A-1 | H | R-56 | H | R-56 | O |
| Compound 12 | L1-1 | A-1 | H | R-57 | H | R-57 | O |
| Compound 13 | L1-1 | A-1 | H | R-60 | H | R-60 | O |
| Compound 14 | L1-1 | A-1 | H | R-61 | H | R-61 | O |
| Compound 15 | L1-1 | A-1 | H | R-62 | H | R-62 | O |
| Compound 16 | L1-1 | A-1 | H | R-63 | H | R-63 | O |
| Compound 17 | L1-1 | A-1 | H | R-64 | H | R-64 | O |
| Compound 18 | L1-1 | A-1 | H | R-79 | H | R-79 | O |
| Compound 19 | L1-1 | A-2 | H | R-1 | H | R-1 | O |
| Compound 20 | L1-1 | A-2 | H | R-4 | H | R-4 | O |
| Compound 21 | L1-1 | A-2 | H | R-7 | H | R-7 | O |
| Compound 22 | L1-1 | A-2 | H | R-11 | H | R-11 | O |
| Compound 23 | L1-1 | A-2 | H | R-13 | H | R-13 | O |
| Compound 24 | L1-1 | A-2 | H | R-18 | H | R-18 | O |
| Compound 25 | L1-1 | A-2 | H | R-19 | H | R-19 | O |
| Compound 26 | L1-1 | A-2 | H | R-51 | H | R-51 | O |
| Compound 27 | L1-1 | A-2 | H | R-52 | H | R-52 | O |
| Compound 28 | L1-1 | A-2 | H | R-53 | H | R-53 | O |
| Compound 29 | L1-1 | A-2 | H | R-56 | H | R-56 | O |
| Compound 30 | L1-1 | A-2 | H | R-57 | H | R-57 | O |
| Compound 31 | L1-1 | A-2 | H | R-60 | H | R-60 | O |

[Table 2]

| | Substituent in Formula 1 | | | | | | |
|---|---|---|---|---|---|---|---|
| | $L^1$ | A in $L^1$ | $R^1$ | $R^2$ | $R^3$ | $R^4$ | X |
| Compound 32 | L1-1 | A-2 | H | R-61 | H | R-61 | O |
| Compound 33 | L1-1 | A-2 | H | R-62 | H | R-62 | O |
| Compound 34 | L1-1 | A-2 | H | R-63 | H | R-63 | O |
| Compound 35 | L1-1 | A-2 | H | R-64 | H | R-64 | O |
| Compound 36 | L1-1 | A-2 | H | R-79 | H | R-79 | O |
| Compound 37 | L1-1 | A-4 | H | R-1 | H | R-1 | O |
| Compound 38 | L1-1 | A-4 | H | R-4 | H | R-4 | O |

(continued)

| | Substituent in Formula 1 | | | | | | |
|---|---|---|---|---|---|---|---|
| | $L^1$ | A in $L^1$ | $R^1$ | $R^2$ | $R^3$ | $R^4$ | X |
| Compound 39 | L1-1 | A-4 | H | R-7 | H | R-7 | O |
| Compound 40 | L1-1 | A-4 | H | R-11 | H | R-11 | O |
| Compound 41 | L1-1 | A-4 | H | R-13 | H | R-13 | O |
| Compound 42 | L1-1 | A-4 | H | R-18 | H | R-18 | O |
| Compound 43 | L1-1 | A-4 | H | R-19 | H | R-19 | O |
| Compound 44 | L1-1 | A-4 | H | R-51 | H | R-51 | O |
| Compound 45 | L1-1 | A-4 | H | R-52 | H | R-52 | O |
| Compound 46 | L1-1 | A-4 | H | R-53 | H | R-53 | O |
| Compound 47 | L1-1 | A-4 | H | R-56 | H | R-56 | O |
| Compound 48 | L1-1 | A-4 | H | R-57 | H | R-57 | O |
| Compound 49 | L1-1 | A-4 | H | R-60 | H | R-60 | O |
| Compound 50 | L1-1 | A-4 | H | R-61 | H | R-61 | O |
| Compound 51 | L1-1 | A-4 | H | R-62 | H | R-62 | O |
| Compound 52 | L1-1 | A-4 | H | R-63 | H | R-63 | O |
| Compound 53 | L1-1 | A-4 | H | R-64 | H | R-64 | O |
| Compound 54 | L1-1 | A-4 | H | R-79 | H | R-79 | O |
| Compound 55 | L1-1 | A-8 | H | R-1 | H | R-1 | O |
| Compound 56 | L1-1 | A-8 | H | R-4 | H | R-4 | O |
| Compound 57 | L1-1 | A-8 | H | R-7 | H | R-7 | O |
| Compound 58 | L1-1 | A-8 | H | R-11 | H | R-11 | O |
| Compound 59 | L1-1 | A-8 | H | R-13 | H | R-13 | O |
| Compound 60 | L1-1 | A-8 | H | R-18 | H | R-18 | O |
| Compound 61 | L1-1 | A-8 | H | R-19 | H | R-19 | O |
| Compound 62 | L1-1 | A-8 | H | R-51 | H | R-51 | O |
| Compound 63 | L1-1 | A-8 | H | R-52 | H | R-52 | O |
| Compound 64 | L1-1 | A-8 | H | R-53 | H | R-53 | O |
| Compound 65 | L1-1 | A-8 | H | R-56 | H | R-56 | O |

[Table 3]

| | Substituent in Formula 1 | | | | | | |
|---|---|---|---|---|---|---|---|
| | $L^1$ | A in $L^1$ | $R^1$ | $R^2$ | $R^3$ | $R^4$ | X |
| Compound 66 | L1-1 | A-8 | H | R-57 | H | R-57 | 0 |
| Compound 67 | L1-1 | A-8 | H | R-60 | H | R-60 | O |
| Compound 68 | L1-1 | A-8 | H | R-61 | H | R-61 | O |
| Compound 69 | L1-1 | A-8 | H | R-62 | H | R-62 | O |
| Compound 70 | L1-1 | A-8 | H | R-63 | H | R-63 | O |
| Compound 71 | L1-1 | A-8 | H | R-64 | H | R-64 | O |
| Compound 72 | L1-1 | A-8 | H | R-79 | H | R-79 | O |

(continued)

| | Substituent in Formula 1 | | | | | | |
|---|---|---|---|---|---|---|---|
| | $L^1$ | A in $L^1$ | $R^1$ | $R^2$ | $R^3$ | $R^4$ | X |
| Compound 73 | L1-1 | A-39 | H | R-1 | H | R-1 | O |
| Compound 74 | L1-1 | A-39 | H | R-4 | H | R-4 | O |
| Compound 75 | L1-1 | A-39 | H | R-7 | H | R-7 | O |
| Compound 76 | L1-1 | A-39 | H | R-11 | H | R-11 | O |
| Compound 77 | L1-1 | A-39 | H | R-13 | H | R-13 | O |
| Compound 78 | L1-1 | A-39 | H | R-18 | H | R-18 | O |
| Compound 79 | L1-1 | A-39 | H | R-19 | H | R-19 | O |
| Compound 80 | L1-1 | A-39 | H | R-51 | H | R-51 | O |
| Compound 81 | L1-1 | A-39 | H | R-52 | H | R-52 | O |
| Compound 82 | L1-1 | A-39 | H | R-53 | H | R-53 | O |
| Compound 83 | L1-1 | A-39 | H | R-56 | H | R-56 | O |
| Compound 84 | L1-1 | A-39 | H | R-57 | H | R-57 | O |
| Compound 85 | L1-1 | A-39 | H | R-60 | H | R-60 | O |
| Compound 86 | L1-1 | A-39 | H | R-61 | H | R-61 | O |
| Compound 87 | L1-1 | A-39 | H | R-62 | H | R-62 | O |
| Compound 88 | L1-1 | A-39 | H | R-63 | H | R-63 | O |
| Compound 89 | L1-1 | A-39 | H | R-64 | H | R-64 | O |
| Compound 90 | L1-1 | A-39 | H | R-79 | H | R-79 | O |
| Compound 91 | L1-1 | A-42 | H | R-1 | H | R-1 | O |
| Compound 92 | L1-1 | A-42 | H | R-4 | H | R-4 | O |
| Compound 93 | L1-1 | A-42 | H | R-7 | H | R-7 | O |
| Compound 94 | L1-1 | A-42 | H | R-11 | H | R-11 | O |
| Compound 95 | L1-1 | A-42 | H | R-13 | H | R-13 | O |
| Compound 96 | L1-1 | A-42 | H | R-18 | H | R-18 | O |
| Compound 97 | L1-1 | A-42 | H | R-19 | H | R-19 | O |
| Compound 98 | L1-1 | A-42 | H | R-51 | H | R-51 | O |

[Table 4]

| | Substituent in Formula 1 | | | | | | |
|---|---|---|---|---|---|---|---|
| | $L^1$ | A in $L^1$ | $R^1$ | $R^2$ | $R^3$ | $R^4$ | X |
| Compound 99 | L1-1 | A-42 | H | R-52 | H | R-52 | O |
| Compound 100 | L1-1 | A-42 | H | R-53 | H | R-53 | O |
| Compound 101 | L1-1 | A-42 | H | R-56 | H | R-56 | O |
| Compound 102 | L1-1 | A-42 | H | R-57 | H | R-57 | O |
| Compound 103 | L1-1 | A-42 | H | R-60 | H | R-60 | O |
| Compound 104 | L1-1 | A-42 | H | R-61 | H | R-61 | O |
| Compound 105 | L1-1 | A-42 | H | R-62 | H | R-62 | O |
| Compound 106 | L1-1 | A-42 | H | R-63 | H | R-63 | O |

(continued)

| | Substituent in Formula 1 | | | | | | |
|---|---|---|---|---|---|---|---|
| | $L^1$ | A in $L^1$ | $R^1$ | $R^2$ | $R^3$ | $R^4$ | X |
| Compound 107 | L1-1 | A-42 | H | R-64 | H | R-64 | O |
| Compound 108 | L1-1 | A-42 | H | R-79 | H | R-79 | O |
| Compound 109 | L1-1 | A-1 | H | R-1 | H | R-1 | S |
| Compound 110 | L1-1 | A-4 | H | R-35 | H | R-35 | O |
| Compound 111 | L1-1 | A-4 | R-3 | R-3 | R-3 | R-3 | O |
| Compound 112 | L1-2 | A-1 | H | R-1 | H | R-1 | O |
| Compound 113 | L2-1 | A-1 | H | R-1 | H | R-1 | O |
| Compound 114 | L3-1 | A-1 | H | R-1 | H | R-1 | O |
| Compound 115 | L3-3 Z=Me | A-1 | H | R-1 | H | R-1 | O |

Regarding the compounds 1 to 109, from the viewpoints of dispersibility, invisibility, and light fastness, for example, a combination of a substituent A-1 having excellent dispersibility and absorption maximum and a substituent R-1 having excellent dispersibility, aggregation stability, and light fastness, a combination of the substituent A-1 and a substituent R-7, a combination of a substituent A-4 and a substituent R-19, or a combination of a substituent A-42 and a substituent R-63 is preferable.

In a case where the aryl group (also referred to as "terminal aryl group") in $R^1$, $R^2$, $R^3$, and $R^4$ in Formula 1 has a substituent, as described above, it is preferable that the substitution site of the substituent of the terminal aryl group is the meta position. In addition, a compound in which the substitution site of the substituent of the terminal aryl group is the para position as in the compound 110 can be used for the dispersion according to the embodiment of the present disclosure. Further, the compound 111 in which all the substituents of barbituric acid are hydrogen atoms can be used for the dispersion according to the embodiment of the present disclosure. All the compounds represented by Formula 1 having various methine chain structures as in the compounds 112 to 115 can be used for the dispersion according to the embodiment of the present invention.

(Absorption Maximum)

An image that is a dry material of the dispersion according to the embodiment of the present disclosure has absorption in a near infrared range. That is, as the specific colorant included in the dispersion according to the embodiment of the present disclosure, a colorant having an absorption maximum in a range of 700 nm to 1,200 nm is preferable. It is preferable that the image that is a dry material of the dispersion according to the embodiment of the present disclosure has an absorption maximum in the above-described range.

From the viewpoint of the invisibility of an image in the obtained recorded material, the absorption maximum of the specific colorant included in the dispersion according to the embodiment of the present disclosure is more preferably in a range of 710 nm to 1,200 nm, still more preferably in a range of 760 nm to 1,200 nm, and still more preferably in a range of 800 nm to 1,200 nm.

By adjusting the absorption maximum to be in a range of 700 nm to 1,200 nm, the invisibility of the near infrared absorbing image obtained using the dispersion and the readability thereof by a detector using infrared light are further improved.

The absorption maximum of the specific colorant according to the embodiment of the present disclosure can be obtained using the same method as the method of measuring the absorption maximum of the dry material described below, that is, the formed near infrared absorbing image.

The dispersion according to the embodiment of the present invention may include one specific colorant alone or may include two or more specific colorants. Depending on the purposes, a combination of two or more specific colorants having different absorption maximums can also be used.

(Content of Specific Colorant)

The content of the specific colorant in the dispersion according to the embodiment of the present invention is not particularly limited can be appropriately determined depending on the uses of the dispersion.

For example, in a case where the dispersion is used for an ink composition for ink jet recording, the content of the specific colorant is preferably 0.01 mass% to 30 mass%, more preferably 0.05 mass% to 20 mass%, and still more preferably 0.1 mass% to 10 mass% with respect to the total mass of the dispersion.

In a case where the dispersion is used as an ink composition and the content of the specific colorant is 0.01 mass% or higher with respect to the total mass of the dispersion, a near infrared absorbing image having higher readability can be obtained using the ink composition. In addition, in a case where the content of the specific colorant is 30 mass% or lower, a near infrared absorbing image having higher invisibility can be obtained.

In a case where the dispersion is used as a near infrared absorbing resin composition, the content of the specific colorant is preferably 0.01 mass% to 30 mass%, more preferably 0.05 mass% to 20 mass%, and still more preferably 0.1 mass% to 10 mass% with respect to the total mass of the dispersion.

In a case where the content is in the above-described range, a resin film, a resin molded body, or the like having excellent near infrared absorbing properties can be obtained.

[Medium]

The dispersion according to the embodiment of the present invention includes the medium.

The medium includes a resin, or may include a mixture of a resin and at least one from water, an organic solvent, and a polymer compound.

As the medium, a liquid is preferable, and a liquid including water is more preferable.

In a case where the medium is a liquid, the dispersion according to the embodiment of the present invention can be used as an ink composition. In addition, by using a liquid including water as the medium, the dispersion according to the embodiment of the present invention can be used as an aqueous ink composition, preferably an aqueous ink composition for ink jet recording.

[Case where Medium is Medium other than Liquid]

In a case where the medium includes a polymer compound, i.e. a resin, the dispersion according to the embodiment of the present invention can be used as a near infrared absorbing resin composition (hereinafter, simply referred to as "resin composition"). A resin film, a resin molded body, or the like having near infrared absorbing properties can be manufactured using the near infrared absorbing resin composition.

The resin that may be included in the dispersion according to the embodiment of the present invention as the medium is not particularly limited as long as the resin composition as the dispersion including the near infrared absorbing colorant according to the embodiment of the present invention can be prepared using the resin. In the present invention, the resin refers to a general synthetic resin. Among the resins, a thermoplastic resin is preferable from the viewpoint that molding can be easily performed. Examples of the thermoplastic resin include polyester, polystyrene, polyamide, polyurethane, polycarbonate, cellulose acetate, polyacryl, polyacetal, polypropylene, polyvinyl, polysulfone, polyimide, and polyolefin. Among these, at least one resin selected from the group consisting of polyester, polyamide, and polyurethane is preferable.

The resin can be appropriately selected depending on the use of the resin composition. As the resin, any resin can be used without any particular limitation as long as it is a resin having desired properties such as a strength or transparency suitable for the use of the resin composition. In particular, from the viewpoints of workability, versatility, durability, and costs, it is preferable that the resin composition includes at least one selected from polyester, polyurethane, polyamide, a polyolefin, polystyrene, or polycarbonate, and it is preferable that the resin composition includes at least one selected from polyester, polyamide, or polyurethane.

As the polyester, polyethylene terephthalate (PET) obtained by polycondensation between dimethyl terephthalate or terephthalic acid and ethylene glycol, polybutylene terephthalate (PBT) obtained by polycondensation between dimethyl terephthalate and butanediol, or the like is preferable. In particular, from the viewpoints of manufacturing stability and manufacturing costs, polyethylene terephthalate is more preferable.

In addition, as the polyester, polylactic acid that is a biodegradable resin having excellent environmental aptitude may be selected and used. As the polylactic acid, for example, not only poly-L-lactic acid and poly-D-lactic acid but also a stereocomplex obtained by mixing poly-L-lactic acid and poly-D-lactic acid are useful.

As the polyester, a commercially available product may be used.

Examples of the commercially available product of the polyester include "MITSUI PET (trade name)" series (for example, part number: MITSUI J 125, manufactured by Mitsui Chemicals, Inc.) that is a polyol-polycarboxylic acid polyester resin and "VYLON" series (manufactured by Toyobo Co., Ltd.).

Examples of the polyester selected from copolymer resins including a polylactic acid resin and polylactic acid include a crystalline polylactic acid resin (manufactured by Zhejiang Hisun Biomaterials Co., Ltd., REVODE (registered trade name) series, Ratio L-Form/D-Form=100/0 to 85/5, for example, part number: REVODE 101), and a polylactic acid

resin (manufactured by Mitsui Chemicals, Inc., "LACEA (registered trade name), manufactured by lactic fermentation of a plant starch.

As the polyamide, nylon (registered trade name) 66 obtained using hexamethylenediamine and adipic acid, nylon 6 obtained by ring-opening polymerization of ε-caprolactam, or the like is preferable, and nylon 6 is more preferable from the viewpoints of costs.

As the polyamide, a commercially available product may be used.

Examples of the commercially available product of the polyamide include "AMILAN (registered trade name) series" series (for example, part number: CM1017) as nylon 6 and nylon 66 manufactured by Toray Industries Inc. and "LEONA (registered trade name)" series as a polyamide 66 resin manufactured by Asahi Kasei Corporation, and "n-nylon" and "n,m-nylon" series manufactured by Teijin Ltd.

The polyurethane is a copolymer obtained by a reaction between an isocyanate and a polyol. As the isocyanate component, an aromatic diisocyanate, an aliphatic diisocyanate, or an alicyclic diisocyanate alone or a mixture thereof is used. For example, tolylene-2,4-diisocyanate, 4,4'-diphenylmethane diisocyanate, 1,6-hexane diisocyanate, or 1,4-cyclohexane diisocyanate is used as a major component, and a polyisocyanate having three or more functional groups is optionally used. In addition, as the polyol component, polyether polyol or polyester polyol may be used. As the polyether polyol, for example, polyethylene glycol, polypropylene glycol, or polytetramethylene glycol can be used. As the polyester polyol, for example, a reaction product of a diol such as ethylene glycol or propylene glycol and a dihydrochloric acid such as adipic acid or sebacic acid, or a ring-opening polymerization product such as caprolactone can be used.

As the polyolefin, a homopolymer such as ethylene, propylene, butene, or pentene, and a resin including a copolymer of the homopolymers as a major component can be used.

Examples of the polyolefin include polyethylene, polypropylene, an ethylene-vinyl acetate copolymer, an ethylene-methyl acrylate copolymer, an ethylene-methyl methacrylate copolymer, an ethylene-ethyl acrylate copolymer, a propylene-vinyl acetate copolymer, a propylene-methyl acrylate copolymer, a propylene-methyl methacrylate copolymer, a propylene-ethyl acrylate copolymer, polybutene, a poly-3-methyl-1-butene copolymer, and a poly-4-methyl-1-pentene copolymer.

Among these, polypropylene or polyethylene that is inexpensive, has excellent workability, and is widely used for various industrial components, home electric appliances, and the like is preferable.

Examples of a commercially available product of the polyolefin resin include respective series of polypropylene resins "Prime Polypro", "Polyfine", and "Prime TPO" manufactured by Prime Polymer Co., Ltd. (for example, part number: J-700GP, J-966HP), respective series of polyethylene resins "HI-ZEX", "NEO-ZEX", "ULTZEX", "Moretec", and "Evolue" manufactured by Prime Polymer Co., Ltd. (for example, a high-density polyethylene resin, part number: 2200J), and "PETROSEN" series of a low-density polyethylene manufactured by Tosoh Corporation (for example, part number: PETROSEN 190).

The polycarbonate is a resin manufactured by a reaction of a divalent phenol and a carbonate precursor. Examples of the divalent phenol include 2,2-bis(4-hydroxyphenyl)propane (hereinafter, abbreviated as "bisphenol A"), tetramethylbisphenol A, tetrabromobisphenol A, bis(4-hydroxyphenyl)-p-isopropylbenzene, hydroquinone, resorcinol, 4,4'-dihydroxyphenol, bis(4-hydroxyphenyl), bis(4-hydroxyphenyl)ether, bis(4-hydroxyphenyl)sulfone, bis(4-hydroxyphenyl)sulfoxide, bis(4-hydroxyphenyl)ketone, 1,1-bis(4-hydroxyphenyl)ethane, and 1,1-bis(4-hydroxyphenyl)cyclohexane. Examples of the carbonate precursor include phosgene, diaryl carbonate such as diphenyl carbonate, haloformate, and dihaloformate such as dihaloformate of divalent phenol.

Examples of a commercially available product of an aromatic polycarbonate resin include "TARFLON" (manufactured by Idemitsu Kosan Co., Ltd.) and "PEARLITE" (manufactured by Teijin Ltd.).

Examples of a polystyrene resin include polystyrene, poly(p-methylstyrene), poly(m-methylstyrene), poly(p-tert-butylstyrene), poly(p-chlorostyrene), poly(m-chlorostyrene), poly(p-fluorostyrene), hydrogenated polystyrene, and a copolymer including one of the above-described structural units.

Among the polystyrene resins, one kind may be used alone, or a combination of two or more kinds may be used.

Examples of a commercially available product of the polystyrene resin include "PSJ-POLYSTYRENE" series manufactured by PS Japan Corporation (for example, part number: H8672), and "TOYO STYROL" series manufactured by Toyo Styrene Co., Ltd.

As the resin, a commercially available resin can be used, and a resin formed using a precursor monomer of a commercially available resin can also be used.

The resin composition may include only one resin or may include two or more resins. In a case where two or more resins are used, from the viewpoints of compatibility and formability, it is preferable that resins having glass transition temperatures, solubility parameters (SP values), and the like close to each other are used in combination.

The solubility parameter (unit: $(cal/cm^3)^{1/2}$] (SP value) is a value calculated using the Fedors method and is represented by the following expression.

$$\text{SP Value } (\delta) = (\Delta H / V)^{1/2}$$

In the expression, ΔH represents a molar heat of vaporization [cal], and V represents a molar volume [$cm^3$]. In addition, as ΔH and V, the sum ΣΔei (= ΔH) of molar heat of vaporization (= Δei) of an atomic group and the sum ΣΔvi (V) of molar volumes (Δvi) described in "POLYMER ENGINEERING AND SCIENCE, 1974, Vol.14, No.2, ROBERT F. FEDORS. (pp. 151 to 153) can be used, respectively, and the solubility parameter can be obtained from $(\Sigma\Delta ei / \Sigma\Delta vi)^{1/2}$.

In addition to a resin and a near infrared absorbing colorant, the resin composition that is the dispersion according to the embodiment of the present invention may include various additives as long as the effects of the present invention do not deteriorate.

The resin composition according to the embodiment of the present invention may include a colorant.

By adding the colorant, a desired hue can be imparted to the resin composition and a resin molded body prepared from the resin composition.

Examples of the colorant include a dye compound, a pigment compound, and dispersions thereof. The colorant may be an inorganic compound or an organic compound.

As the colorant, a pigment may be used.

The pigment that can be used as the colorant will be described.

Examples of a black pigment include: an organic black pigment such as aniline black, anthraquinone black, or perylene black; and an inorganic black pigment such as carbon black, lamp black, graphite, fullerene, carbon nanotube, magnetite, iron-titanium composite oxide, cobalt oxide, manganese dioxide, zinc sulfide, copper-chromium composite oxide, tin-antimony composite oxide, titanium-vanadium-antimony composite oxide, cobalt-nickel composite oxide, manganese-iron composite oxide, iron-cobalt-chromium composite oxide, copper-chromium composite oxide, iron-cobalt composite oxide, chromium-iron-nickel composite oxide, molybdenum disulfide, lower titanium oxide, titanium nitride, chromium oxide.

As the chromatic pigment, a pigment such as a red pigment, a yellow pigment, an orange pigment, a violet pigment, a blue pigment, a green pigment, or a brown pigment is preferable.

Examples of the red pigment include a naphthol pigment, an azo pigment, a quinacridone pigment, an anthraquinone pigment, a perylene pigment, and a diketo pyrrolo pyrrole pigment. Examples of the yellow pigment include: an organic pigment such as an azo pigment, an anthraquinone pigment, an isoindolinone pigment, a quinophthalone pigment, or a benzimidazolone pigment; and an inorganic pigment such as titanium-nickel-antimony composite oxide or zinc-iron composite oxide.

Examples of the orange pigment include a naphthol pigment, an azo pigment, a benzimidazolone pigment, a quinacridone pigment, and a diketo pyrrolo pyrrole pigment.

Examples of the violet pigment include an azo pigment, a rhodamine pigment, a quinacridone pigment, a carbazole pigment, and a perylene pigment.

Examples of the blue pigment include: an organic pigment such as a phthalocyanine pigment; and an inorganic pigment such as cobalt-aluminum composite oxide, cobalt-aluminum-chromium composite oxide, or ultramarine.

Examples of the green pigment include: an organic pigment such as a phthalocyanine pigment or an azo pigment; and an inorganic pigment such as chromium oxide, cobalt-chromium-aluminum composite oxide, or cobalt-nickel-zinc composite oxide.

Examples of the brown pigment include: an organic pigment such as an azo pigment or a benzimidazolone pigment; and an inorganic pigment such as iron oxide or titanium-chromium-antimony composite oxide.

The average primary particle size of the pigment used for the resin composition is preferably 0.01 μm to 5 μm and more preferably 0.01 μm to 3 μm.

The average primary particle size of the pigment is an arithmetic mean value of equivalent circle diameters calculated according to (c) Microscopy, 5.4.4 Particle Size Distribution of JIS Z 8901-2006 "Test Powder and Test Particles" by observing a sample prepared using a shaking method and observing particles of an image (about 20 to 50 particles) using a transmission electron microscope (manufactured by JEOL Ltd.) at a magnification of 50000 to 1000000 power.

As the colorant, a dye may be used.

The dye that can be used as the colorant will be described.

As the dye, for example, an acid dye, a direct dye, a basic dye, a salt-forming dye, an oil-soluble dye, a dispersed dye, a reactive dye, a mordant dye, a vat dye, or a sulfur dye is preferable.

Examples of the acid dye include an anthraquinone acid dye, a phthalocyanine acid dye, a quinoline acid dye, an azine acid dye, an indigoid acid dye, a xanthene acid dye, and a triphenylmethane acid dye.

Examples of the direct dye include an azo direct dye, a thiazole direct dye, an anthraquinone direct dye, an oxazine direct dye, and a phthalocyanine direct dye.

Examples of the basic dye include an azo basic dye, an azine basic dye, an acridine basic dye, a methine basic dye, a thiazole basic dye, a thiazine basic dye, an oxazine basic dye, an anthraquinone basic dye, a xanthene basic dye, and a triarylmethane basic dye.

Examples of the oil-soluble dye include an anthraquinone oil-soluble dye, a phthalocyanine oil-soluble dye, a quinoline oil-soluble dye, an azine oil-soluble dye, an indigoid oil-soluble dye, a methine oil-soluble dye, an azo oil-soluble dye, an aminoketone oil-soluble dye, a xanthene oil-soluble dye, and a triphenylmethane oil-soluble dye.
Examples of the dispersed dye include an anthraquinone dispersed dye, a quinoline dispersed dye, an indigoid dispersed dye, a quinophthalone dispersed dye, a methine dispersed dye, an azo dispersed dye, an aminoketone dispersed dye, and a xanthene dispersed dye.
In addition, a salt-forming dye such as a salt-forming body of the above-described acid dye and a cationic compound, a salt-forming body of the above-described basic dye and an anionic compound, or a salt-forming body of an acid dye and a basic dye can be used. As the dye, one kind can be used alone, or a combination of two or more kinds can be used.
In a case where the resin composition includes a colorant, the resin composition may include one colorant or may include two or more colorants.
In a case where a colorant is used, the content of the colorant is preferably 0.0001 mass% to 20 mass% and more preferably 0.001 mass% to 10 mass% with respect to the total content of the resin composition.
Further, an inorganic filler may be optionally added to the resin composition in order to improve impact resistance, antibacterial properties, gas barrier properties, conductivity, magnetism, piezoelectricity, damping properties, sound insulating properties, smoothness, electromagnetic wave absorption properties, flame retardancy, dewaterability, deodorization, anti-blocking properties, oil absorptiveness, water absorption properties, formability, and the like.
Examples of the inorganic filler include carbon fiber, glass fiber, glass flake, zeolite, mica, graphite, metal powder, ferrite, alumina, barium titanate, potassium titanate, barium sulfate, Teflon (registered trade name) powder, talc, charcoal powder, carbon nanotube (CNT), carbon microcoil (CMC), antimony oxide, aluminum hydroxide, magnesium hydroxide, hydrotalcite, calcium oxide, silica, and calcium carbonate. It is preferable that the inorganic filler is added in a content where the transparency of the resin molded body described below does not deteriorate.
**In** addition, various well-known additives such as a leveling agent, a pigment dispersant, an ultraviolet absorber, an antioxidant, a viscosity improver, a light stabilizer, a heat-resistance stabilizer, a metal deactivator, a peroxide decomposer, a processing stabilizer, a nucleating agent, a crystallization accelerator, a crystallization retarder, an antigelling agent, a filler, a reinforcing agent, a plasticizer, a lubricant, a flame retardant, a rust inhibitor, a fluorescence brightening agent, a fluidity improver, or an antistatic agent may be appropriately selected and added to the resin composition according to the embodiment of the present invention.

-Method of Preparing Resin Composition-

A method of preparing a resin composition including a resin as the medium, is not particularly limited. For example, in order to add a near infrared absorbing colorant, the near infrared absorbing colorant may be directly kneaded into a master batch or a resin pellet as a resin raw material, mixed, and melted to obtain a resin composition. Alternatively, the near infrared absorbing colorant may be adhered to the resin using a method by application or dipping to obtain a resin composition.
**In** particular, it is preferable that the near infrared absorbing colorant is directly kneaded into a master batch or a resin pellet as a resin raw material, mixed, and melted to obtain a resin composition because, in this resin composition, the near infrared absorbing colorant is not likely to desorb from the resin surface and the durability and persistence of the infrared absorption capacity is excellent.
In a step of forming a resin molded body, it is preferable that the near infrared absorbing colorant is mixed with the resin and is uniformly dispersed to form a molded body. Examples of a mixing method include a method of heating and kneading the resin and the near infrared absorbing colorant and a method of stirring and mixing the resin, the near infrared absorbing colorant, and a solvent.

-Resin Molded Body-

The resin composition according to the embodiment of the present invention may be molded to obtain a resin molded body. The resin molded body that is a cured product of the dispersion according to the embodiment of the present invention includes: a near infrared absorbing colorant represented by Formula 1; and a resin.
The shape and use of the resin molded body are not particularly limited, and the resin composition according to the embodiment of the present invention can be processed into various molded bodies.
Specific examples of an aspect of the resin molded body include aspects of the resin molded body used for various uses including: a resin film; a synthetic fiber; a resin container such as a bottle, a cosmetic container, or a food container; a resin plate; a lens; a toner; an exterior component of various home appliances including general decorative materials, an electronic device, or the like; a housing construction component such as an interior material or an exterior material; and interior and exterior components of an aircraft, a vehicle, or the like.

Further, examples of the resin molded body include a resin pellet or a granular resin that can be used as a raw material of the above-described various resin molded bodies.

In particular, in the resin molded body that is obtained using the dispersion according to the embodiment of the present invention, the near infrared absorption capacity is maintained for a long period of time without a change in the tint of the resin, and excellent near infrared absorption capacity is maintained in the hot-formed resin molded body. Therefore, in a case where the resin molded body is used for a resin film, a synthetic fiber, or the like, a near infrared absorbing resin film or a near infrared absorbing synthetic fiber can be obtained, and it can be said that the effects of the present invention are excellent.

In addition, the resin molded body according to the embodiment of the present invention can be suitably applied to a resin pellet, resin particles, or the like as a resin raw material provided for hot forming.

A method of manufacturing the resin molded body is not particularly limited, and a well-known resin molding method can be appropriately used.

For example, the near infrared absorbing colorant represented by Formula 1 and a resin chip are mixed with each other in predetermined contents, and a resin composition can be obtained by melt kneading or the like. By molding the obtained resin composition using a given method, a resin molded body can be manufactured.

In particular, it is preferable that the following method of manufacturing the resin molded body is used.

-Method of manufacturing Resin Molded Body-

A preferable method of manufacturing the resin molded body includes: a step of kneading the near infrared absorbing colorant represented by Formula 1 and the resin to obtain a resin kneaded material; and a step of molding the obtained resin kneaded material.

(Step of Kneading Near Infrared Absorbing Colorant represented by Formula 1 and Resin to obtain Resin Kneaded Material)

The near infrared absorbing colorant represented by Formula 1 and a resin chip (for example, a chip of a resin selected from a polyester such as polyethylene terephthalate or a polyamide such as nylon 6) are mixed with each other in predetermined contents, and a resin kneaded material can be obtained by melt kneading.

By preparing the obtained resin kneaded material in a shape such as a pellet shape, a powder shape, a granular shape, or a bead shape, a solid resin composition including the near infrared absorbing colorant and the resin may be obtained.

For kneading, for example, a well-known device such as a Bunbury mixer, a twin screw extruder, a single screw extruder, a rotary twin screw extruder, or a kneader can be used.

(Step of molding Obtained Resin Kneaded Material)

By melting the obtained solid resin composition, melt-kneading the molten resin composition using a melt extruder to obtain a resin kneaded material, and allowing the obtained resin kneaded material to pass through a gear pump or a filter from the melt extruder, various molded bodies can be manufactured as requested.

For example, in a case where a resin film as a resin molded body is formed, a non-stretched resin film can be obtained by extruding a melt-kneaded material into a cooling roll through a die and cooling and solidifying the extruded material.

Examples of film molding that can be used for forming the resin film include T-die film molding, inflation molding, and calendar molding.

In addition, a synthetic fiber can be obtained by electrospinning by allowing the melt-kneaded material to pass through a gear pump or a filter from a melt extruder and extruding the material into a fiber shape from a nozzle (base) including a large number of small holes.

(Other Manufacturing Method)

As a molding method for obtaining the resin molded body using the solid resin composition as a raw material, for example, the above-described film forming method, electrospinning of a synthetic resin, or various molding methods such as injection molding, vacuum molding, extrusion molding, blow molding (for example, biaxial stretching blow molding or direct blow molding), or rotational molding can be used.

In particular, as the molding method that can be used for the resin molded body, a molding method such as injection molding, film molding, or blow molding is preferable.

In a case where the resin composition is applied to a molding method not including the formation of the resin

kneaded material, for the mixing of the resin composition, a well-known mixing device such as a Henschel mixer, a tumbler, a disperser, a kneader, a roll mill, a Super mixer, a vertical granulator, a high-speed mixer, a Pharmatrix, a ball mill, a steel mill, a sand mill, a vibration mill, or an attritor can be used.

The resin molded body including the near infrared absorbing colorant and the resin that is obtained as described above can be expected to be applied to authenticity determination having absorption in an infrared range that cannot be seen by eyes. In addition, the application to a yarn or a fiber having an effect of heat storage or heat insulation using photothermal conversion of the near infrared absorbing colorant can be considered.

Further, the near infrared absorbing colorant included in the resin composition according to the embodiment of the present disclosure has excellent invisibility. Therefore, in the obtained resin molded body, transparency derived from the resin does not deteriorate. In addition, in a case where the resin composition further includes a colorant, the tint of the colorant does not deteriorate, and a molded body, a synthetic fiber, or the like having excellent design and excellent hue can be obtained.

-Case where Medium is Liquid-

As described above, it is preferable that the dispersion according to the embodiment of the present invention includes a liquid as the medium. Hereinafter, the liquid medium including a liquid will also be referred to as "liquid medium".

The liquid medium included in the dispersion is not particularly limited and can be appropriately selected depending on the intended use of the dispersion. In particular, in a case where the dispersion according to the embodiment of the present invention is applied to, for example, an ink composition for ink jet recording, a well-known liquid medium can be used in the technical field of the ink composition. It is preferable that the liquid medium includes water.

By including the liquid medium, the dispersion according to the embodiment of the present invention can include an ink composition. Preferably, the dispersion according to the embodiment of the present invention can include an ink composition for ink jet recording.

Hereinafter, the ink composition that is the preferable use aspect of the dispersion according to the embodiment of the present invention will be described using an example.

The content of the liquid medium in the dispersion is preferably 50 mass% or higher, more preferably 60 mass% or higher, and still more preferably 70 mass% or higher with respect to the total mass of the dispersion, for example, the ink composition.

The upper limit of the content of liquid medium is not particularly limited may be determined depending on the contents of other components. From the viewpoint of sufficiently obtaining the effects of the addition of the specific colorant, the content of the liquid medium is preferably 99 mass% or lower, more preferably 98 mass% or lower, and still more preferably 95 mass% or lower.

The content of water that is the preferable component in the liquid medium is preferably 30 mass% or higher, more preferably 40 mass% or higher, and still more preferably 50 mass% or higher with respect to the total mass of the liquid medium. In addition, the liquid medium may consist of only water depending on the use aspects.

It is preferable that, as the solvent, the dispersion according to the embodiment of the present invention includes: water; and an organic solvent (hereinafter, also referred to as "high boiling point solvent") having a boiling point of 100°C or higher under 101.325 kPa (hereinafter, also simply referred to as "boiling point"). "Under 101.325 kPa" has the same definition as "under 1 atm".

In a case where the dispersion according to the embodiment of the present invention is applied to an ink composition for ink jet recording, the jettability of the ink is further improved by including water and the high boiling point solvent as the solvent.

Examples of the high boiling point solvent include ethylene glycol, diethylene glycol, triethylene glycol, tetraethylene glycol, polyethylene glycol, propylene glycol, dipropylene glycol, tripropylene glycol, glycerin, 2-pyrrolidone, butanediol, and hexanediol.

In a case where the dispersion according to the embodiment of the present invention includes the high boiling point solvent, the content of the high boiling point solvent is preferably 1 mass% to 50 mass% and more preferably 2 mass% to 40 mass% with respect to the total mass of the dispersion as the ink composition for ink jet recording.

In a case where the content of the high boiling point solvent is in the above-described range and the dispersion is applied to the ink composition for ink jet recording, the addition effect can be sufficiently obtained, and the jettability can be further improved.

[J-Aggregate]

In a case where a near infrared absorbing image is formed using the dispersion, from the viewpoint of the invisibility of the obtained image, it is preferable that at least a part of the colorant represented by Formula 1 is present as a J-aggregate in the dry material of the dispersion according to the embodiment of the present invention.

The colorant as a J-aggregate forms a so-called a J-band, and thus shows a sharp absorption spectrum peak. The details of the aggregate and J-band of the colorant can be found in a document (for example, Photographic Science and Engineering Vol. 18, No. 323-335 (1974)).

The absorption maximum of the specific colorant in the J-aggregate state shifts to a longer wavelength side than the absorption maximum of the specific colorant included in the medium as the dispersion. Accordingly, whether the colorant is in a J-aggregate state or a non-aggregate state can be determined by measuring the absorption maximum in a wavelength range of 400 nm to 1,200 nm.

In the present disclosure, in a case where a difference between the absorption maximum of the above-described near infrared absorbing image in a wavelength range of 700 nm to 1,200 nm and an absorption maximum of a solution in which the specific colorant included in the dispersion is dissolved in N,N-dimethylformamide (DMF) is 30 nm or more, it is determined that the specific colorant in the near infrared absorbing image is a J-aggregate.

From the viewpoint of improving the invisibility of the obtained near infrared absorbing image, the difference is preferably 50 nm or more, more preferably 70 nm or more, and still more preferably 100 nm or more.

In addition, the specific colorant may form a J-aggregate in the dispersion, or may be jetted from an ink jet recording device to form a J-aggregate in the near infrared absorbing image without forming a J-aggregate in the dispersion while liquid droplets of the colorant are moving to a substrate or after the liquid droplets arrive at the substrate. Further, all the specific colorants present on the substrate do not necessarily form a J-aggregate, and a specific colorant in a J-aggregate state and a specific color in a molecular dispersion state may be mixed in the image.

It is preferable that a J-aggregate is formed in a case where the specific colorant is dispersed in the medium and a part thereof is dissolved in water as the medium. For example, by adding an additive to the dispersion in order to accelerate the formation of a J-aggregate, the formation of an aggregate in the dispersion or in the near infrared absorbing image may be accelerated. Examples of the additive for accelerating the formation of an aggregate include an amphoteric compound (for example, gelatin, low molecular weight collagen, oligopeptide, or amino acid; as a commercially available product, JURYMER (registered trade name) ET410 (manufactured by Toagosei Co., Ltd.)), a salt (for example, an alkali earth metal salt such as barium chloride, strontium chloride, calcium chloride, or magnesium chloride, an alkali metal salt such as potassium chloride or sodium chloride, a group 13 metal salt such as aluminum chloride, an organic salt such as ammonium acetate, an organic intramolecular salt such as betaine, or a salt including an organic polycation or polyanion), an inorganic acid such as hydrochloric acid or sulfuric acid, an organic acid such as acetic acid or p-toluenesulfonic acid, an inorganic base such as potassium carbonate or sodium hydroxide, and an organic base such as trialkylamine or pyridine.

The content of the amphoteric compound such as gelatin is preferably 10 ppm to 50000 ppm (5 mass%) and more preferably 30 ppm to 20000 ppm (2 mass%) with respect to the total mass of the ink composition for ink jet recording as the dispersion.

The content of the salt is preferably 10 ppm to 50000 ppm (5 mass%) and more preferably 30 ppm to 20000 ppm (2 mass%) with respect to the total mass of the dispersion.

The content of the base and the salt is preferably 10 ppm to 50000 ppm (5 mass%) and more preferably 30 ppm to 20000 ppm (2 mass%) with respect to the total mass of the dispersion.

[Optical Density]

**In** a case where the dispersion according to the embodiment of the present invention is applied to an ink composition, from the viewpoint of the invisibility of the near infrared absorbing image obtained using the ink composition, it is preferable that an optical density (OD) of the dry material at a wavelength of 450 nm is 1/7 or less of an optical density of the dry material at an absorption maximum in a wavelength range of 700 nm to 1200 nm (hereinafter, also referred to as "near infrared range).

It is more preferable the optical density at the wavelength of 450 nm is 1/8 or less of the optical density at the absorption maximum in the near infrared range, and it is still more preferable the optical density at the wavelength of 450 nm is 1/9 or less of the optical density at the absorption maximum in the near infrared range.

By adjusting the optical density (OD) at the wavelength of 450 nm to be 1/7 or less of the optical density at the absorption maximum in the near infrared range, the invisibility of the obtained near infrared absorbing image is further improved.

The values of the optical density (OD) at the wavelength of 450 nm and the optical density at the absorption maximum in the near infrared range are measured by measuring the optical density of the dry material at 450 nm and the optical density of the dry material at the absorption maximum in the near infrared range using the same method as in the determination on whether or not the colorant is in a J-aggregate state or a non-aggregate state.

In the present disclosure, the optical density is measured using a spectrophotometer UV-3100PC (manufactured by Shimadzu Corporation) including a 150mm φ large integrating sphere attachment LISR-3100 (manufactured by Shimadzu Corporation).

In addition, from the viewpoint of readability, the optical density at the absorption maximum in the near infrared

range is preferably 0.1 or higher, more preferably 0.3 or higher, and still more preferably 0.5 or higher.

Further, from the viewpoint of invisibility, in a case where a dry material, that is, an image is formed using the dispersion as the ink composition according to the embodiment of the present invention, it is preferable that a maximum value of an optical density of the image in a wavelength range (visible range) of 400 nm to 700 nm is 0.5 or lower. The method of measuring the optical density of the image that is the dry material of the dispersion is the same as the method of measuring the absorption maximum of the dry material in the near infrared range, and the optical density is measured using a spectrophotometer UV-3100PC (manufactured by Shimadzu Corporation) including a 150mm φ large integrating sphere attachment LISR-3100 (manufactured by Shimadzu Corporation).

[Other Components]

In a case where the dispersion is applied to an ink composition, the dispersion may further include a well-known additive used for the ink composition.

(Compound selected from Divalent Alkali Metal Element and Trivalent Group 13 Metal Element)

In a case where the dispersion according to the embodiment of the present invention is applied to an ink composition, it is preferable that the content of at least one of a divalent alkali earth metal element or a trivalent group 13 metal element is 10 ppm to 50,000 ppm with respect to the total mass of the dispersion.

Examples of the divalent alkali earth metal include magnesium, calcium, strontium, barium, and radium.

Examples of the trivalent group 13 metal element include aluminum, gallium, indium, and thallium.

It is preferable that the divalent alkali earth metal element or the trivalent group 13 metal element is an element derived from the alkali earth metal salt or the group 13 metal salt.

From the viewpoint of the storage stability and jettability of the ink composition, the total content of the divalent alkali metal element and the trivalent group 13 metal element is preferably 10 ppm to 50000 ppm (5 mass%), more preferably 10 ppm to 10000 ppm (1 mass%), still more preferably 10 ppm to 1000 ppm (0.1 mass%), and even still more preferably 10 ppm to 100 ppm (0.01 mass%) with respect to the total mass of the dispersion.

In addition, the content of the divalent alkali metal element or the trivalent group 13 metal element is, as a molar ratio thereof to the specific colorant, preferably 0.01 equivalents to 1 equivalent, more preferably 0.1 equivalents to 0.8 equivalents, and still more preferably 0.15 equivalents to 0.6 equivalents.

The molar ratio of the content of the divalent alkali metal element or the trivalent group 13 metal element to the specific colorant being 0.01 equivalents represents that the molar amount of the divalent alkali metal element or the trivalent group 13 metal element/the molar amount of the specific colorant is 0.01.

As the divalent alkali metal element or the trivalent group 13 metal element, one kind may be included, or two or more kinds may be included.

In a case where two or more divalent alkali metal elements or two or more trivalent group 13 metal elements are included, the content refers to the total content of the two or more divalent alkali metal elements or the two or more trivalent group 13 metal elements.

The content is determined by analyzing a solution in which the dispersion is diluted with N-methylpyrrolidone and the specific colorant dispersion is completely dissolved using a plasma optical emission spectrometer (OPTIMA 7300DV, manufactured by PerkinElmer Co., Ltd.).

It is presumed that, in a case where the total content of the divalent alkali metal element and the trivalent group 13 metal element is in the above-described range, a plurality of colorants in which a divalent or trivalent metal ion is negatively charged are bonded to each other and are partially crosslinked to each other to form a structure such that the storage stability of the dispersion as the ink composition is further improved.

In addition, it is presumed that, in a case where the content of the divalent alkali metal element and the trivalent group 13 metal element is in the above-described range, the amount of the crosslinked structure formed is appropriate and excessive aggregation of the colorants is suppressed such that the jettability is maintained in a case where the ink composition is used for ink jet recording.

(Surfactant)

The dispersion may include a surfactant.

As the surfactant, a compound having a structure that includes both a hydrophilic portion and a hydrophobic portion in a molecule can be effectively used, and any one of an anionic surfactant, a cationic surfactant, an amphoteric surfactant, a nonionic surfactant, or a betaine surfactant can also be used.

From the viewpoint of suppressing jetting interference of the ink composition, as the surfactant, a nonionic surfactant is preferable, and an acetylenic glycol derivative (an acetylenic glycol surfactant) is more preferable.

Examples of the acetylenic glycol surfactant include 2,4,7,9-tetramethyl-5-decyne-4,7-diol and alkylene oxide adduct of 2,4,7,9-tetramethyl-5-decyne-4,7-diol. At least one selected from the examples is preferable.

Examples of a commercially available product of the acetylenic glycol surfactant include SURFYNOL series such as SURFYNOL 104PG manufactured by Nissin Chemical Co., Ltd. and E series such as OLFINE E1010 manufactured by Nissin Chemical Co., Ltd.

As a surfactant other than the acetylenic glycol surfactant, a fluorine surfactant is preferable. Examples of the fluorine surfactant include an anionic surfactant, a nonionic surfactant, and a betaine surfactant. Among these, an anionic surfactant is more preferable. Examples of the anionic surfactant include: Capstone (registered trade name) FS-63 and Capstone FS-61 (manufactured by Dupont); FTERGENT (registered trade name; hereinafter, the same shall be applied) 100, FTERGENT 110, and FTERGENT 150 (manufactured by Neos Co., Ltd.); and CHEMGUARD (registered trade name) S-760P (manufactured by Chemguard Inc.).

In a case where the dispersion includes the surfactant, the content of the surfactant (in a case where two or more surfactants are included, the total content) is not particularly limited and is preferably 0.1 mass% or higher, more preferably 0.1 mass% to 10 mass%, and still more preferably 0.2 mass% to 3 mass% with respect to the total mass of the dispersion as the ink composition.

(Other Additives)

In a case where the dispersion is applied to an ink composition, the dispersion may further include well-known additives used for the ink composition, for example, an antifading agent, an emulsion stabilizer, a penetration enhancer, a ultraviolet absorber, a preservative, a fungicide, a pH adjuster, a surface tension adjuster, an antifoaming agent, a viscosity adjuster, a dispersant, a dispersion stabilizer, a rust inhibitor, or a chelating agent. Regarding the respective components, compounds described in paragraphs "0044" to "0050" of JP2008-144004A can be used.

(Other Colorants)

In a case where the dispersion is applied to an ink composition, the dispersion may include colorants other than the above-described specific colorant. The other colorants are not particularly limited, and well-known colorants in the field of an ink composition can be used.

From the viewpoint of the invisibility of the obtained near infrared absorbing image, the content of the other colorants is preferably 0.1 mass% or lower and more preferably 0.05 mass% or lower with respect to the total mass of the ink composition.

In addition, by using a colorant having absorption in a visible range in combination depending on the purpose, a dispersion with which a visible image having absorption in a near infrared range can be formed may be obtained.

<Preferable Physical Properties of Ink Composition>

In a case where the dispersion is applied to an ink composition, a viscosity of the ink composition is preferably 0.5 mPa·s to 10 mPa·s and more preferably 1 mPa·s to 7 mPa·s.

The viscosity is measured under a condition of 30°C using VISOMETER TV-22 (manufactured by Toki Sangyo Co., Ltd.).

In addition, a surface tension of the ink composition at 25°C (±1°C) is preferably 60 mN/m or lower, more preferably 20 mN/m to 50 mN/m, and still more preferably 25 mN/m to 45 mN/m. In a case where the surface tension of the ink composition is in the above-described range, the occurrence of curling in the substrate is suppressed, which is advantageous.

The surface tension of the ink composition is measured with a plate method using an Automatic Surface Tensiometer CBVP-Z (manufactured by Kyowa Interface Science Co., Ltd.).

(Method of manufacturing Ink Composition)

A method of manufacturing the ink composition according to the embodiment of the present invention is not particularly limited, and the ink composition can be manufactured (prepared) using a well-known method of manufacturing (preparing) an ink.

For example, the ink composition can be manufactured using a method of manufacturing an ink described in JP1993-148436A (JP-H5-148436A), JP1993-295312A (JP-H5-295312A), JP1995-097541A (JP-H7-097541A), JP1995-082515A (JP-H7-082515A), JP1995-118584A (JP-H7-118584A), JP1999-286637A (JP-H11-286637A), or JP1999-286637A(JP-H11-286637A).

In addition, in a case where the dispersion according to the embodiment of the present invention is applied to an

ink composition for ink jet recording, it is preferable that the method of manufacturing the ink composition for ink jet recording includes: a step of dispersing the above-described specific colorant in a medium including water to prepare a preliminary dispersion; and a step of mixing the obtained preliminary dispersion with another component used for the ink composition.

In addition, it is preferable that the method of manufacturing the ink composition for ink jet recording is the following first aspect or second aspect.

First aspect: a method of manufacturing the ink composition for ink jet recording includes: a step of dispersing the specific colorant and at least one of a divalent alkali earth metal salt or a trivalent group 13 metal salt in water to prepare an aqueous dispersion such that a total content of a divalent alkali earth metal element and a trivalent group 13 metal element is 10 ppm to 50000 ppm with respect to the total mass of the ink composition (also referred to as "first preparation step"); and a step of mixing the aqueous dispersion and other components of the ink composition with each other (also referred to as "first mixing step").

Second aspect: A method of manufacturing the ink composition for ink jet recording includes: a step of dispersing the specific colorant in water to prepare an aqueous dispersion (also referred to as "second preparation step"); and a step of mixing the aqueous dispersion, at least one of a divalent alkali earth metal salt or a trivalent group 13 metal salt, and other components of the ink composition with each other such that a total content of a divalent alkali earth metal element and a trivalent group 13 metal element is 10 ppm to 50000 ppm with respect to the total mass of the ink composition (also referred to as "second mixing step").

According to the first aspect or second aspect, an ink composition for ink jet recording having excellent storage stability can be obtained.

Hereinafter, the first aspect and the second aspect will be described in detail.

(First Aspect)

[First Preparation Step]

The first preparation step is a step of dispersing the specific colorant and at least one of a divalent alkali earth metal salt or a trivalent group 13 metal salt in water to prepare an aqueous dispersion (colorant dispersion) such that a total content of a divalent alkali earth metal element and a trivalent group 13 metal element is 10 ppm to 50000 ppm with respect to the total mass of the ink composition.

The content of the specific colorant in the aqueous dispersion is preferably 0.1 mass% to 70 mass% and more preferably 1.0 mass% to 30 mass% with respect to the total mass of the aqueous dispersion.

The content of the divalent alkali earth metal salt and the trivalent group 13 metal salt in the aqueous dispersion is preferably 20 ppm to 100000 ppm with respect to the total mass of the aqueous dispersion.

In addition, during the preparation of the aqueous dispersion, a surfactant may be further added in order to improve dispersibility.

Examples of the surfactant include the surfactants included in the above-described ink composition.

The content of the surfactant in the aqueous dispersion is preferably 0.1 mass% to 5 mass% with respect to the total mass of the aqueous dispersion.

As a dispersion method, various well-known dispersion methods can be used without any particular limitation. Examples of the dispersion method include a dispersion method using a paint shaker.

[First Mixing Step]

The first mixing step is a step of mixing the aqueous dispersion and other components of the ink composition with each other.

In the first mixing step, the ink composition for ink jet recording according to the present invention can be obtained.

After the first mixing step, a solution obtained after mixing may be filtered through a filter to obtain the ink composition for ink jet recording according to the present invention.

Examples of the other components of the ink composition include the components included in the ink composition such as other colorants, the solvent such as water, the surfactant, or other components.

In the first mixing step, the content of the aqueous dispersion is preferably 10 to 90 mass% with respect to the total mass of the ink composition.

As a mixing method, well-known mixing methods can be used without any particular limitation. Examples of the mixing method include a method of stirring the respective components in a container.

(Second Aspect)

[Second Preparation Step]

The second preparation step is a step of dispersing the specific colorant in water to prepare an aqueous dispersion.

A preferable aspect of the second preparation step is the same as the first preparation step except that the divalent alkali earth metal salt and the trivalent group 13 metal salt are not added.

[Second Mixing Step]

The second mixing step is a step of mixing the aqueous dispersion, at least one of a divalent alkali earth metal salt or a trivalent group 13 metal salt, and other components of the ink composition such that a total content of a divalent alkali earth metal element and a trivalent group 13 metal element is 10 ppm to 50000 ppm with respect to the total mass of the ink composition.

A preferable aspect of the second preparation step is the same as the first preparation step except that the divalent alkali earth metal salt and the trivalent group 13 metal salt are further added for mixing.

<Ink Jet Recording Method>

The ink jet recording method according to the embodiment of the present invention includes a step of applying an ink composition for ink jet recording that is the above-described dispersion according to the embodiment of the present invention to a substrate. The dry material of the dispersion applied to the substrate is a near infrared absorbing image.

In the step of applying an ink composition for ink jet recording that is the above-described dispersion according to the embodiment of the present invention to a substrate using an ink jet method, the ink composition can be selectively applied to the substrate, and a desired near infrared absorbing image can be easily formed.

(Substrate)

The substrate on which the near infrared absorbing image is to be formed is not particularly limited as long as a near infrared absorbing image can be formed. Examples of the substrate include paper, cloth, wood, a metal plate, and a plastic film.

As the paper, for example, plain paper, recycled paper, coated paper, or ink jet recording paper can be used without any particular limitation.

A visible image may be formed on the substrate using an ink jet method or other well-known methods.

The near infrared absorbing image is not particularly limited, and a near infrared absorbing image consisting of a plurality of component patterns (for example, dot patterns or line patterns), in other words, a near infrared absorbing image that is a set of a plurality of component patterns is preferable.

The diameter of the dot pattern is preferably 25 $\mu$m to 70 $\mu$m and more preferably 30 $\mu$m to 60 $\mu$m.

The ink jet method is not particularly limited and may be any one of well-known methods such as an electric charge control method of jetting the ink composition using an electrostatic attraction force, a drop-on-demand method (pressure pulse method) using a vibration pressure of a piezoelectric element, an acoustic ink jet method of jetting the ink composition using a radiation pressure by converting an electrical signal into an acoustic beam and irradiating the ink composition with the acoustic beam, or a thermal ink jet method (Bubble Jet (registered trade name)) of heating the ink composition to form bubbles and using a pressure generated from the bubbles.

As the ink jet method, in particular, an ink jet method described in JP1988-059936A (JP-S54-059936A) can be preferably used, in which a rapid volume change occurs in the ink composition due to the action of thermal energy, and the ink composition is jetted from a nozzle due to a force generated by the stage change.

In addition, the ink jet method can also refer to a method described in paragraphs "0093" to 0105" of JP2003-306623A.

Examples of an ink jet head used in the ink jet method include: a shuttle type that performs recording using a short serial head while causing the head to scan a substrate in a width direction; and a line type that uses a line head in which recording elements are arranged corresponding to the entire region of one side of a substrate.

In the line type, pattern formation can be performed on the entire surface of a substrate by scanning the substrate in a direction perpendicular to a direction in which the recording elements are arranged, and a transport system such as a carriage that scans a short head is unnecessary.

In addition, the movement of the carriage and complex scanning control on the substrate are not necessary, and only the substrate moves. Therefore, an increase in the recording speed can be realized as compared to the shuttle type.

The ink jet recording method according to the embodiment of the present invention is applicable to the shuttle type or the line type but is preferably applicable to the line type.

From the viewpoint of obtaining a high-accuracy pattern, the amount of liquid droplets of the ink composition ejected from the ink jet head is preferably 1 pL (picoliters; hereinafter, the same shall be applied) to 10 pL and more preferably 1.5 pL to 6 pL.
In the near infrared absorbing image, the amount of the specific colorant applied per unit area is preferably 0.05 $g/m^2$ to 1.0 $g/m^2$ and more preferably 0.1 $g/m^2$ to 0.5 $g/m^2$.
The dry material of the ink composition (dispersion) applied to the substrate is formed by drying the ink composition applied to the substrate using a well-known drying method.
In the present disclosure, "drying" refers to volatilizing and removing at least a part of the medium such as water or the organic solvent in the ink composition, and a material obtained by drying the ink composition refers to "dry material".
The drying method may be natural drying or heating drying such as blowing of warm air.
As a sample used for measuring the absorption maximum of the near infrared absorbing image obtained using the ink jet recording method, a dry material obtained by applying the ink composition to OK Top Coat Paper (manufactured by Oji Paper Co., Ltd.) at 0.20 $g/m^2$ and drying the ink composition at 50°C for 10 minutes by blast drying is used.
In the present disclosure, the absorption maximum of the dry material, that is, the formed near infrared absorbing image is obtained by measuring a reflection spectrum using a spectrophotometer UV-3100PC (manufactured by Shimadzu Corporation) including a 150mm φ large integrating sphere attachment LISR-3100 (manufactured by Shimadzu Corporation).

<Recorded Material>

A first aspect of a recorded material according to the present invention is a recorded material including: a substrate; and a near infrared absorbing image that is a dry material of an ink composition that is the dispersion according to the embodiment of the present invention disposed on the substrate.
A second aspect of the recorded material according to the present invention is a recorded material including: a substrate; and a near infrared absorbing image disposed on the substrate, in which the near infrared absorbing image includes the colorant represented by Formula 1, that is, the specific colorant, and an absorption maximum of the near infrared absorbing image is in a range of 700 nm to 1,200 nm.
From the viewpoints of the invisibility and readability of the obtained near infrared absorbing image, it is preferable that an absorption maximum of the dry material of the ink composition according to the embodiment of the present invention in a range of 400 nm to 1,200 nm is in a range of 700 nm to 1,200 nm.
By measuring an optical density in a range of 400 nm to 1,200 nm using the same method of measuring the absorption maximum of the dry material, a value of the absorption maximum can be measured. The optical density is measured using a spectrophotometer UV-3100PC (manufactured by Shimadzu Corporation) including a 150mm φ large integrating sphere attachment LISR-3100 (manufactured by Shimadzu Corporation).
In any one of the aspects, it is preferable that the recorded material according to the present invention is a recorded material that is obtained using the ink jet recording method according to the embodiment of the present invention.
"Recorded material" according to the embodiment of the present invention refers to an aspect including: a substrate; and an image that is a dry material of the ink composition disposed on the substrate. That is, "recorded material" is used as a term including a printed material in which an image obtained using an ink composition as the dispersion according to the embodiment of the present invention is formed on a given substrate that is a recording medium.

[First Aspect of Recorded Material]

(Substrate)

The substrate in the recorded material according to the first aspect of the present invention is the same as the substrate in the ink jet recording method according to the present invention, and a preferable aspect thereof is also the same.

(Near Infrared Absorbing Image)

The near infrared absorbing image in the recorded material according to the first aspect of the present invention is the dry material of the ink composition that is dispersion according to the embodiment of the present invention.
A method of obtaining the dry material using the dispersion that is the ink composition according to the embodiment of the present invention is not particularly limited, and the dry material can be obtained using the method disclosed by the ink jet recording method.
In addition, an absorption maximum of the near infrared absorbing image in the first aspect of the recorded material according to the present invention is preferably in a range of 700 nm to 1,200 nm, more preferably in a range of 710

nm to 1,200 nm, still more preferably in a range of 760 nm to 1,200 nm, and still more preferably in a range of 800 nm to 1,200 nm.

The absorption maximum is measured using the same method as the method of measuring the absorption maximum of the dry material of the ink composition for ink jet recording according to the embodiment of the present invention.

In addition, from the viewpoints of the invisibility and readability of the near infrared absorbing image, in the near infrared absorbing image of the recorded material according to the first aspect of the present invention, an absorption maximum measured in a wavelength range of 400 nm to 1,200 nm is preferably in a range of 700 nm to 1,200 nm from the viewpoint of the infrared absorbing properties of the image.

The absorption maximum is measured using the same method as the method of measuring the absorption maximum of the dry material of the ink composition for ink jet recording according to the embodiment of the present invention.

From the viewpoint of the invisibility of the near infrared absorbing image, it is preferable that an optical density (OD) of the near infrared absorbing image in the recorded material according to the first aspect of the present invention at 450 nm is 1/7 or lower of an optical density of the near infrared absorbing image at an absorption maximum measured using the above-described method. It is more preferable the optical density is 1/8 or lower of the optical density at the absorption maximum, and it is still more preferable the optical density is 1/9 or lower of the optical density at the absorption maximum.

In addition, from the viewpoint of readability, the optical density of the near infrared absorbing image at the absorption maximum is preferably 0.1 or higher, more preferably 0.3 or higher, and still more preferably 0.5 or higher.

The optical density is measured using the same method as the method of measuring the optical density of the dry material of the near infrared absorbing image (the dry material of the ink composition) according to the embodiment of the present invention.

In the near infrared absorbing image in the recorded material according to the first aspect of the present invention, the content of the specific colorant per unit area is preferably 0.05 $g/m^2$ to 1.0 $g/m^2$ and more preferably 0.1 $g/m^2$ to 0.5 $g/m^2$.

[Second Aspect of Recorded Material]

(Substrate)

The substrate in the recorded material according to the second aspect of the present invention is the same as the substrate described in the ink jet recording method according to the embodiment of the present invention, and a preferable aspect thereof is also the same.

(Near Infrared Absorbing Image)

The specific colorant included in the near infrared absorbing image in the recorded material according to the second aspect of the present invention is the same as the specific colorant (the colorant represented by Formula 1) included in the dispersion according to the embodiment of the present invention, and a preferable aspect thereof is also the same.

In the near infrared absorbing image in the recorded material according to the embodiment of the present invention, it is preferable that the specific colorant is included in the state of a J-aggregate. Whether or not the colorant represented by any one of Formulae 1 to 3 is a J-aggregate can be determined using the same method as the method of determining whether the colorant in the dry material of the ink composition for ink jet recording according to the embodiment of the present invention is in a J-aggregate state or a non-aggregate state.

In addition, in the near infrared absorbing image in the recorded material according to the second aspect of the present invention, the absorption maximum of the near infrared absorbing image, the absorption maximum in a wavelength range of 400 nm to 1,200 nm, the ratio of the optical density (OD) at 450 nm to the optical density at the absorption maximum, the optical density at the absorption maximum, and the content of the specific colorant per unit area have the same definitions and the same preferable aspects as those of the recorded material according to the first aspect of the present invention, respectively.

(Method of Reading Near Infrared Absorbing Image)

By applying an infrared reading method to the near infrared absorbing image included in the recorded material according to the embodiment of the present invention, whether or not the formed image is a near infrared absorbing image can be determined, and the near infrared absorbing image can be read even in a case where it is an invisible image.

A method of reading the near infrared absorbing image is not particularly limited, and a well-known method can be

used.

Examples of the method include a method of reading the near infrared absorbing image by irradiating the near infrared absorbing image with infrared light from an oblique direction, reading reflected light using an optical receiver provided in the vicinity of an infrared output portion, and comparing the irradiation light to the reflected light to determine whether or not absorption of infrared light is present.

As a light source used for reading the near infrared absorbing image, for example, a laser or a light emitting diode (LED) is used.

A wavelength used for reading the near infrared absorbing image may be in a range of 700 nm to 1,200 nm. It is preferable that the near infrared absorbing image is read, for example, using a light source of 850 nm that is a wavelength of a generic LED.

Further described but not part of the present invention is a compound represented by Formula 1 as the specific colorant included in the dispersion according to the embodiment of the present invention.

<Compound represented by Formula 1>

The compound according to the embodiment of the present disclosure (not falling under the claimed scope) is represented by the following Formula 1.

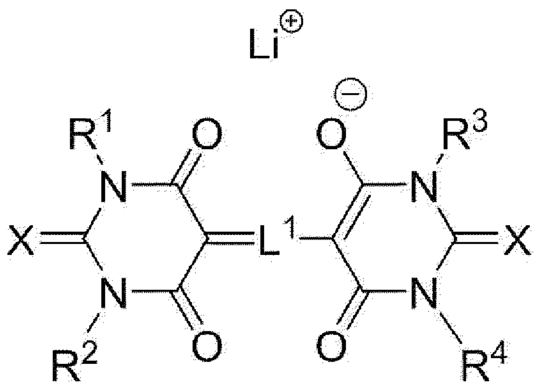

Formula 1

In Formula 1, $L^1$ represents a methine chain consisting of 5 or 7 methine groups, and a methine group at a center of the methine chain has a substituent represented by the following Formula A.

$R^1$, $R^2$, $R^3$, and $R^4$ each independently represent a hydrogen atom, an alkyl group, an aryl group, or a monovalent heterocyclic group, and X's each independently represent an oxygen atom, a sulfur atom, or a selenium atom.

**$*-S^A-T^A$** **Formula A**

In Formula A, $S^A$ represents a single bond, an alkylene group, an alkenylene group, an alkynylene group, -O-, -S-, $-NR^{L1}-$, -C(=O)-, -C(=O)O-, $-C(=O)NR^{L1}-$, $-S(=O)_2-$, $-OR^{L2}-$, or a group including a combination of at least two thereof, $R^{L1}$ represents a hydrogen atom, a halogen atom, an alkyl group, an aryl group, or a monovalent heterocyclic group, $R^{L2}$ represents an alkylene group, an arylene group, or a divalent heterocyclic group, $T^A$ represents a hydrogen atom, a halogen atom, an alkyl group, an aryl group, a monovalent heterocyclic group, a cyano group, a hydroxy group, a formyl group, a carboxy group, an amino group, a thiol group, a sulfo group, a phosphoryl group, a boryl group, a vinyl group, an ethynyl group, a trialkylsilyl group, or a trialkoxysilyl group, and * represents a binding site to the methine group at the center of the methine chain.

In the compound, it is preferable that, in Formula 1, at least one selected from the group consisting of $R^1$, $R^2$, $R^3$, and $R^4$ is a hydrogen atom.

Further, it is more preferable that the compound represented by Formula 1 is a compound represented by the following Formula 2.

The compound represented by Formula 1 has the structure represented by Formula 2 such that the absorption wavelength is shifted to a longer wavelength side, and a near infrared absorbing colorant having higher invisibility can be obtained.

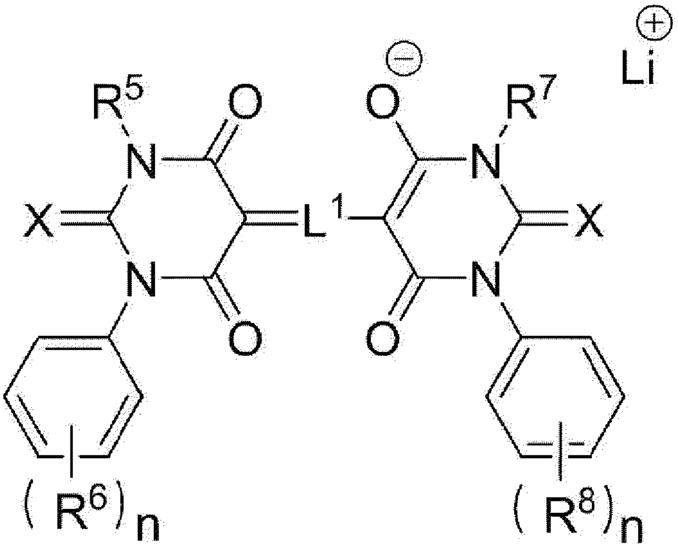

Formula 2

$L^1$, $R^5$, $R^6$, $R^7$, $R^8$, n in Formula 2 have the same definition and the same preferable aspect as those of $L^1$, $R^5$, $R^6$, $R^7$, $R^8$, n in Formula 2 described above regarding the dispersion according to the embodiment of the present disclosure.

In particular, it is preferable that at least one selected from the group consisting of $R^5$, $R^6$, $R^7$, and $R^8$ in Formula 2 represent a hydrogen-bonding group. At least one selected from the group consisting of $R^5$, $R^6$, $R^7$, and $R^8$ represent a hydrogen-bonding group such that the water fastness and moist heat resistance of the formed image is further improved.

The details and the preferable aspects of each of the groups in Formula 2 are as described above.

Examples

Hereinafter, the present disclosure will be described in detail using Examples. Materials, used amounts, ratios, treatment details, treatment procedures, and the like shown in the following examples can be appropriately changed within a range not departing from the scope of the present disclosure. Accordingly, the scope of the present disclosure is not limited to the following specific examples. In the following Examples, unless specified otherwise, "part(s)" and "%" represent "part(s) by mass" and "mass%".

Hereinafter, Compounds 1 to 115 according to Examples represent the same compounds as Compounds 1 to 115 shown in the specific examples of the specific colorant represented by Formula 1.

[Synthesis of Compound 1]

The compound 1 was synthesized according to the following scheme.

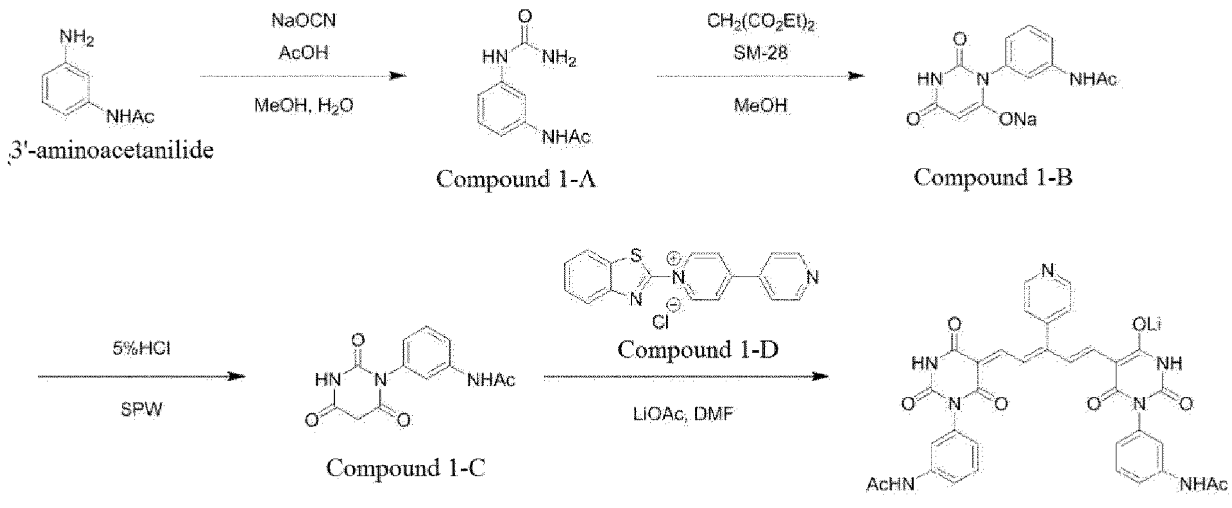


3'-aminoacetanilide

Compound 1-A

Compound 1-B

Compound 1-C

Compound 1-D

Compound 1

225.0 g of 3'-aminoacetanilide, 594.0 g of methanol, 139.7 g of sodium cyanide, 1350 g of water, and 135.3 g of acetic acid (AcOH) were added to a flask, and the solution was stirred at 20°C for 1 hour. By separating crystals precipitated in the reaction solution by filtration, 216.6 g of a compound 1-A was obtained.

215.0 g of the compound 1-A, 3020 g of methanol, 178.2 g of diethyl malonate, and 214.6 g of sodium methoxide 28% methanol solution (SM-28) were added to a flask, and the solution was stirred at 65°C for 6 hours.

By returning the temperature of the obtained reaction solution to 20°C and separating crystals precipitated in the reaction solution by filtration, 198.0 g of a compound 1-B was obtained.

195.0 g of the obtained compound 1-B, 975.0 g of water were added to a flask, 5% hydrochloric acid aqueous solution was added until the pH of the reaction solution was 2.0, and the solution was stirred at 20°C for 1 hour.

By separating crystals precipitated in the reaction solution by filtration, 175.0 g of a compound 1-C was obtained.

25.0 g of the obtained compound 1-C, 136.2 g of N,N-dimethylformamide, and 12.7 g of lithium acetate (LiOAc) were added to a flask, the solution was stirred at 20°C for 10 minutes, 15.6 g of a compound 1-D was added, and the solution was stirred at 20°C for 4 hours. 156.3 g of water was added to the obtained reaction solution, the solution was stirred at 20°C for 1 hour, 247.5 g of methanol was added, and the solution was stirred at 20°C for 1 hour.

By separating crystals precipitated in the reaction solution by filtration, 28.4 g of the compound 1 was obtained.

(Verification of Compound 1)

NMR spectrum of Compound 1: $^1$H-NMR (heavy DMSO) δ 10.7 (2H,s), 10.0 (2H,s), 8.7 (2H,m), 7.9-7.6 (2H,m), 7.6-7.0 (10H,m), 6.9-6.7 (2H,m), 2.0 (6H,s)

It was verified from the NMR spectrum that the obtained compound 1 had the structure of the compound 1 as the above-described exemplary compound.

(Synthesis of Compounds 2 to 115)

Compounds 2 to 115 were obtained by performing the same synthesis as the synthesis of the compound 1, except that 3'-aminoacetanilide and the compound 1-D were changed to compounds having the corresponding structures.

[Synthesis of Compound 2]

The compound 2 was synthesized according to the following scheme.

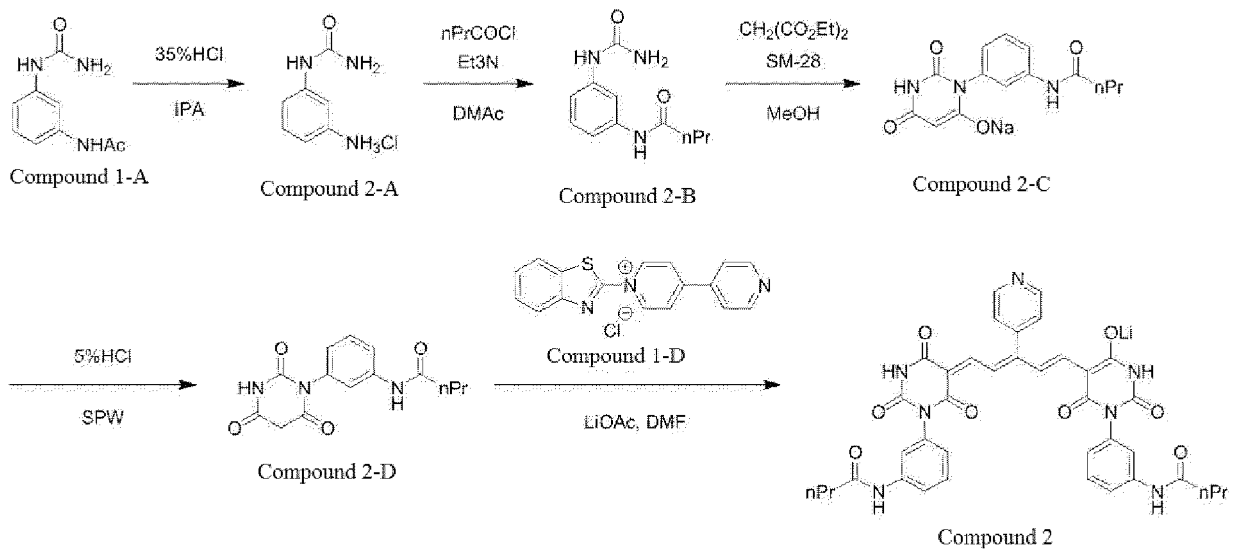

Compound 1-A
Compound 2-A
Compound 2-B
Compound 2-C
Compound 2-D
Compound 1-D
Compound 2

225.0 g of the compound 1-A, 1190 g of 2-propanol (IPA), and 850 g of 35% hydrochloric acid were added to a flask, and the solution was stirred at 65°C for 12 hours.

By returning the temperature of the obtained reaction solution to 20°C and separating crystals precipitated in the reaction solution by filtration, 199.0 g of a compound 2-A was obtained.

195.0 g of the obtained compound 2-A, 733.0 g of N,N-dimethylacetamide, and 105.0 g triethylamine ($Et_3N$) were added to a flask, 113.0 g of propionyl chloride (nPrCOCl) was added at 0°C, and the solution was stirred at room temperature for 1 hour. 4875 g of water was added to the obtained reaction solution, the solution was stirred for 30 minutes,

and crystals precipitated in the reaction solution were separated by filtration. As a result, 223.0 g of a compound 2-B was obtained.

200.0 g of the obtained compound 2-B, 2800 g of methanol, 434.3 g of diethyl malonate, and 523.2 g of sodium methoxide 28% methanol solution (SM-28) were added to a flask, and the solution was stirred at 65°C for 4 hours.

The temperature of the obtained reaction solution was returned to 20°C, 9500 g of ethyl acetate was added, and the solution was stirred for 30 minutes. By separating crystals precipitated in the reaction solution by filtration, 248.5 g of a compound 2-C was obtained.

200.0 g of the obtained compound 2-C and 1000 g of water (super pure water: SPW) were added to a flask, 5% hydrochloric acid aqueous solution was added until the pH of the reaction solution was 2.0, and the solution was stirred at 20°C for 1 hour.

By separating crystals precipitated in the reaction solution by filtration, 182.0 g of a compound 2-D was obtained.

25.0 g of the obtained compound 2-D, 136.2 g of N,N-dimethylformamide (DMF), and 11.4 g of lithium acetate (LiOAc) were added to a flask, the solution was stirred at 20°C for 10 minutes, 14.1 g of the compound 1-D was added, and the solution was stirred at 20°C for 4 hours. 156.3 g of water was added to the obtained reaction solution, the solution was stirred at 20°C for 1 hour, 247.5 g of methanol was added, and the solution was stirred at 20°C for 1 hour.

By separating crystals precipitated in the reaction solution by filtration, 28.1 g of the compound 2 was obtained.

Verification of Compound 2)

NMR spectrum of Compound 2: $^1$H-NMR (heavy DMSO) $\delta$ 10.7 (2H,s), 9.9 (2H,s), 8.7 (2H,m), 7.9-7.6 (2H,m), 7.6-7.1 (10H,m), 6.9-6.7 (2H,m), 2.3 (4H,t,J=7.0 Hz), 1.6 (4H,m), 0.9 (6H,t,J=8.0 Hz)

It was verified from the NMR spectrum that the obtained compound 2 had the structure of the compound 2 as the above-described exemplary compound.

[Synthesis of Compound 3]

The compound 3 was synthesized according to the following scheme.

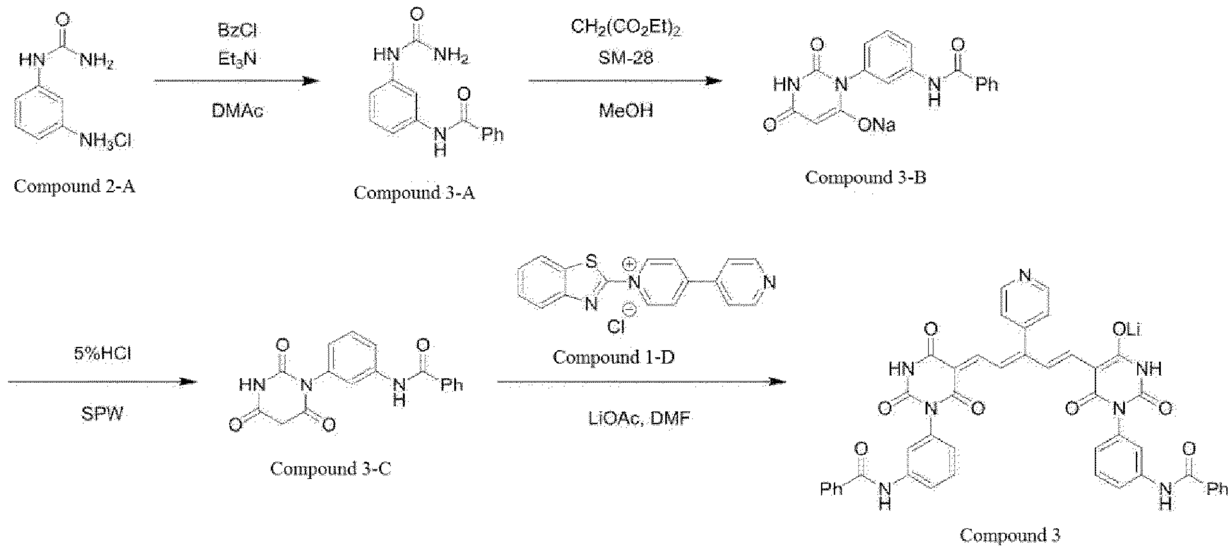


Compound 2-A
Compound 3-A
Compound 3-B
Compound 3-C
Compound 1-D
Compound 3

180.0 g of the compound 2-A, 676.8 g of N,N-dimethylacetamide (DMAc), and 97.1 g triethylamine ($Et_3N$) were added to a flask, 134.9 g of benzoyl chloride (BzCl) was added at 0°C, and the solution was stirred at room temperature for 1 hour.

4500 g of water was added to the obtained reaction solution, the solution was stirred for 30 minutes, and crystals precipitated in the reaction solution were separated by filtration. As a result, 235.2 g of a compound 3-A was obtained.

200.0 g of the obtained compound 3-A, 2800 g of methanol (MeOH), 376.5 g of diethyl malonate ($CH_2(CO_2Et)_2$, and 453.5 g of sodium methoxide 28% methanol solution (SM-28) were added to a flask, and the solution was stirred at 65°C for 4 hours.

The temperature of the obtained reaction solution was returned to 20°C, 9500 g of ethyl acetate was added, and the solution was stirred for 30 minutes. By separating crystals precipitated in the reaction solution by filtration, 238.2 g of a compound 3-B was obtained.

200.0 g of the obtained compound 3-B, 1000 g of water were added to a flask, 5% hydrochloric acid aqueous solution was added until the pH of the reaction solution was 2.0, and the solution was stirred at 20°C for 1 hour.

By separating crystals precipitated in the reaction solution by filtration, 183.5 g of a compound 3-C was obtained.

25.0 g of the obtained compound 3-C, 136.2 g of N,N-dimethylformamide, and 10.2 g of lithium acetate were added to a flask, the solution was stirred at 20°C for 10 minutes, 12.6 g of the compound 1-D was added, and the solution was stirred at 20°C for 4 hours. 156.3 g of water was added to the obtained reaction solution, the solution was stirred at 20°C for 1 hour, 247.5 g of methanol was added, and the solution was stirred at 20°C for 1 hour.

By separating crystals precipitated in the reaction solution by filtration, 28.5 g of the compound 3 was obtained.

(Verification of Compound 3)

NMR spectrum of Compound 3: $^1$H-NMR (heavy DMSO) $\delta$ 10.7 (2H,s), 10.3 (2H,s), 8.7 (2H,m), 8.0-7.9 (4H,m), 7.9-7.7 (4H,m), 7.7-7.5 (8H,m), 7.5-7.1 (6H,m), 7.0-6.8 (2H,m)

It was verified from the NMR spectrum that the obtained compound 3 had the structure of the compound 3 as the above-described exemplary compound.

[Synthesis of Compound 4]

The compound 4 was synthesized according to the following scheme.

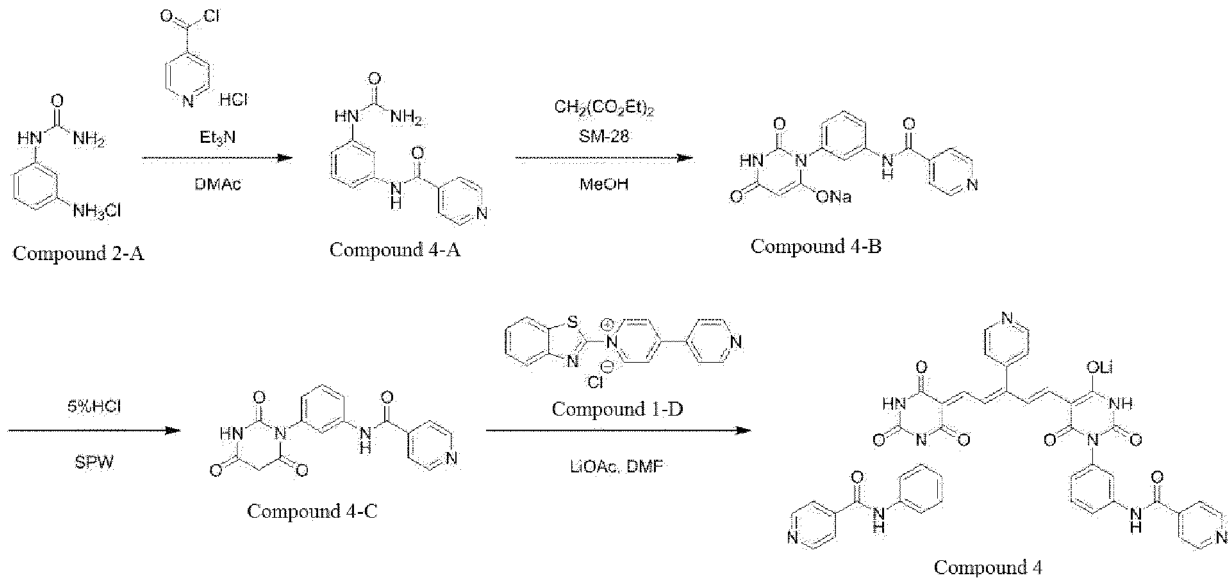


Compound 2-A
Compound 4-A
Compound 4-B
Compound 4-C
Compound 4

190.0 g of the compound 2-A, 714.4 g of N,N-dimethylacetamide, and 102.5 g of triethylamine were added to a flask, 180.3 g of isonicotinoyl chloride hydrochloride was added at 0°C, and the solution was stirred at room temperature for 1 hour.

4500 g of water was added to the obtained reaction solution, the solution was stirred for 30 minutes, and crystals precipitated in the reaction solution were separated by filtration. As a result, 235.2 g of a compound 4-A was obtained.

200.0 g of the obtained compound 4-A, 2800 g of methanol, 375.0 g of diethyl malonate, and 451.7 g of sodium methoxide 28% methanol solution were added to a flask, and the solution was stirred at 65°C for 4 hours.

The temperature of the obtained reaction solution was returned to 20°C, 9500 g of ethyl acetate was added, and the solution was stirred for 30 minutes. By separating crystals precipitated in the reaction solution by filtration, 243.0 g of a compound 4-B was obtained.

200.0 g of the obtained compound 4-B, 1000 g of water were added to a flask, 5% hydrochloric acid aqueous solution was added until the pH of the reaction solution was 2.0, and the solution was stirred at 20°C for 1 hour.

By separating crystals precipitated in the reaction solution by filtration, 168.5 g of a compound 4-C was obtained.

25.0 g of the obtained compound 4-C, 136.2 g of N,N-dimethylformamide, and 10.2 g of lithium acetate were added to a flask, the solution was stirred at 20°C for 10 minutes, 12.6 g of the compound 1-D was added, and the solution was stirred at 20°C for 4 hours. 156.3 g of water was added to the obtained reaction solution, the solution was stirred at 20°C for 1 hour, 247.5 g of methanol was added, and the solution was stirred at 20°C for 1 hour.

By separating crystals precipitated in the reaction solution by filtration, 26.9 g of the compound 4 was obtained.

(Verification of Compound 4)

NMR spectrum of Compound 4: $^1$H-NMR (heavy DMSO) $\delta$ 10.7 (2H,s), 10.3 (2H,s), 8.7 (2H,m), 8.0-7.9 (4H,m), 7.9-7.7 (4H,m), 7.7-7.5 (8H,m), 7.5-7.1 (6H,m), 7.0-6.8 (2H,m)

It was verified from the NMR spectrum that the obtained compound 4 had the structure of the compound 4 as the above-described exemplary compound.

[Synthesis of Compound 7]

The compound 7 was synthesized according to the following scheme.

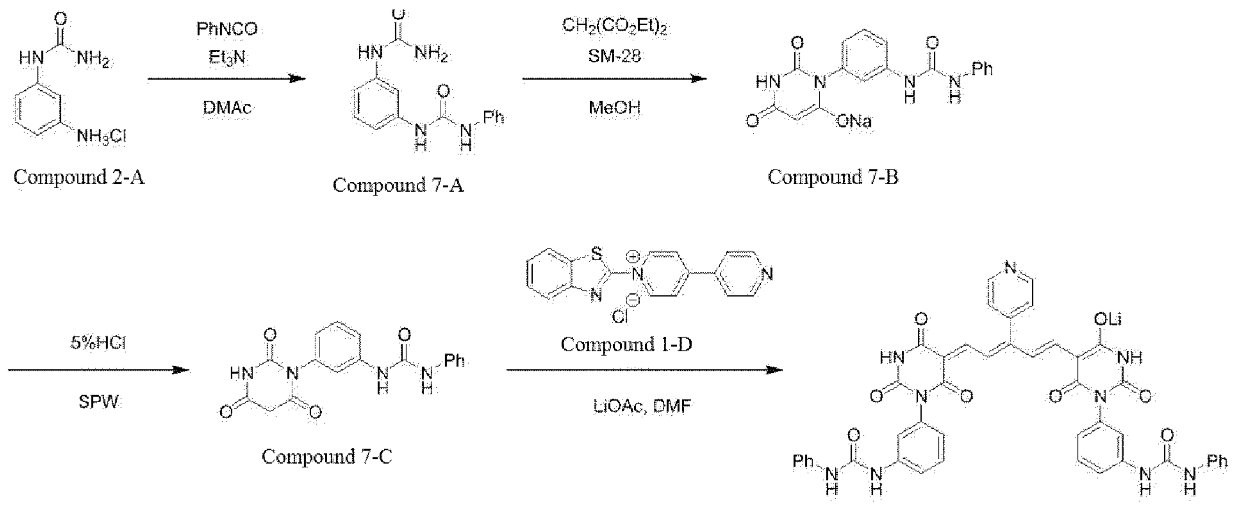

Compound 2-A
Compound 7-A
Compound 7-B
Compound 7-C
Compound 1-D
Compound 7

170.0 g of the compound 2-A, 639.2 g of N,N-dimethylacetamide, and 97.1 g of triethylamine were added to a flask, 107.9 g of phenyl isocyanate (PhNCO) was added at 0°C, and the solution was stirred at room temperature for 1 hour.

4500 g of water was added to the obtained reaction solution, the solution was stirred for 30 minutes, and crystals precipitated in the reaction solution were separated by filtration. As a result, 225.3 g of a compound 7-A was obtained.

200.0 g of the obtained compound 7-A, 2800 g of methanol, 355.6 g of diethyl malonate, and 428.3 g of sodium methoxide 28% methanol solution were added to a flask, and the solution was stirred at 65°C for 4 hours.

The temperature of the obtained reaction solution was returned to 20°C, 9500 g of ethyl acetate was added, and the solution was stirred for 30 minutes. By separating crystals precipitated in the reaction solution by filtration, 235.3 g of a compound 7-B was obtained.

200.0 g of the obtained compound 7-B, 1000 g of water were added to a flask, 5% hydrochloric acid aqueous solution was added until the pH of the reaction solution was 2.0, and the solution was stirred at 20°C for 1 hour.

By separating crystals precipitated in the reaction solution by filtration, 182.2 g of a compound 7-C was obtained.

25.0 g of the obtained compound 7-C, 136.2 g of N,N-dimethylformamide, and 9.8 g of lithium acetate were added to a flask, the solution was stirred at 20°C for 10 minutes, 12.1 g of the compound 1-D was added, and the solution was stirred at 20°C for 4 hours. 156.3 g of water was added to the obtained reaction solution, the solution was stirred at 20°C for 1 hour, 247.5 g of methanol was added, and the solution was stirred at 20°C for 1 hour.

By separating crystals precipitated in the reaction solution by filtration, 27.3 g of the compound 7 was obtained.

(Verification of Compound 7)

NMR spectrum of Compound 7: $^1$H-NMR (heavy DMSO) $\delta$ 10.7 (2H,s), 8.7-8.6 (6H,m), 7.9-7.7 (2H,m), 7.5-7.1 (18H,m), 7.0-6.9 (2H,m), 6.9-6.7 (2H,m)

It was verified from the NMR spectrum that the obtained compound 7 had the structure of the compound 7 as the above-described exemplary compound.

[Synthesis of Compound 11]

The compound 11 was synthesized according to the following scheme.

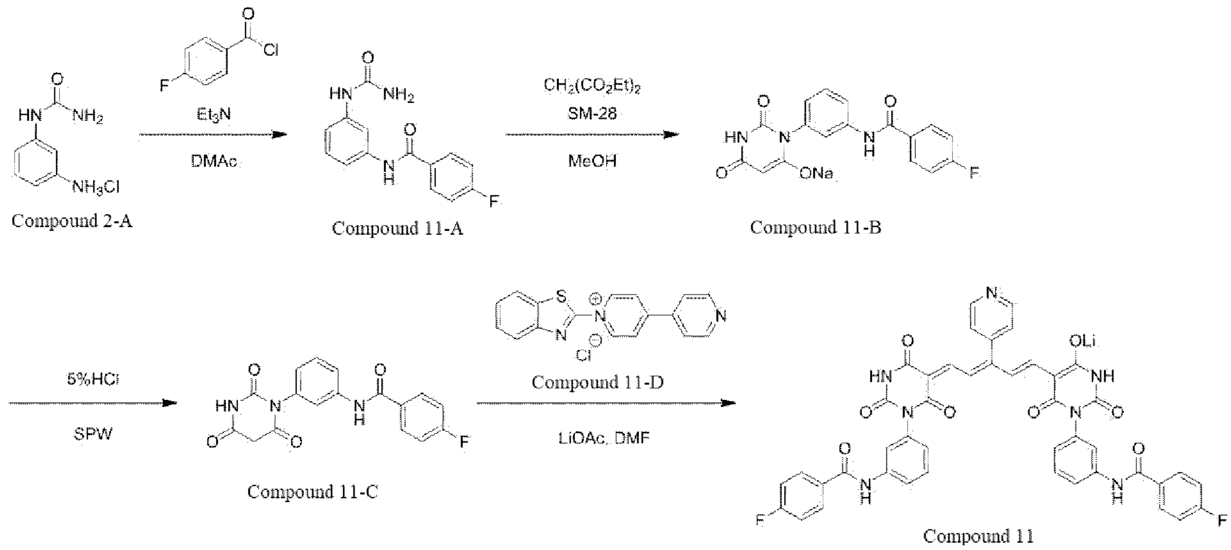

Compound 2-A
Compound 11-A
Compound 11-B
Compound 11-C
Compound 11-D
Compound 11

160.0 g of the compound 2-A, 601.6 g of N,N-dimethylacetamide, and 86.3 g of triethylamine were added to a flask, 135.2 g of 4-fluorobenzoyl chloride was added at 0°C, and the solution was stirred at room temperature for 1 hour.

4000 g of water was added to the obtained reaction solution, the solution was stirred for 30 minutes, and crystals precipitated in the reaction solution were separated by filtration. As a result, 221.5 g of a compound 11-A was obtained.

200.0 g of the obtained compound 11-A, 2800 g of methanol, 351.7 g of diethyl malonate, and 423.6 g of sodium methoxide 28% methanol solution were added to a flask, and the solution was stirred at 65°C for 4 hours.

The temperature of the obtained reaction solution was returned to 20°C, 9500 g of ethyl acetate was added, and the solution was stirred for 30 minutes. By separating crystals precipitated in the reaction solution by filtration, 225.0 g of a compound 11-B was obtained.

200.0 g of the obtained compound 11-B, 1000 g of water were added to a flask, 5% hydrochloric acid aqueous solution was added until the pH of the reaction solution was 2.0, and the solution was stirred at 20°C for 1 hour.

By separating crystals precipitated in the reaction solution by filtration, 176.6 g of a compound 11-C was obtained.

25.0 g of the obtained compound 11-C, 136.2 g of N,N-dimethylformamide, and 9.7 g of lithium acetate were added to a flask, the solution was stirred at 20°C for 10 minutes, 11.9 g of the compound 1-D was added, and the solution was stirred at 20°C for 4 hours. 156.3 g of water was added to the obtained reaction solution, the solution was stirred at 20°C for 1 hour, 247.5 g of methanol was added, and the solution was stirred at 20°C for 1 hour.

By separating crystals precipitated in the reaction solution by filtration, 26.7 g of the compound 11 was obtained.

(Verification of Compound 11)

NMR spectrum of Compound 11: $^1$H-NMR (heavy DMSO) $\delta$ 10.7 (2H,s), 10.3 (2H,s), 8.7 (2H,m), 8.0 (4H,m), 7.9-7.7 (4H,m), 7.6-7.5 (2H,m), 7.5-7.1 (10H,m), 7.0-6.8 (2H,m)

It was verified from the NMR spectrum that the obtained compound 11 had the structure of the compound 11 as the above-described exemplary compound.

[Synthesis of Compound 37]

The compound 37 was synthesized according to the following scheme.

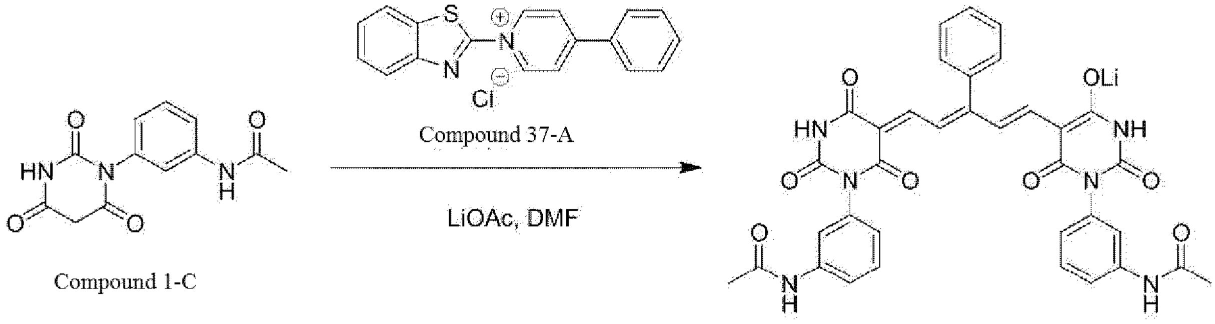


Compound 37-A

Compound 1-C

Compound 37

The compound 1-C as an intermediate was obtained using the same synthesis method as that of the compound 1.

25.0 g of the obtained compound 1-C, 136.2 g of N,N-dimethylformamide, and 12.6 g of lithium acetate were added to a flask, the solution was stirred at 20°C for 10 minutes, 15.5 g of a compound 37-a was added, and the solution was stirred at 20°C for 4 hours. 156.3 g of water was added to the obtained reaction solution, the solution was stirred at 20°C for 1 hour, 247.5 g of methanol was added, and the solution was stirred at 20°C for 1 hour.

By separating crystals precipitated in the reaction solution by filtration, 29.4 g of the compound 37 was obtained.

(Verification of Compound 37)

NMR spectrum of Compound 37: $^1$H-NMR (heavy DMSO) $\delta$ 10.7 (2H,s), 10.0 (2H,s), 8.0-7.6 (2H,m), 7.6-7.1 (13H,m), 6.9-6.7 (2H,m), 2.0 (6H,s)

It was verified from the NMR spectrum that the obtained compound 37 had the structure of the compound 37 as the above-described exemplary compound.

<Near Infrared Absorbing Dispersion: Preparation of Ink Composition>

(Example 1)

The respective components described in the following composition were dispersed according to the following (dispersion method 1), (dispersion method 2), and (dispersion method 3) to obtain three ink compositions including the specific colorant.

-Composition-

·Specific colorant (compound 1): 0.5 parts by mass
·Super pure water (specific resistance value: 18 MΩ·cm or higher): 78.8 parts by mass
·Propylene glycol: 19.7 parts by mass
·OLFINE E1010: 1 part by mass

Here, OLFINE E1010 was an acetylenic glycol surfactant manufactured by Nissin Chemical Co., Ltd.

(Dispersion Method 1)

The respective components having the above-described composition was stirred at 25°C (normal temperature) for 2 hours using a stirrer and a stirring bar to obtain an ink composition.

(Dispersion Method 2)

The respective components having the above-described composition was stirred at 25°C (normal temperature) for 2 hours using a paint shaker to obtain an ink composition.

(Dispersion Method 3)

The respective components having the above-described composition was stirred at 25°C (normal temperature) for 5 hours using a paint shaker to obtain an ink composition.

[Examples 2 to 18, 109, and 112 to 115; Reference Examples 19 to 108, 110, and 111]

Three ink compositions according to each of Examples 2 to 18, 109, and 112 to 115 and Reference Examples 19 to 108, 110, and 111 were prepared using the same preparation method as that of the ink composition according to Example 1, except that the compound 1 used in the above-described composition was changed to each of the compounds 2 to 115.

(Comparative Example 1)

An ink composition according to Comparative Example 1 was prepared using the same method as described in Example 1 of JP2008-144004A. A colorant included in the ink composition according to Comparative Example 1 (a colorant (20) described in paragraph "0030" of JP2008-144004A) was the same as the colorant compound having the structure represented by Formula 1, except that the counter cation was $1/2Mg^{2+}$.

(Comparative Example 2)

An ink composition according to Comparative Example 2 was prepared using the same method as that of Ink I-1 described in Example of JP2002-294107A.

(Comparative Example 3)

An ink composition according to Comparative Example 3 was prepared under the same conditions as in Example 1, except that the following solid dispersed dye 1 was used instead of Compound 1. The following solid dispersed dye 1 was synthesized using the same method as described in JP1999-282136A (JP-H11-282136A).

Solid Dispersed Dye 1

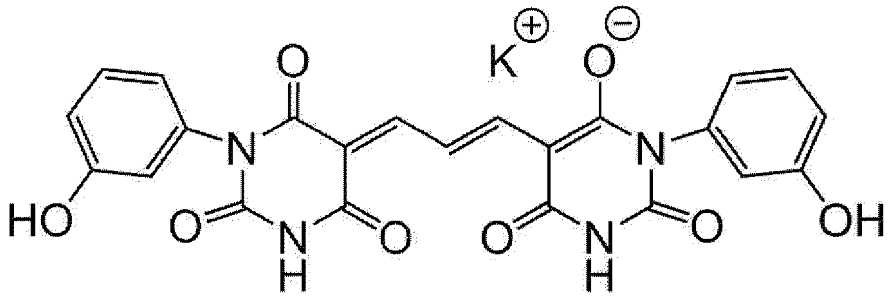

<Preparation of Recorded Material>

Each of the ink compositions according to Examples 1 to 18, 109, and 112 to 115 and Reference Examples 19 to 108, 110, and 111 and Comparative Examples 1 to 3 obtained using the above-described method was charged into an ink tank of an ink jet recording device (DMP-2831, manufactured by Fujifilm Dimatix Inc.), and was applied from an ink jet head to OK Top Coat Paper (manufactured by Oji Paper Co., Ltd.) to record a solid image. As a result, each of recorded materials A-1 to A-115 and comparative recorded materials CA-1 to CA-3 was obtained.

"Solid image" refers to a surface image that is formed by applying an ink composition having a halftone dot rate of 100%.

<Evaluation>

[Measurement of Properties]

The following measurement and evaluation were obtained on the obtained ink compositions according to Examples 1 to 18, 109, and 112 to 115 and Reference Examples 19 to 108, 110, and 111, the ink compositions according to Comparative Examples 1 to 3, and the recorded materials A-1 to A-115 and the comparative recorded materials CA-1 to CA-3. The results of the measurement and evaluation are shown in Tables 5 to 9 below.
In the column "Compound Used" of Tables 5 to 9, the kind of the specific colorant included in the ink composition was shown using the reference numeral of the exemplary compound. In addition, the ink compositions according to Comparative Examples 1 to 3 did not include the specific colorant and were represented by "-"representing "not including".
For the evaluation of the properties other than dispersibility, each of the ink compositions prepared using the dispersion method 2 was used.

[Dispersibility]

An ink composition was prepared using each of the dispersions prepared using the dispersion methods 1 to 3, the ink composition was charged into an ink tank of an ink jet recording device (DMP-2831, manufactured by Fujifilm Dimatix Inc.), and ink jettability was evaluated using the following method. The evaluation result was set as an index for dispersibility.
By observing an ink composition jetting portion of the ink jet head by visual inspection while jetting the ink composition from the ink jet head, the ink jettability was evaluated based on the following evaluation standards.
In the following description, "Defective Nozzle Number Ratio (%)" refers to a ratio of the number of defective nozzles to the number of all the nozzles.

-Evaluation Standards of Ink Jettability-

1: the defective nozzle number ratio was lower than 10%
2: the defective nozzle number ratio was 10% or higher

-Evaluation Standards of Dispersibility-

A: the ink jettability was 1 in all the dispersion methods
B: the ink jettability was 1 in two of the dispersion methods
C: the ink jettability was 1 in one of the dispersion methods
D: the ink jettability was 2 in all the dispersion methods

[Invisibility]

Invisibility was evaluated using the recorded materials A-1 to A-115 and the comparative recorded materials CA-1 to CA-3. Regarding invisibility, the optical density (OD) at 450 nm and the optical density at the absorption maximum were measured using a spectrophotometer UV-3100PC (manufactured by Shimadzu Corporation) including a 150mm φ large integrating sphere attachment LISR-3100 (manufactured by Shimadzu Corporation) and were determined based on the following evaluation standards. The results are shown in Tables 5 to 9.
In a case where the evaluation result is A, B, or C, there is no problem in practice. A or B is preferable, and A is more preferable.

-Evaluation Standards-

A: "Optical density at 450 nm/Optical density at Absorption Maximum" was 1/10 (0.1) or lower
B: "Optical density at 450 nm/Optical density at Absorption Maximum" was higher than 1/10 and 1/7 (0.14) or lower
C: "Optical density at 450 nm/Optical density at Absorption Maximum" was higher than 1/7 and 1/5 (0.2) or lower
D: "Optical density at 450 nm/Optical density at Absorption Maximum" was higher than 1/5

[Light Fastness]

Under the same conditions as those of the recorded materials A-1 to A-115 and the comparative recorded materials CA-1 to CA-3, three recorded materials were prepared using each of the ink compositions for ink jet recording such that the optical densities (OD; reflection densities) at the absorption maximum were 0.5, 1, and 1.5, respectively. By adjusting the jetting amount of the ink composition for ink jet recording, the optical density can be adjusted.
Each of the recorded materials was irradiated with xenon light (85000 lx) using a weather meter (ATLAS C. I65) for 6 days. The optical density of the recorded material at the absorption maximum was measured before and after the irradiation of xenon light, and "(Optical Density after Irradiation)/(Optical Density before Irradiation)=Colorant Residue Rate" was evaluated.
All the optical densities were measured using a spectrophotometer UV-3100PC (manufactured by Shimadzu Corporation) including a 150mm φ large integrating sphere attachment LISR-3100.
In a case where the evaluation result is A, B, or C, there is no problem in practice. A or B is preferable, and A is more preferable.

-Evaluation Standards-

A: the colorant residue rate was 90% or higher at all the densities
B: the colorant residue rate was 75% or higher and lower than 90% at all the densities
C: the colorant residue rate was lower than 75% at at least one density but was 60% or higher at all the densities
D: the colorant residue rate was lower than 60% at at least one density

[Moist Heat Resistance]

Using the same method as the method of preparing the recorded material in the evaluation of light fastness, three recorded materials were prepared using each of the ink jet recording inks such that the optical densities (OD; reflection densities) at the absorption maximum were 0.5, 1, and 1.5, respectively.
Each of the recorded materials was left to stand in a box set to 60°C and a humidity of 90% for 7 days. The optical density of the image after standing was measured, and "(Optical Density after Standing)/(Optical Density before Standing) =Colorant Residue Rate" was evaluated.
All the optical densities were measured using a spectrophotometer UV-3100PC (manufactured by Shimadzu Corporation) including a 150mm φ large integrating sphere attachment LISR-3100.
In a case where the evaluation result is A, B, or C, there is no problem in practice. A or B is preferable, and A is more preferable.

-Evaluation Standards-

A: the colorant residue rate was 90% or higher at all the densities
B: the colorant residue rate was 75% or higher and lower than 90% at all the densities
C: The colorant residue rate was lower than 75% at at least one density but was 60% or higher at all the densities
D: The colorant residue rate was lower than 60% at at least one density

[Table 5]

| | Specific Colorant | Ink Composition | Recorded Material (Near Infrared Absorbing image) | | |
|---|---|---|---|---|---|
| | | Dispersibility | Invisibility | Light Fastness | Moist Heat Resistance |
| Example1 | Compound 1 | A | A | A | A |
| Example2 | Compound 2 | A | A | A | A |
| Example3 | Compound 3 | A | A | A | A |

(continued)

| | Specific Colorant | Ink Composition | Recorded Material (Near Infrared Absorbing image) | | |
|---|---|---|---|---|---|
| | | Dispersibility | Invisibility | Light Fastness | Moist Heat Resistance |
| Example4 | Compound 4 | A | A | A | A |
| Example5 | Compound 5 | A | A | A | A |
| Example6 | Compound 6 | A | A | A | A |
| Example7 | Compound 7 | A | A | A | A |
| Example8 | Compound 8 | A | A | A | A |
| Example9 | Compound 9 | A | A | A | A |
| Example10 | Compound 10 | A | A | A | A |
| Example11 | Compound 11 | A | A | A | A |
| Example12 | Compound 12 | A | A | A | A |
| Example13 | Compound 13 | A | A | A | A |
| Example14 | Compound 14 | A | A | A | A |
| Example15 | Compound 15 | A | A | A | A |
| Example16 | Compound 16 | A | A | A | A |
| Example17 | Compound 17 | A | A | A | A |
| Example18 | Compound 18 | A | A | A | A |
| Reference Example19 | Compound 19 | A | A | A | A |
| Reference Example20 | Compound 20 | A | A | A | A |
| Reference Example21 | Compound 21 | A | A | A | A |
| Reference Example22 | Compound 22 | A | A | A | A |
| Reference Example23 | Compound 23 | A | A | A | A |
| Reference Example24 | Compound 24 | A | A | A | A |
| Reference Example25 | Compound 25 | A | A | A | A |

[Table 6]

| | Specific Colorant | Ink Composition | Recorded Material (Near Infrared Absorbing image) | | |
|---|---|---|---|---|---|
| | | Dispersibility | Invisibility | Light Fastness | Moist Heat Resistance |
| Reference Example26 | Compound 26 | A | A | A | A |
| Reference Example27 | Compound 27 | A | A | A | A |
| Reference Example28 | Compound 28 | A | A | A | A |
| Reference Example29 | Compound 29 | A | A | A | A |
| Reference Example30 | Compound 30 | A | A | A | A |
| Reference Example31 | Compound 31 | A | A | A | A |
| Reference Example32 | Compound 32 | A | A | A | A |
| Reference Example33 | Compound 33 | A | A | A | A |
| Reference Example34 | Compound 34 | A | A | A | A |
| Reference Example35 | Compound 35 | A | A | A | A |

(continued)

| | Specific Colorant | Ink Composition | Recorded Material (Near Infrared Absorbing image) | | |
|---|---|---|---|---|---|
| | | Dispersibility | Invisibility | Light Fastness | Moist Heat Resistance |
| Reference Example36 | Compound 36 | A | A | A | A |
| Reference Example37 | Compound 37 | A | A | A | A |
| Reference Example38 | Compound 38 | A | A | A | A |
| Reference Example39 | Compound 39 | A | A | A | A |
| Reference Example40 | Compound 40 | A | A | A | A |
| Reference Example41 | Compound 41 | A | A | A | A |
| Reference Example42 | Compound 42 | A | A | A | A |
| Reference Example43 | Compound 43 | A | A | A | A |
| Reference Example44 | Compound 44 | A | A | A | A |
| Reference Example45 | Compound 45 | A | A | A | A |
| Reference Example46 | Compound 46 | A | A | A | A |
| Reference Example47 | Compound 47 | A | A | A | A |
| Reference Example48 | Compound 48 | A | A | A | A |
| Reference Example49 | Compound 49 | A | A | A | A |
| Reference Example50 | Compound 50 | A | A | A | A |

[Table 7]

| | Specific Colorant | Ink Composition | Recorded Material (Near Infrared Absorbing image) | | |
|---|---|---|---|---|---|
| | | Dispersibility | Invisibility | Light Fastness | Moist Heat Resistance |
| Reference Example51 | Compound 51 | A | A | A | A |
| Reference Example52 | Compound 52 | A | A | A | A |
| Reference Example53 | Compound 53 | A | A | A | A |
| Reference Example54 | Compound 54 | A | A | A | A |
| Reference Example55 | Compound 55 | A | A | A | A |
| Reference Example56 | Compound 56 | A | A | A | A |
| Reference Example57 | Compound 57 | A | A | A | A |
| Reference Example58 | Compound 58 | A | A | A | A |
| Reference Example59 | Compound 59 | A | A | A | A |
| Reference Example60 | Compound 60 | A | A | A | A |
| Reference Example61 | Compound 61 | A | A | A | A |
| Reference Example62 | Compound 62 | A | A | A | A |
| Reference Example63 | Compound 63 | A | A | A | A |
| Reference Example64 | Compound 64 | A | A | A | A |
| Reference Example65 | Compound 65 | A | A | A | A |
| Reference Example66 | Compound 66 | A | A | A | A |
| Reference Example67 | Compound 67 | A | A | A | A |

(continued)

| | Specific Colorant | Ink Composition | Recorded Material (Near Infrared Absorbing image) | | |
|---|---|---|---|---|---|
| | | Dispersibility | Invisibility | Light Fastness | Moist Heat Resistance |
| Reference Example68 | Compound 68 | A | A | A | A |
| Reference Example69 | Compound 69 | A | A | A | A |
| Reference Example70 | Compound 70 | A | A | A | A |
| Reference Example71 | Compound 71 | A | A | A | A |
| Reference Example72 | Compound 72 | A | A | A | A |
| Reference Example73 | Compound 73 | A | A | A | A |
| Reference Example74 | Compound 74 | A | A | A | A |
| Reference Example75 | Compound 75 | A | A | A | A |

[Table 8]

| | Specific Colorant | Ink Composition | Recorded Material (Near Infrared Absorbing image) | | |
|---|---|---|---|---|---|
| | | Dispersibility | Invisibility | Light Fastness | Moist Heat Resistance |
| Reference Example76 | Compound 76 | A | A | A | A |
| Reference Example77 | Compound 77 | A | A | A | A |
| Reference Example78 | Compound 78 | A | A | A | A |
| Reference Example79 | Compound 79 | A | A | A | A |
| Reference Example80 | Compound 80 | A | A | A | A |
| Reference Example81 | Compound 81 | A | A | A | A |
| Reference Example82 | Compound 82 | A | A | A | A |
| Reference Example83 | Compound 83 | A | A | A | A |
| Reference Example84 | Compound 84 | A | A | A | A |
| Reference Example85 | Compound 85 | A | A | A | A |
| Reference Example86 | Compound 86 | A | A | A | A |
| Reference Example87 | Compound 87 | A | A | A | A |
| Reference Example88 | Compound 88 | A | A | A | A |
| Reference Example89 | Compound 89 | A | A | A | A |
| Reference Example90 | Compound 90 | A | A | A | A |
| Reference Example91 | Compound 91 | A | A | A | A |
| Reference Example92 | Compound 92 | A | A | A | A |
| Reference Example93 | Compound 93 | A | A | A | A |
| Reference Example94 | Compound 94 | A | A | A | A |
| Reference Example95 | Compound 95 | A | A | A | A |
| Reference Example96 | Compound 96 | A | A | A | A |
| Reference Example97 | Compound 97 | A | A | A | A |
| Reference Example98 | Compound 98 | A | A | A | A |

(continued)

| | Specific Colorant | Ink Composition | Recorded Material (Near Infrared Absorbing image) | | |
|---|---|---|---|---|---|
| | | Dispersibility | Invisibility | Light Fastness | Moist Heat Resistance |
| Reference Example99 | Compound 99 | A | A | A | A |
| Reference Example100 | Compound 100 | A | A | A | A |

[Table 9]

| | Specific Colorant | Ink Composition | Recorded Material (Near Infrared Absorbing image) | | |
|---|---|---|---|---|---|
| | | Dispersibility | Invisibility | Light Fastness | Moist Heat Resistance |
| Reference Example101 | Compound 101 | A | A | A | A |
| Reference Example102 | Compound 102 | A | A | A | A |
| Reference Example103 | Compound 103 | A | A | A | A |
| Reference Example104 | Compound 104 | A | A | A | A |
| Reference Example105 | Compound 105 | A | A | A | A |
| Reference Example106 | Compound 106 | A | A | A | A |
| Reference Example107 | Compound 107 | A | A | A | A |
| Reference Example108 | Compound 108 | A | A | A | A |
| Example109 | Compound 109 | A | A | A | A |
| Reference Example110 | Compound 110 | A | B | B | B |
| Reference Example111 | Compound 111 | A | A | B | C |
| Example112 | Compound 112 | A | A | A | A |
| Example113 | Compound 113 | A | A | A | A |
| Example114 | Compound 114 | A | A | A | A |
| Example115 | Compound 115 | A | A | A | A |
| Comparative Example1 | - | D | A | B | B |
| Comparative Example2 | - | D | D | C | C |
| Comparative Example3 | - | D | D | D | D |

It was found from the results of Tables 5 to 9 that, in the ink compositions (dispersions) according to Examples 1 to 18, 109, and 112 to 115 and Reference Examples 19 to 108, 110, and 111, the dispersibility of the specific colorant was excellent in all the three inks. In addition, the image in the recorded material as the dry material of each of the ink compositions according to Examples 1 to 18, 109, and 112 to 115 and Reference Examples 19 to 108, 110, and 111 was an image having absorption in the near infrared range, and invisibility was excellent. Further, it was verified that there was no problem in practice regarding the light fastness and moist heat resistance of the obtained image.

In the image obtained using the ink composition according to Comparative Example 1 including the colorant compound having a structure similar to Formula 1 and having absorption in the near infrared range, invisibility, light fastness, and moist heat resistance were excellent, but the colorant compound in which the counter cation was a lithium ion was included. Therefore, it can be seen that it was difficult to disperse the colorant as the ink composition.

<Preparation of Resin Kneaded Material>

(Example 116)

0.02 g of the compound 1 and 10 g of a polyethylene terephthalate resin (Tg: 60°C) were set to a twin screw kneader and were kneaded at 120°C at 200 rpm for 5 minutes to prepare a resin kneaded material (the dispersion according to the embodiment of the present invention).

In the absorption spectrum of the obtained resin kneaded material, the absorption maximum was 800 nm or higher, "Optical density at 450 nm/Optical density at Absorption Maximum" was 1/10 (0.1) or lower, and near infrared absorption properties and invisibility were excellent.

## Claims

1. A dispersion comprising a medium and compound represented by the following Formula 1,

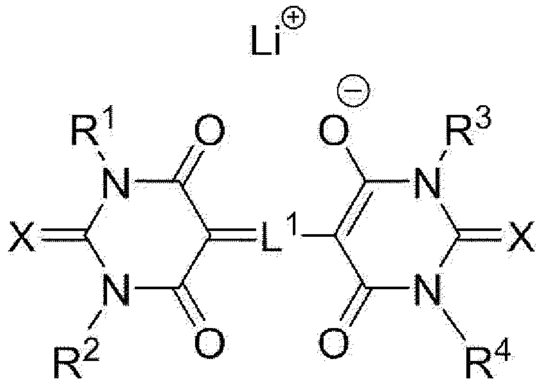

Formula 1

in Formula 1, $L^1$ represents a methine chain consisting of 5 or 7 methine groups,
a methine group at a center of the methine chain has a substituent represented by the following formula A-1:

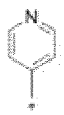

A-1

wherein * represents a binding site to the methine group at the center of the methine chain,

$R^1$, $R^2$, $R^3$, and $R^4$ each independently represent a hydrogen atom, a substituted or unsubstituted alkyl group, wherein the substituent that can be introduced into the alkyl group is selected from the group consisting of a halogen atom, an alkenyl group, an aryl group, a monovalent heterocyclic group, $-OR^{L3}$, $-C(=O)R^{L3}$, $-C(=O)OR^{L3}$, $-OC(=O)R^{L3}$, $-N(R^{L3})_2$, $-NHC(=O)R^{L3}$, $-C(=O)N(R^{L3})_2$, $-NHC(=O)OR^{L3}$, $-OC(=O)N(R^{L3})_2$, $-NHC(=O)N(R^{L3})_2$, $-SR^{L3}$, $-S(=O)_2R^{L3}$, $-S(=O)_2OR^{L3}$, $-NHS(=O)_2R^{L3}$, and-$S(=O)_2N(R^{L3})_2$, a substituted or unsubstituted aryl group, wherein the substituent that can be introduced into the aryl group is selected from the group consisting of an alkyl group, a halogen atom, an alkenyl group, an aryl group, a monovalent heterocyclic group, a nitro group, a cyano group, $-OR^{L3}$, $-C(=O)R^{L3}$, $-C(=O)OR^{L3}$, $-OC(=O)R^{L3}$, $-N(R^{L3})_2$, $-NHC(=O)R^{L3}$, $-C(=O)N(R^{L3})_2$, $-NHC(=O)OR^{L3}$, $-OC(=O)N(R^{L3})_2$, $-NHC(=O)N(R^{L3})_2$, $-SR^{L3}$, $-S(=O)_2R^{L3}$, $-S(=O)_2OR^{L3}$, $-NHS(=O)_2R^{L3}$, and-$S(=O)_2N(R^{L3})_2$, or a substituted or unsubstituted monovalent heterocyclic group, wherein the substituent that can be introduced into the monovalent heterocyclic group is selected from the group consisting of a hydrogen atom, an alkyl group, an alkenyl group, an aryl group, or a monovalent heterocyclic group, and preferably a hydrogen atom, an alkyl group, or an aryl group, and
X's each independently represent an oxygen atom, a sulfur atom, or a selenium atom,
wherein the methine chain may have a crosslinked structure at any position and opposite carbon atoms adjacent to the methine group may be crosslinked to form a ring structure, and
wherein the methine group other than the methine group at the center of the methine chain may be substituted or unsubstituted, and
wherein the medium includes a resin.

**2.** The dispersion according to claim 1,
wherein in Formula 1, at least one selected from the group consisting of $R^1$, $R^2$, $R^3$, and $R^4$ is a hydrogen atom.

**3.** The dispersion according to claim 1 or 2,
wherein the compound represented by Formula 1 is a compound represented by the following Formula 2,

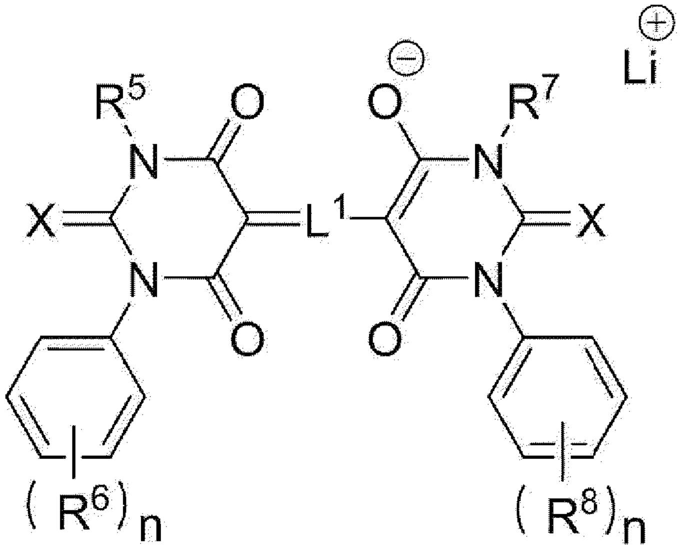

Formula 2

in Formula 2, $L^1$ represents a methine chain consisting of 5 or 7 methine groups,
a methine group at a center of the methine chain has a substituent represented by the following formula A-1:

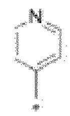

A-1

wherein * represents a binding site to the methine group at the center of the methine chain,

$R^5$ and $R^7$ each independently represent a hydrogen atom, an alkyl group, an aryl group, or a monovalent heterocyclic group,
$R^6$ and $R^8$ each independently represent an alkyl group, a halogen atom, an alkenyl group, an aryl group, a monovalent heterocyclic group, a nitro group, a cyano group, $-OR^{L3}$, $-C(=O)R^{L3}$, $-C(=O)OR^{L3}$, $-OC(=O)R^{L3}$, $-N(R^{L3})_2$, $-NHC(=O)R^{L3}$, $- C(=O)N(R^{L3})_2$, $-NHC(=O)OR^{L3}$, $-OC(=O)N(R^{L3})_2$, $-NHC(=O)N(R^{L3})_2$, $-SR^{L3}$, $-S(=O)_2R^{L3}$, $-S(=O)_2OR^{L3}$, $-NHS(=O)_2R^{L3}$, or$-S(=O)_2N(R^{L3})_2$,
$R^{L3}$'s each independently represent a hydrogen atom, an alkyl group, an alkenyl group, an aryl group, or a monovalent heterocyclic group,
n's each independently represent an integer of 1 to 5, and
X's each independently represent an oxygen atom, a sulfur atom, or a selenium atom,
wherein the methine chain may have a crosslinked structure at any position and opposite carbon atoms adjacent to the methine group may be crosslinked to form a ring structure, and
wherein the methine group other than the methine group at the center of the methine chain may be substituted or unsubstituted.

**4.** The dispersion according to claim 3,
wherein in Formula 2, at least one selected from the group consisting of $R^5$, $R^6$, $R^7$, and $R^8$ has a hydrogen-bonding group, wherein the hydrogen-bonding group is selected from the group consisting of -OH, -C(=O)OH, $-NHC(=O)R^{L3}$, $-C(=O)N(R^{L3})_2$, $-NHC(=O)OR^{L3}$, $-OC(=O)N(R^{L3})_2$, $-NHC(=O)N(R^{L3})_2$, $-NHS(=O)_2R^{L3}$, and $-S (=O)_2N(R^{L3})_2$.

**5.** The dispersion of any one of claims 1 to 4 further including water.

6. The dispersion according to claim 5, further including an organic solvent having a boiling point of 100°C or higher under 101.325 kPa.

7. The dispersion according to any one of claims 1 to 6, which is an ink composition.

8. The dispersion according to claim 7, which is an ink composition for ink jet recording.

9. An ink jet recording method comprising: a step of applying the dispersion according to any one of claims 1 to 8 to a substrate.

10. A recorded material comprising:

a substrate; and
a near infrared absorbing image that is a dry material of the dispersion according to claim 7 or 8 and is disposed on the substrate.

11. The recorded material according to claim 10, wherein the near infrared absorbing image disposed on the substrate has an absorption maximum in a range of 700 nm to 1,200 nm.

## Patentansprüche

1. Dispersion, die ein Medium und eine Verbindung, die durch die folgende Formel 1 dargestellt wird, umfasst,

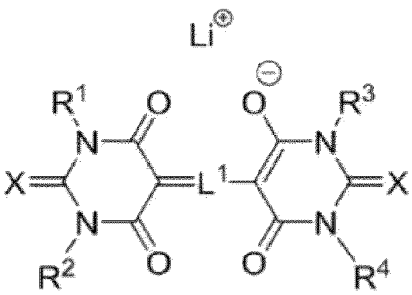

Formel 1

in Formel 1 $L^1$ stellt eine Methinkette dar, die aus 5 oder 7 Methingruppen besteht, eine Methingruppe an einer Mitte der Methinkette weist einen Substituenten auf, der durch die folgende Formel A-1 dargestellt wird:

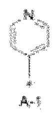

wobei * eine Bindungsstelle zu der Methingruppe an der Mitte der Methinkette darstellt, $R^1$, $R^2$, $R^3$ und $R^4$ jeweils unabhängig voneinander ein Wasserstoffatom, eine substituierte oder nicht substituierte Alkylgruppe darstellen, wobei der Substituent, der in die Alkylgruppe eingeführt werden kann, aus der Gruppe, die aus einem Halogenatom, einer Alkenylgruppe, einer Arylgruppe, einer monovalenten heterocyclischen Gruppe, $-OR^{L3}$, $-C(=O)R^{L3}$, $-C(=O)OR^{L3}$, $-OC(=O)R^{L3}$, $-N(R^{L3})_2$, $-NHC(=O)R^{L3}$, $-C(=O)N(R^{L3})_2$, $-NHC(=O)OR^{L3}$, $-OC(=O)N(R^{L3})_2$, $-NHC(=O)N(R^{L3})_2$, $-SR^{L3}$, $-S(=O)2R^{L3}$, $-S(=O)_2OR^{L3}$, $-NHS(=O)_2R^{L3}$ und $-S(=O)_2N(R^{L3})_2$ besteht, ausgewählt wird, eine substituierte oder nicht substituierte Arylgruppe, wobei der Substituent, der in die Arylgruppe eingeführt werden kann, aus der Gruppe, die aus einer Alkylgruppe, einem Halogenatom, einer Alkenylgruppe, einer Arylgruppe, einer monovalenten heterocyclischen Gruppe, einer Nitrogruppe, einer Cyanogruppe, $-OR^{L3}$, $-C(=O)R^{L3}$, $-C(=O)OR^{L3}$, $-OC(=O)R^{L3}$, $-N(R^{L3})_2$, $-NHC(=O)R^{L3}$, $-C(=O)N(R^{L3})_2$, $-NHC(=O)OR^{L3}$, $-OC(=O)N(R^{L3})_2$, $-NHC(=O)N(R^{L3})_2$, $-SR^{L3}$, $-S(=O)_2R^{L3}$, $-S(=O)_2OR^{L3}$, $-NHS(=O)_2R^{L3}$ und $-S(=O)_2N(R^{L3})_2$ besteht, ausgewählt wird, oder eine substituierte oder nicht substituierte monovalente heterocyclische Gruppe, wobei der Substituent, der in die monovalente heterocyclische Gruppe eingeführt werden kann, aus der Gruppe, die aus einem Wasserstoffatom, einer Alkylgruppe, einer Alkenylgruppe, einer Arylgruppe und einer monovalenten heterocyclischen Gruppe besteht, ausgewählt wird und bevorzugt ein Wasserstoffatom, eine Alkylgruppe oder eine Arylgruppe ist, und
X jeweils unabhängig voneinander ein Sauerstoffatom, ein Schwefelatom oder ein Selenatom darstellen,
wobei die Methinkette eine vernetzte Struktur an einer beliebigen Position aufweisen kann und gegenüberliegende Kohlenstoffatome, die zu der Methingruppe benachbart sind, so vernetzt sein können, dass sie eine Ringstruktur bilden, und
wobei die Methingruppe, die von der Methingruppe an der Mitte der Methinkette verschieden ist, substituiert oder nicht substituiert sein kann, und
wobei das Medium ein Harz umfasst.

**2.** Dispersion nach Anspruch 1,
wobei in Formel 1 mindestens eines, das aus der Gruppe, die aus $R^1$, $R^2$, $R^3$ und $R^4$ besteht, ausgewählt wird, ein Wasserstoffatom ist.

**3.** Dispersion nach Anspruch 1 oder 2,
wobei die Verbindung, die durch Formel 1 dargestellt wird, eine Verbindung ist, die durch Formel 2 dargestellt wird,

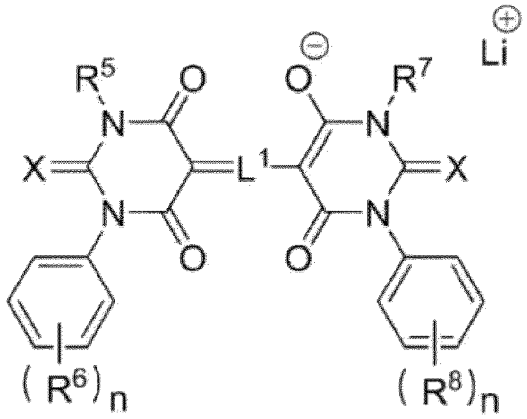

Formel 2

in Formel 2 $L^1$ eine Methinkette darstellt, die aus 5 oder 7 Methingruppen besteht,
eine Methingruppe an einer Mitte der Methinkette weist einen Substituenten auf, der durch die folgende Formel A-1 dargestellt wird:

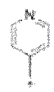

A-1

wobei * eine Bindungsstelle zu der Methingruppe an der Mitte der Methinkette darstellt,
$R^5$ und $R^7$ jeweils unabhängig voneinander ein Wasserstoffatom, eine Alkylgruppe, eine Arylgruppe oder eine monovalente heterocyclische Gruppe darstellen,
$R^6$ und $R^8$ jeweils unabhängig voneinander eine Alkylgruppe, ein Halogenatom, eine Alkenylgruppe, eine Arylgruppe, eine monovalente heterocyclische Gruppe, eine Nitrogruppe, eine Cyanogruppe, $-OR^{L3}$, $-C(=O)R^{L3}$, $-C(=O)OR^{L3}$, $-OC(=O)R^{L3}$, $-N(R^{L3})_2$, $-NHC(=O)R^{L3}$, $-C(=O)N(R^{L3})_2$, $-NHC(=O)OR^{L3}$, $-OC(=O)N(R^{L3})_2$, $-NHC(=O)N(R^{L3})_2$, $-SR^{L3}$, $-S(=O)_2R^{L3}$, $-S(=O)_2OR^{L3}$, $-NHS(=O)_2R^{L3}$ oder $-S(=O)_2N(R^{L3})_2$ darstellen,
$R^{L3}$ jeweils unabhängig voneinander ein Wasserstoffatom, eine Alkylgruppe, eine Alkenylgruppe, eine Arylgruppe oder eine monovalente heterocyclische Gruppe darstellen,
n jeweils unabhängig voneinander eine ganze Zahl von 1 bis 5 darstellen, und X jeweils unabhängig voneinander ein Sauerstoffatom, ein Schwefelatom oder ein Selenatom darstellen,
wobei die Methinkette eine vernetzte Struktur an einer beliebigen Position aufweisen kann und gegenüberliegende Kohlenstoffatome, die zu der Methingruppe benachbart sind, so vernetzt sein können, dass sie eine Ringstruktur bilden, und
wobei die Methingruppe, die von der Methingruppe an der Mitte der Methinkette verschieden ist, substituiert

oder nicht substituiert sein kann.

4. Dispersion nach Anspruch 3,
wobei in Formel 2 mindestens eines, das aus der Gruppe, die aus $R^5$, $R^6$, $R^7$ und $R^8$ besteht, ausgewählt wird, eine Wasserstoffbindungsgruppe aufweist, wobei die Wasserstoffbindungsgruppe aus der Gruppe, die aus -OH, -C(=O)OH, -NHC(=O)$R^{L3}$, - C(=O)N($R^{L3}$)$_2$, -NHC(=O)O$R^{L3}$, -OC(=O)N($R^{L3}$)$_2$, -NHC(=O)N($R^{L3}$)$_2$, -NHS(=O)$_2$$R^{L3}$ und -S(=O)$_2$N($R^{L3}$)$_2$ besteht, ausgewählt wird.

5. Dispersion nach einem der Ansprüche 1 bis 4, die ferner Wasser umfasst.

6. Dispersion nach Anspruch 5,
ferner ein organisches Lösungsmittel mit einem Siedepunkt von 100 °C oder höher unter 101,325 kPa umfasst.

7. Dispersion nach einem der Ansprüche 1 bis 6, die eine Tintenzusammensetzung ist.

8. Dispersion nach Anspruch 7, die eine Tintenzusammensetzung für Tintenstrahlaufzeichnung ist.

9. Tintenstrahl-Aufzeichnungsverfahren, umfassend:
einen Schritt des Aufbringens der Dispersion nach einem der Ansprüche 1 bis 8 auf ein Substrat.

10. Aufgezeichnetes Material, umfassend:

ein Substrat; und
ein Nahinfrarot absorbierendes Bild, das ein Trockenmaterial der Dispersion nach Anspruch 7 oder 8 ist und auf dem Substrat angeordnet ist.

11. Aufgezeichnetes Material nach Anspruch 10, wobei das Nahinfrarot absorbierende Bild, das auf dem Substrat angeordnet ist, ein Absorptionsmaximum in einem Bereich von 700 nm bis 1.200 nm aufweist.

**Revendications**

1. Dispersion comprenant un support et un composé représenté par la Formule suivante 1,

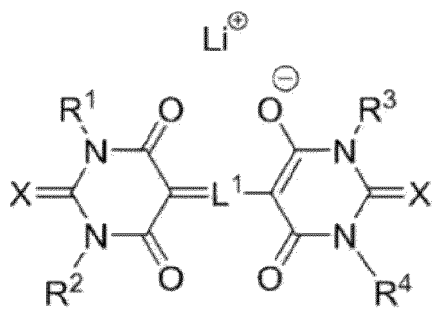

Formule 1

dans Formule 1, $L^1$ représente une chaîne de méthine constituée de 5 ou 7 groupes de méthine,
un groupe méthine à un centre de la chaîne de méthine a un substituant représenté par la formule suivante A-1 :

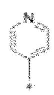

A-1

dans laquelle * représente un site de liaison au groupe méthine au centre de la chaîne de méthine,
$R^1$, $R^2$, $R^3$, et $R^4$ représentent chacun indépendamment un atome d'hydrogène, un groupe alkyle substitué ou non substitué, dans lequel le substituant qui peut être introduit dans le groupe alkyle est choisi dans le groupe constitué d'un atome d'halogène, d'un groupe alcényle, d'un groupe aryle, d'un groupe hétérocyclique monovalent, -O$R^{L3}$, -C(=O)$R^{L3}$, -C(=O)O$R^{L3}$, -OC(=O)$R^{L3}$, -N($R^{L3}$)$_2$, -NHC(=O)$R^{L3}$, - C(=O)N($R^{L3}$)$_2$,

-NHC(=O)OR$^{L3}$, -OC(=O)N(R$^{L3}$)$_2$, -NHC(=O)N(R$^{L3}$)$_2$, -SR$^{L3}$, - S(=O)2R$^{L3}$, -S(=O)$_2$OR$^{L3}$, -NHS(=O)$_2$R$^{L3}$ et-S(=O)$_2$N(R$^{L3}$)$_2$, un groupe aryle substitué ou non substitué, dans lequel le substituant qui peut être introduit dans le groupe aryle est choisi dans le groupe constitué d'un groupe alkyle, d'un atome d'halogène, d'un groupe alcényle, d'un groupe aryle, d'un groupe hétérocyclique monovalent, d'un groupe nitro, d'un groupe cyano, -OR$^{L3}$, -C(=O)R$^{L3}$, -C(=O)OR$^{L3}$, -OC(=O)R$^{L3}$, - N(R$^{L3}$)$_2$, -NHC(=O)R$^{L3}$, -C(=O)N(R$^{L3}$)$_2$, -NHC(=O)OR$^{L3}$, -OC(=O)N(R$^{L3}$)$_2$, - NHC(=O)N(R$^{L3}$)$_2$, -SR$^{L3}$, -S(=O)$_2$R$^{L3}$, -S(=O)$_2$OR$^{L3}$, -NHS(=O)$_2$R$^{L3}$, et-S(=O)$_2$N(R$^{L3}$)$_2$ ou un groupe hétérocyclique monovalent substitué ou non substitué, dans lequel le substituant qui peut être introduit dans le groupe hétérocyclique monovalent est choisi dans le groupe constitué d'un atome d'hydrogène, d'un groupe alkyle, d'un groupe alcényle, d'un groupe aryle ou d'un groupe hétérocyclique monovalent et est de préférence un atome d'hydrogène, un groupe alkyle ou un groupe aryle, et

des X représentent chacun indépendamment un atome d'oxygène, un atome de soufre ou un atome de sélénium,

dans laquelle la chaîne de méthine peut avoir une structure réticulée à n'importe quelle position et des atomes de carbone opposés adjacents au groupe méthine peuvent être réticulés pour former une structure cyclique, et

dans laquelle le groupe méthine autre que le groupe méthine au centre de la chaîne de méthine peut être substitué ou non substitué, et

dans laquelle le support inclut une résine.

2. Dispersion selon la revendication 1,
dans laquelle dans Formule 1, au moins l'un sélectionné parmi le groupe constitué de $R^1$, $R^2$, $R^3$ et $R^4$ est un atome d'hydrogène.

3. Dispersion selon la revendication 1 ou la revendication 2,
dans laquelle le composé représenté par Formule 1 est un composé représenté par la Formule suivante 2,

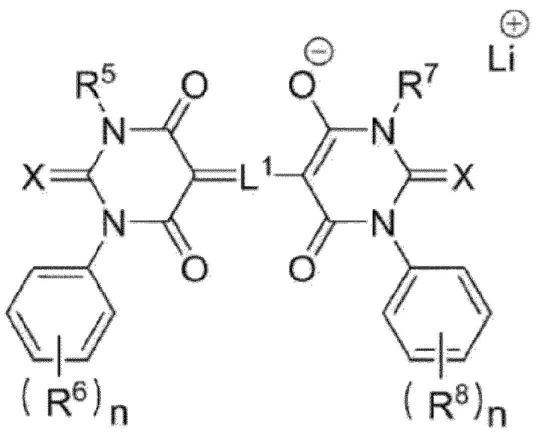

Formule 2

dans Formule 2, $L^1$ représente une chaîne de méthine constituée de 5 ou 7 groupes de méthine,
un groupe méthine à un centre de la chaîne de méthine a un substituant représenté par la formule suivante A-1 :

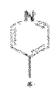

A-1

dans laquelle * représente un site de liaison au groupe méthine au centre de la chaîne de méthine,

$R^5$ et $R^7$ représentent chacun indépendamment un atome d'hydrogène, un groupe alkyle, un groupe aryle ou un groupe hétérocyclique monovalent,

$R^6$ et $R^8$ représentent chacun indépendamment un groupe alkyle, un atome d'halogène, un groupe alcényle, un groupe aryle, un groupe hétérocyclique monovalent, un groupe nitro, un groupe cyano, -OR$^{L3}$, -C(=O)R$^{L3}$, -C(=O)OR$^{L3}$, -OC(=O)R$^{L3}$, -N(R$^{L3}$)$_2$, - NHC(=O)R$^{L3}$, -C(=O)N(R$^{L3}$)$_2$, -NHC(=O)OR$^{L3}$, -OC(=O)N(R$^{L3}$)$_2$, -NHC(=O)N(R$^{L3}$)$_2$, - SR$^{L3}$, -S(=O)$_2$R$^{L3}$, -S(=O)$_2$OR$^{L3}$, -NHS(=O)$_2$R$^{L3}$ ou -S(=O)$_2$N(R$^{L3}$)$_2$,

des R$^{L3}$ représentent chacun indépendamment un atome d'hydrogène, un groupe alkyle, un groupe

alcényle, un groupe aryle ou un groupe hétérocyclique monovalent,
des n représentent chacun indépendamment un entier de 1 à 5, et
des X représentent chacun indépendamment un atome d'oxygène, un atome de soufre ou un atome de sélénium,
dans laquelle la chaîne de méthine peut avoir une structure réticulée à n'importe quelle position et des atomes de carbone opposés adjacents au groupe méthine peuvent être réticulés pour former une structure cyclique, et
dans laquelle le groupe méthine autre que le groupe méthine au centre de la chaîne de méthine peut être substitué ou non substitué.

**4.** Dispersion selon la revendication 3,
dans laquelle dans la formule 2, au moins l'un sélectionné parmi le groupe constitué de $R^5$, $R^6$, $R^7$ et $R^8$ a un groupe de liaison hydrogène, dans laquelle le groupe de liaison hydrogène est sélectionné parmi le groupe constitué de -OH, -C(=O)OH, - NHC(=O)$R^{L3}$, -C(=O)N($R^{L3}$)$_2$, -NHC(=O)O$R^{L3}$, -OC(=O)N($R^{L3}$)$_2$, -NHC(=O)N($R^{L3}$)$_2$, - NHS(=O)$_2$$R^{L3}$ et -S(=O)$_2$N($R^{L3}$)$_2$.

**5.** Dispersion selon l'une quelconque des revendications 1 à 4 comprenant en outre de l'eau.

**6.** Dispersion selon la revendication 5,
comprenant en outre un solvant organique ayant un point d'ébullition de 100 °C ou plus sous 101,325 kPa.

**7.** Dispersion selon l'une quelconque des revendications 1 à 6, qui est une composition d'encre.

**8.** Dispersion selon la revendication 7, qui est une composition d'encre pour l'enregistrement par jet d'encre.

**9.** Procédé d'enregistrement à jet d'encre comprenant :
une étape d'application de la dispersion selon l'une quelconque des revendications 1 à 8 à un substrat.

**10.** Matériau enregistré comprenant :

un substrat ; et
une image absorbant de l'infrarouge proche qui est un matériau sec de la dispersion selon la revendication 7 ou la revendication 8 et est disposée sur le substrat.

**11.** Matériau enregistré selon la revendication 10, dans lequel l'image absorbant de l'infrarouge proche disposée sur le substrat a un maximum d'absorption dans une plage de 700 nm à 1 200 nm.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008144004 A
- JP 2013159765 A
- JP 2002240433 A
- US 2002046680 A1
- WO 2018034347 A1
- JP 2002020648 A
- JP 5148436 A
- JP H5148436 A
- JP 5295312 A
- JP H5295312 A
- JP 7097541 A
- JP H7097541 A
- JP 7082515 A
- JP H7082515 A
- JP 7118584 A
- JP H7118584 A
- JP 11286637 A
- JP H11286637 A
- JP 63059936 A
- JP 54059936 A
- JP 2003306623 A
- JP 2002294107 A
- JP 11282136 A
- JP H11282136 A


### Non-patent literature cited in the description


- **F. M. HARMER**. Heterocyclic Compounds Cyanine Dyes and Related Compounds. John Wiley&Sons, 1964
- **ROBERT F. FEDORS**. *POLYMER ENGINEERING AND SCIENCE*, 1974, vol. 14 (2), 151-153
- *Photographic Science and Engineering*, 1974, vol. 18 (323-335)